(19) Europäisches Patentamt
European Patent Office
Office européen des brevets

(11) EP 3 421 546 A1

(12) # EUROPEAN PATENT APPLICATION
published in accordance with Art. 153(4) EPC

(43) Date of publication:
**02.01.2019 Bulletin 2019/01**

(21) Application number: **17756646.0**

(22) Date of filing: **24.02.2017**

(51) Int Cl.:
***C09B 31/057*** *(2006.01)* ***C09B 29/01*** *(2006.01)*
***G02B 5/30*** *(2006.01)*

(86) International application number:
**PCT/JP2017/007127**

(87) International publication number:
**WO 2017/146212 (31.08.2017 Gazette 2017/35)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **26.02.2016 JP 2016035930**
**30.09.2016 JP 2016193164**
**30.09.2016 JP 2016193165**
**30.09.2016 JP 2016193166**
**30.09.2016 JP 2016193167**
**30.09.2016 JP 2016193168**
**30.09.2016 JP 2016193169**
**30.09.2016 JP 2016193170**
**30.09.2016 JP 2016193171**

(71) Applicants:
- **Nippon Kayaku Kabushiki Kaisha**
  **Tokyo 100-0005 (JP)**
- **Polatechno Co., Ltd.**
  **Joetsu-shi, Niigata 944-0101 (JP)**

(72) Inventors:
- **HIGETA Takahiro**
  **Tokyo 115-8588 (JP)**
- **NAKAMURA Mitsunori**
  **Tokyo 115-8588 (JP)**
- **HATTORI Yu**
  **Tokyo 115-8588 (JP)**
- **MOCHIZUKI Noriaki**
  **Tokyo 115-8588 (JP)**

(74) Representative: **Gille Hrabal**
**Brucknerstrasse 20**
**40593 Düsseldorf (DE)**

(54) **AZO COMPOUND OR SALT THEREOF, AND POLARIZING FILM CONTAINING SAME**

(57) The purpose of the present invention is to provide: a high performance dye-based polarizing film and dye-based polarizing plate, in particular a neutral gray high performance dye-based film and dye-based polarizing plate, having excellent polarizing performance and moisture resistance, heat resistance and light resistance; and an azo compound or a salt thereof able to produce same. The present invention provides an azo compound represented by formula (1) or a salt thereof.

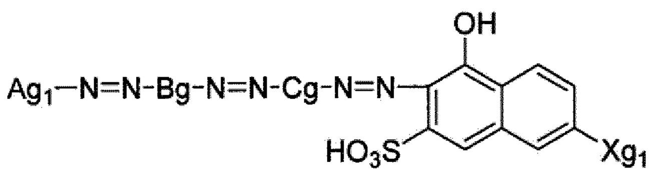

(1)

EP 3 421 546 A1

**Description**

Technical Field

The present invention relates to novel azo compound or a salt thereof and a polarizing film containing the same and others.

Background Art

A polarizing film (a polarizing element) is generally produced by adsorption and alignment of a dichroic pigment, i.e., iodine, or a dichroic dye on a polyvinyl alcohol resin film. A polarizing plate which is obtained by bonding a protective film made of triacetylcellulose, etc. on the polarizing film with an adhesive layer interposed between them is used in liquid crystal display devices, etc. The polarizing plate using iodine as a dichroic pigment is called an iodine-based polarizing plate. In contrast, the polarizing plate using a dichroic dye, for example, an azo compound having dichroism, as a dichroic pigment, is called a dye-based polarizing plate. Of these polarizing plates, the dye-based polarizing plate has high heat resistance, high moist-heat durability and high stability, and characteristically has a high color selectivity based on blending of pigments; whereas, the dye-based polarizing plate had problems such as low transmittance and low contrast, compared to the iodine-based polarizing plate having the same polarization degree. Because of this, it has been desired to develop a polarizing film having high durability and a wide variety of color selectivity; and additionally having a higher transmittance and higher polarization characteristics than ever.

A polarizing plate having light transmission/shielding function is a basic component of a display device such as a liquid crystal display (LCD) along with a liquid crystal having a switching function of light. The range of application of LCD ranges from small appliances such as calculators and clocks in the early period to laptop computers, word processors, LCD projectors, LCD televisions, car navigations, indoor/outdoor information display devices and measuring devices. A polarizing plate can be also applied to lenses having a polarization function and sunglasses improved in a visibility, and recently finds use in polarized glasses for 3D TV, etc. Furthermore, a polarizing plate is applied to information terminals familiar with the public, such as wearable terminals and put into practical use. Likewise, a polarizing plate finds use in a wide variety of ranges and is used in a wide variety of conditions from low temperature to high temperature, low humidity to high humidity and low light amount to high light amount. Because of this, a polarizing plate having not only a high polarization performance but also excellent durability has been required.

Nowadays, a polarizing film is produced by staining the polarizing-film base material, (such as a film made of a polyvinyl alcohol or a derivative thereof and aligned by stretching, or a polyene film, which is produced by removing hydrochloric acid from a polyvinyl chloride film or removing water from a polyvinyl alcohol based film, and then aligned) with a dichroic pigment such as iodine or a dichroic dye or produced by adsorption of a dichroic pigment such as iodine or a dichroic dye on the polarizing-film base material. Of these polarizing films, an iodine-based polarizing film using iodine as dichroic pigment is excellent in polarization performance but poor in moisture resistance and heat-resistance. Because of this, when the iodine-based polarizing film is used in high temperature/high humidity conditions for a long time, it has a problem in durability. As a method for improving durability, e.g., treating the film with an aqueous solution containing formalin or boric acid and using a low-moisture permeability polymer film as a protective film are considered; however, the effects of these methods are not entirely sufficient. In contrast, a dye-based polarizing film using a dichroic dye as the dichroic pigment is excellent in moisture resistance and heat resistance, compared to an iodine-based polarizing film; however, the polarization performance thereof is generally insufficient.

As the dye to be used in producing a dye-based polarizing film, water-soluble azo compounds described, for example, in Patent Document 1 to Patent Document 5 are known.

In the case of a polarizing film of a neutral color (hereinafter referred to also as "neutral gray") obtained by adsorption and alignment of several types of dichroic dyes on a polymer film, when two of the polarizing films are stacked such that the orientation directions are crossed at right angles (orthogonal arrangement), if there is light leakage (color leakage) of a specific wavelength in a visible-light wavelength region, the color phase of a liquid crystal display obtained by installing such a polarizing film in a liquid crystal panel sometimes changes in a dark state. Then, in order to prevent a color change of a liquid crystal display in a dark state due to color leakage of a specific wavelength when a polarizing film is installed in a liquid crystal display device, the transmittance in the orthogonal arrangement (orthogonal transmittance) in the visible-light wavelength region must be controlled to be uniformly low in the neutral-gray polarizing film in which several types of dichroic dyes are adsorbed and aligned on a polymer film.

Until recently, in order to display images clearer, images have been displayed by increasing brightness of a liquid crystal display. For hybrid cars and outdoor display devices, etc. (for example, industrial instruments and wearable terminals) having such a display installed therein, extending a battery life comes to be required. Because of this, in order to reduce power consumption of a liquid crystal display, in other words, to increase image clarity even if the brightness of the display is reduced, it has been necessary to develop a polarizing plate (hereinafter referred to also as "neutral-gray polarizing plate") excellent in polarization performance and providing a neutral-gray color phase. In the case of in-car liquid crystal displays, since the environment of a car during summer is high in temperature and humid, it is necessary to develop a polarizing plate whose polarization degree does not change. In the past, an iodine-based polarizing plate having satisfactory polarization performance and exhibiting neutral gray was used in in-car liquid crystal displays. However, the iodine-based polarizing plate, since iodine is a dichroic pigment, has a problem in that light resistance, heat resistance and moist-heat resistance thereof are not sufficient, as previously described. To overcome this problem, a neutral-gray polarizing plate using dyestuff, i.e., a dichroic dye, as a polarizer, comes to be used. The neutral-gray polarizing plate usually employs three primary color pigments in combination in order to uniformly improve transmittance and polarization performance in the entire visible-light wavelength region. Then, it was necessary to develop a dichroic dye having satisfactory polarization performance with respect to three primary colors.

The bright line of a light source differs in every liquid crystal display. Then, in developing a dichroic dye having satisfactory polarization performance, it is particularly important to design the wavelength of a pigment corresponding to the bright line. Because of this, it is necessary that each of three primary color pigments has a wide absorption width (half width) and excellent polarization performance such that each can control light in a limited wavelength region without fail.

Even if a dye-based polarizing plate has a great many choices in color, polarizing films so far produced had a problem: at the time of exhibiting white (hereinafter referred to also as the "white display time" or "light-color display time") by stacking two polarizing films such that the absorption axes thereof are mutually in parallel (hereinafter referred to as a "parallel arrangement"), white tinted with yellow is exhibited. In order to overcome (improve) the problem of white tinted with yellow, a polarizing film was produced by suppressing a yellow tint; however, even such a polarizing film so far produced had a problem: at the time of exhibiting black (hereinafter referred to also as the "black display time" or "dark-color display time") by stacking two polarizing films such that the absorption axes thereof are mutually in orthogonal (hereinafter referred to as "orthogonal arrangement"), blue is exhibited in place of black. In the circumstance, it was necessary to develop a polarizing plate exhibiting achromatic white at the white display time, and black at the block display time. In particular, it was difficult to obtain a polarizing plate exhibiting high-definition white, commonly called a "paper white", in the white display time.

For a polarizing plate to exhibit an achromatic color, it is necessary that transmittance values in the parallel arrangement and orthogonal arrangement are almost equal independently of the wavelength; however, such a polarizing plate has not yet been obtained. The reason why the color phase differs between the white display time and the black display time is that the dependency of transmittance on the wavelength in the parallel arrangement is not the same as that in the orthogonal arrangement, in particular, transmittance throughout the visible light region is not equal. Furthermore, dichroism is not the same throughout the visible light region. This is also a reason why it is difficult to realize an achromatic polarizing plate.

To describe by taking an iodine-based polarizing plate as an example, an iodine-based polarizing plate using polyvinyl alcohol (hereinafter referred to also as "PVA") as a base material and iodine as a dichroic pigment generally absorbs light around 480 nm and 600 nm in wavelength. It is said that absorption of light of 480 nm is due to a complex of polyiodine $I_3$- and PVA; whereas absorption of light of 600 nm is due to a complex of polyiodine $I_5$- and PVA. With respect to the polarization degree (dichroism) at each wavelength, the polarization degree (dichroism) based on the polyiodine $I_5$-PVA complex is higher than that of the polyiodine $I_3$-PVA complex. More specifically, when the transmittance in the orthogonal arrangement is set to be equal in individual wavelengths, the transmittance in the parallel arrangement at 600 nm is higher than that at 480 nm, with the result that a phenomenon where white is tinted with yellow in the white display time, occurs. Conversely, when the transmittance in the parallel arrangement is set to be equal, the transmittance in the orthogonal arrangement at 600 nm is lower than that at 480 nm, with the result that blue is exhibited in place of black in the black display time. The case where white is tinted with yellow in the white display time is not preferable since impression of deterioration is usually given to the user. Also, the case where blue is leaked in the black display time, non-distinctive black is exhibited, with the result that impression of high quality is not given to the user. In the iodine-based polarizing plate, there is no complex based on a wavelength mainly near 550 nm where luminosity factor is high. Because of this, it is difficult to control a color phase. As described above, since polarization degrees (dichroism) at individual wavelengths are not equal, dependency of polarization degree on the wavelength was produced. Since only two dichroic pigments, which exhibit absorption by an iodine-PVA complex at 480 nm and 600 nm, are present, a color phase of the iodine-based polarizing plate formed of iodine and PVA was not successfully controlled.

A method for improving a color phase of an iodine-based polarizing plate is described in Patent Document 6 or 7. In Patent Document 6, a neutral coefficient is calculated and a polarizing plate having an absolute value thereof of 0 to 3 is described. Patent Document 7 describes a polarizing film, in which a transmittance value at 410 nm to 750 nm is set to fall within the range of the average value ± 30 %, and color is controlled by adding a direct dye, a reactive dye or an acid dye in addition to iodine.

Also, an achromatic dye-based polarizing plate is developed (for example, Patent Document 8).

## Prior Art Documents

### Patent Document

Patent Document 1: JP 2622748 B
Patent Document 2: JP 2001-33627 A
Patent Document 3: JP 5366947 B
Patent Document 4: JP 2003-327858 A
Patent Document 5: JP H3-12606 A
Patent Document 6: JP 4281261 B
Patent Document 7: JP 3357803 B
Patent Document 8: WO 2014/162635 A1
Patent Document 9: JP 2003-215338 A1
Patent Document 10: JP H9-302250 A
Patent Document 11: JP 3881175 B
Patent Document 12: JP H2-61988 B
Patent Document 13: JP H11-218611 A
Patent Document 14: JP 4162334 B
Patent Document 15: JP 4360100 B

### Non Patent Document

Non Patent Document 1: Senryo Kagaku (Dye Chemistry); Yutaka Hosoda, 1957, page 621.
Non Patent Document 2: Kinosei Shikiso no Oyo (Functional Dye Application), supervised by Masahiro Irie, CMC Publishing Co., Ltd., First Edition, pages 98 to 100.

## Summary of Invention

### Technical Problem

An object of the present invention is to provide a novel azo compound or a salt thereof, and in particular, a high performance dye-based polarizing film and dye-based polarizing plate having excellent polarization performance and moisture resistance/heat resistance/light resistance, and especially, a neutral-gray high-performance dye-based polarizing film and dye-based polarizing plate, and provide an azo compound or a salt thereof enabling production of the same.

The polarizing plate of Patent Document 6, as is apparent from Examples, even if a neutral coefficient (Np) is low, exhibits yellow green in the white display time, in view of the color phase in the parallel arrangement obtained from JIS Z 8729, i.e., a* value: -2 to -1 and b* value: 2.5 to 4.0. In the orthogonal arrangement, the color phase, a* value is 0 to 1; however b* value is -1.5 to -4.0. From this, it was found that the polarizing plate exhibits blue in the black display time.

The polarizing film of Patent Document 7 is obtained by setting a value and b value in the UCS color space measured by using only a single polarizing film, to be 2 or less (absolute value) and did not exhibit an achromatic color in both color phases: i.e., the white display time and the black display time, when measured by using two polarizing films stacked. The average value of the single-plate transmittance through a polarizing film of Patent Document 7 was as low as 31.95% in Example 1 and 31.41% in Example 2. Because of low transmittance, the polarizing film in Patent Document 7 did not indicate sufficient performance in the fields requiring high transmittance and high contrast, particularly, in the fields of liquid crystal display devices and organic electroluminescence, etc. Furthermore, the polarizing film of Patent Document 7 employs iodine as a main dichroic pigment. Because of this, the polarizing film shows a significant color change after a durability test, particularly, a wet-heat durability test (environment: for example, 85°C, relative humidity 85%), indicating that durability is low.

In contrast, a dye-based polarizing plate is excellent in durability; however wavelength dependency differs between the parallel arrangement and the orthogonal arrangement, similarly to the iodine-based polarizing plate. An azo compound having dichroism and exhibiting a same color phase both in the parallel arrangement and the orthogonal arrangement is virtually not exist, and even if such an azo compound exists, dichroism (polarization characteristics) of the compound is poor. Some types of azo compounds having dichroism exhibit yellow in place of white in the white display time and blue in place of black in the black display time. Likewise, there is an azo compound having completely different wavelength dependency between the orthogonal arrangement and the parallel arrangement. In addition, the sensitivity of the user to a color differs depending on light-dark conditions. When the color of a dye-based polarizing

plate is corrected, color correction must be properly performed in accordance with light-dark conditions produced by controlling polarization from the orthogonal arrangement to the parallel arrangement. An achromatic color polarizing plate cannot be obtained as long as the transmittance value of light of any wavelength is almost equal in each of the parallel arrangement and orthogonal arrangement and has no dependency on the wavelength. To obtain a polarizing film having high transmittance and high contrast, it is necessary to satisfy the conditions where transmittance is equal both in the parallel arrangement and the orthogonal arrangement and the polarization degrees (dichroic ratio) at individual wavelengths are high and equal. Even if a single type of azo compound is used in a polarizing film, the dependency of transmittance on the wavelength differs between the parallel arrangement and the orthogonal arrangement. Despite the fact, in order to achieve an equal transmittance by blending at least two types of azo compounds, the relationship between dichroic ratios of the at least two types of azo compounds must be precisely controlled in consideration of transmittances in the parallel arrangement and the orthogonal arrangement per azo compound.

Even if the transmittance can be controlled to be an equal value in each of the arrangements by precisely controlling transmittances in the parallel arrangement and the orthogonal arrangement and the relationship between dichroic ratios, obtaining high transmittance and high contrast have not yet been achieved. To describe more specifically, as the transmittance or polarization degree increases, it becomes difficult to obtain an achromatic color; in other words, a polarizing plate having a high transmittance or a high polarization degree and exhibiting an achromatic color has not yet been obtained. It is extremely difficult to obtain an achromatic polarizing plate having high transmittance and/or high contrast. Just employing dichroic pigments of three primary colors is not enough to achieve such an achromatic polarizing pate. Particularly, in the parallel arrangement, it is extremely difficult to realize equal transmittance and high dichroism, at the same time. High-definition white cannot be exhibited if it is slightly contaminated with a color. In particular, white in a light state, is critical since not only brightness but also sensitivity is high. In short, it is required to develop a polarizing film which exhibits an achromatic white like high-quality paper, in the white display time and an achromatic black in the black display time and simultaneously has a single-plate transmittance of 35% or more and a high polarization degree. A polarizing plate exhibiting an achromatic color in the white display time and in the black display time is described in Patent Document 8; however a further improvement in performance is desired.

To reiterate, an object of the present invention is to provide a novel polarizing film, particularly, a high performance achromatic polarizing film having a high transmittance and a high polarization degree, exhibiting an achromatic color both in the white display time and in the black display time, and exhibiting high-definition white particularly in the white display time; and provide an achromatic polarizing plate and a liquid crystal display device using the polarizing film.

Solution to Problem

The present inventors conducted intensive studies with a view to achieving the object. As a result, they found that a polarizing film and a polarizing plate containing a specific azo compound or a salt thereof have excellent polarization performance and moisture resistance/heat resistance/light resistance and a wide absorption band extremely useful for realizing a neutral gray color phase.

They also found that a polarizing film having wavelength-independent dichroism, exhibiting an achromatic color in the parallel arrangement and orthogonal arrangement and having a higher polarization degree than ever can be obtained by blending a specific azo compound. The present inventors, for the first time, found that a polarizing film having wavelength-independent dichroism in the visible light region can be obtained even if it has high transmittance. Based on the finding, they developed a polarizing film having a higher polarization degree which enables high-definition white, like high-quality paper, commonly-called paper white.

More specifically, the present invention relates to the following [Invention 1] to [Invention 36].

The present invention has a plurality of alternative descriptions, and all combinations of the alternative descriptions are disclosed in the specification as the present invention.

[Invention 1]

An azo compound represented by formula (1) or a salt thereof:

[formula 1]

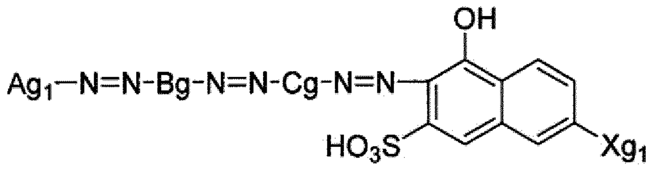

(1)

wherein $Ag_1$ represents a phenyl group which may have a substituent or a naphthyl group having a substituent; Bg and Cg are each independently represented by formula (BC-N) or formula (BC-P), both or either one represents formula (BC-N); and $Xg_1$ represents an amino group which may have a substituent, a phenylamino group which may have a substituent, a benzoylamino group which may have a substituent, a naphthotriazole which may have a substituent or a phenylazo group which may have a substituent;

[formula 2]

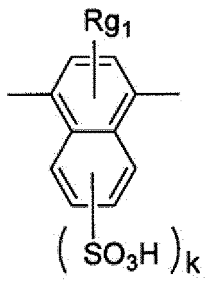

(BC-N)

wherein $Rg_1$ represents a hydrogen atom, a $C_{1-5}$ alkyl group, a $C_{1-5}$ alkoxy group or a $C_{1-5}$ alkoxy group having a sulfo group; and k represents an integer of 0 to 2;

[formula 3]

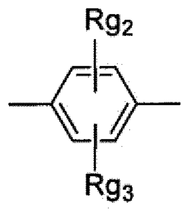

(BC-P)

wherein $Rg_2$ and $Rg_3$ each independently represent a hydrogen atom, a $C_{1-5}$ alkyl group, a $C_{1-5}$ alkoxy group or a $C_{1-5}$ alkoxy group having a sulfo group.

[Invention 2]

The azo compound or a salt thereof according to Invention 1, wherein Cg is represented by formula (BC-N).

[Invention 3]

The azo compound or a salt thereof according to Invention 1, wherein one of Bg and Cg is represented by formula (BC-N) and the other is represented by formula (BC-P).

[Invention 4]

The azo compound or a salt thereof according to Invention 1, wherein Bg and Cg are each independently represented by formula (BC-N).

[Invention 5]

The azo compound or a salt thereof according to any one of Inventions 1 to 4, wherein k is 1 or 2.

[Invention 6]

The azo compound or a salt thereof according to Invention 5, wherein k is 1.

[Invention 7]

The azo compound or a salt thereof according to any one of Inventions 1 to 6, wherein $Rg_1$ to $Rg_3$ each independently represent (when Bg and Cg are both represented by formula (BC-N), $Rg_1$ each independently represent) a hydrogen atom, a $C_{1-5}$ alkyl group or a $C_{1-5}$ alkoxy group.

[Invention 8]

The azo compound or a salt thereof according to any one of Inventions 1 to 7, wherein $Xg_1$ is a phenylamino group represented by formula (X-PAM):

[formula 4]

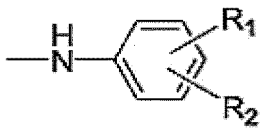

(X-PAM)

wherein $R_1$ and $R_2$ each independently represent a hydrogen atom, a methyl group, a methoxy group, a sulfo group, an amino group or a substituted amino group.

[Invention 9]

The azo compound or a salt thereof according to any one of Inventions 1 to 7, wherein $Xg_1$ is a benzoylamino group represented by formula (X-B):

[formula 5]

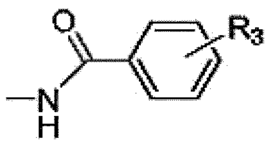

(X-B)

wherein $R_3$ represents a hydrogen atom, a hydroxy group, an amino group or a substituted amino group.

[Invention 10]

The azo compound or a salt thereof according to any one of Inventions 1 to 7, wherein $Xg_1$ is a naphthotriazole group represented by formula (X-N):

[formula 6]

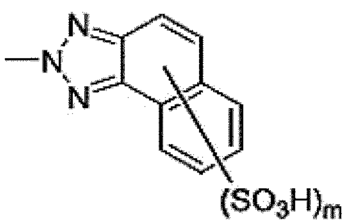

(X-N)

wherein m represents 1 or 2.

[Invention 11]

The azo compound or a salt thereof according to any one of Inventions 1 to 7, wherein $Xg_1$ is a phenylazo group represented by formula (X-PAZ):

[formula 7]

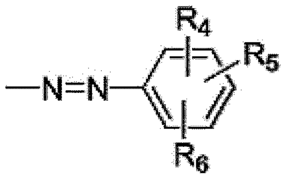

(X-PAZ)

wherein $R_4$ to $R_6$ each independently represent a hydrogen atom, a hydroxy group, a $C_{1-5}$ alkyl group, a $C_{1-5}$ alkoxy group, a carboxy group, an amino group or a substituted amino group.

[Invention 12]

The azo compound or a salt thereof according to any one of Inventions 1 to 11, wherein $Ag_1$ is represented by formula (A-P):

[formula 8]

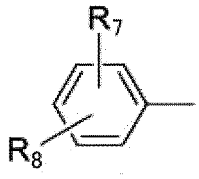

(A-P)

wherein $R_7$ and $R_8$ each independently represent a hydrogen atom, a sulfo group, a carboxy group, a $C_{1-5}$ alkyl group, a $C_{1-5}$ alkoxy group, an amino group, a substituted amino group or a $C_{1-5}$ alkoxy group having a sulfo group.

[Invention 13]

The azo compound or a salt thereof according to Invention 12, wherein one of $R_7$ and $R_8$ is a sulfo group, a $C_{1-5}$ alkoxy group having a sulfo group, or a carboxy group, and the other represents a hydrogen atom, a sulfo group, a carboxy group, a methyl group, a methoxy group or an alkoxy group having a sulfo group.

[Invention 14]

The azo compound or a salt thereof according to Invention 12, wherein Bg and Cg are each independently represented by formula (BC-N) where k = 1; and satisfy the following i) or ii):

i) in (A-P), one of $R_7$ and $R_8$ represents a hydrogen atom and the other represents a hydrogen atom, a carboxy group, a $C_{1-5}$ alkyl group, a $C_{1-5}$ alkoxy group, an amino group, a substituted amino group or a $C_{1-5}$ alkoxy group having a sulfo group;
ii) in (A-P), $R_7$ and $R_8$ each independently represent a sulfo group, a carboxy group, a $C_{1-5}$ alkyl group, a $C_{1-5}$ alkoxy group, an amino group, a substituted amino group or a $C_{1-5}$ alkoxy group having a sulfo group.

[Invention 15]

The azo compound or a salt thereof according to any one of Inventions 1 to 11, wherein $Ag_1$ is represented by formula (A-N):

[formula 9]

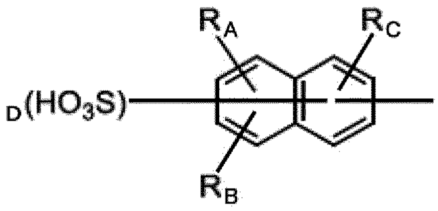

(A-N)

wherein $R_A$, $R_B$ and $R_C$ each independently represent a hydrogen atom, a hydroxy group, a sulfo group or a $C_{1-5}$ alkoxy group having a sulfo group; and D represents 0, 1 or 2.

[Invention 16]

The azo compound or a salt thereof according to any one of Inventions 1 to 11, wherein $Ag_1$ represented by formula (A-N1):

[formula 10]

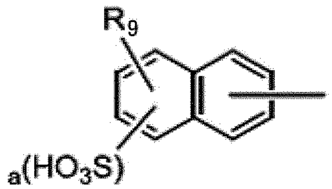

(A-N1)

wherein $R_9$ represents a hydrogen atom or a hydroxy group; and a represents 1 or 2.

[Invention 17]

The azo compound or a salt thereof according to any one of Inventions 1 to 11, wherein $Ag_1$ is represented by formula (A-N2):

[formula 11]

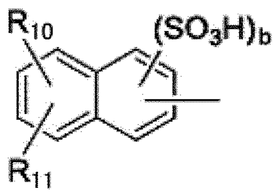

(A-N2)

wherein $R_{10}$ and $R_{11}$ each independently represent a hydrogen atom, a hydroxy group or a sulfo group; and b represents 1 or 2.

[Invention 18]

The azo compound or a salt thereof according to Invention 16 or 17, wherein $R_9$ to $R_{11}$ are hydrogen atoms.

[Invention 19]

The azo compound or a salt thereof according to any one of Inventions 1 to 11, wherein $Ag_1$ is represented by formula (A-N3):

[formula 12]

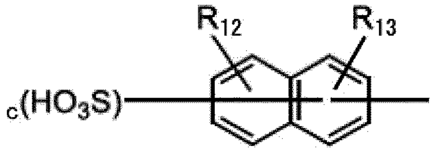

(A-N3)

wherein c represents 0, 1 or 2; $R_{12}$ and $R_{13}$ are each independently a hydrogen atom and the other is a sulfoalkoxy group: $HO_3S-(CH_2)_d-O-$; and d represents 3 or 4.

[Invention 20]

The azo compound or a salt thereof according to Invention 19, wherein $R_{12}$ is a sulfoalkoxy group: $HO_3S-(CH_2)_d-O-$.

[Invention 21]

The azo compound or a salt thereof according to Invention 19 or 20, wherein d is 3.

[Invention 22]

A polarizing film comprising the azo compound or a salt thereof according to any one of Inventions 1 to 21 and a polarizing-film base material.

[Invention 23]

The polarizing film according to Invention 22, comprising at least one type of organic dye other than the azo compound or a salt thereof according to any one of Inventions 1 to 21.

[Invention 24]

The polarizing film according to Invention 22 or 23, comprising at least two types of azo compounds or salts thereof according to any one of Inventions 1 to 21.

[Invention 25]

The polarizing film according to any one of Inventions 22 to 24, further comprising an azo compound represented by formula (2) or a salt thereof:

[formula 13]

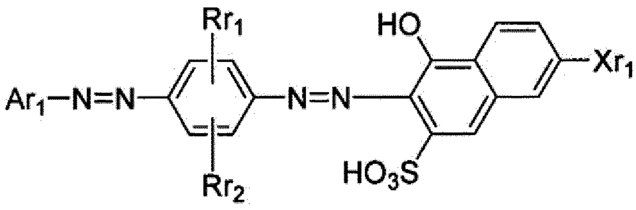

(2)

wherein $Ar_1$ represents a phenyl group or a naphthyl group having a substituent; $Rr_1$ and $Rr_2$ each independently represent a hydrogen atom, a $C_{1-5}$ alkyl group, a $C_{1-5}$ alkoxy group or a $C_{1-5}$ alkoxy group having a sulfo group; $Xr_1$ represents an amino group which may have a substituent, a phenylamino group which may have a substituent, a phenylazo group which may have a substituent or a benzoylamino group which may have a substituent.

[Invention 26]

The polarizing film according to any one of Inventions 22 to 25, comprising an azo compound represented by formula (3) or a salt thereof:

[formula 14]

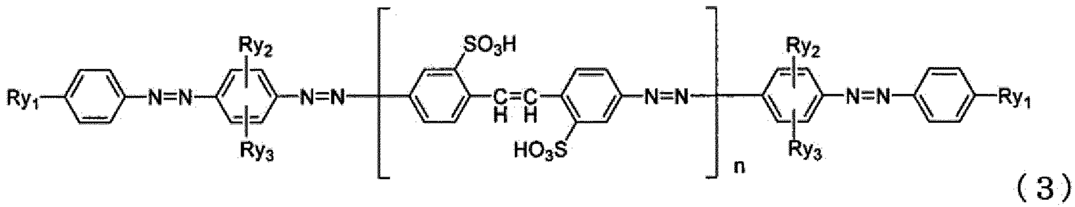

(3)

wherein $Ry_1$ represents a sulfo group, a carboxy group, a lower alkyl group, a lower alkoxy group or a hydroxy group; $Ry_2$ and $Ry_3$ each independently represent a hydrogen atom, a sulfo group, a $C_{1-5}$ alkyl group, a $C_{1-5}$ alkoxy group or a $C_{1-5}$ alkoxy group having a sulfo group; and n represents an integer of 1 to 3.

[Invention 27]

The polarizing film according to any one of Inventions 22 to 26, wherein an absolute value of a difference between an average transmittance of 420 nm to 480 nm and an average transmittance of 520 nm to 590 nm, which are obtained through measurement in the state where two of the polarizing films are stacked such that absorption axes thereof are mutually in parallel, is 2.5% or less; and an absolute value of a difference between an average transmittance of 520 nm to 590 nm and an average transmittance of 600 nm to 640 nm is 2.0% or less.

[Invention 28]

The polarizing film according to any one of Inventions 22 to 27, wherein absolute values of a* value and b* value obtained by measuring transmittance of natural light in accordance with JIS Z 8781-4:2013 are
both 1.0 or less in the case of the polarizing film by itself, and
both 2.0 or less in the state where two of the polarizing films are stacked such that absorption axes thereof are mutually in parallel.

[Invention 29]

The polarizing film according to any one of Inventions 22 to 28, wherein
the polarizing film has a single-plate transmittance of 35% to 65%; and
an average transmittance of 520 nm to 590 nm obtained in the state where two of the polarizing films are stacked such that absorption axes thereof are mutually in parallel is 25% to 50%.

[Invention 30]

The polarizing film according to any one of Inventions 22 to 29, wherein, with respect to transmittance obtained in the state where two of the polarizing films are stacked such that absorption axes thereof are mutually in orthogonal, an absolute value of a difference between an average transmittance of 420 nm to 480 nm and an average transmittance of 520 nm to 590 nm is 0.3% or less; and an absolute value of a difference between an average transmittance of 520 nm to 590 nm and an average transmittance of 600 nm to 640 nm is 0.6% or less.

[Invention 31]

The polarizing film according to any one of Inventions 22 to 30, wherein absolute values of a* value and b* value, which are obtained by measuring transmittance of natural light in accordance with JIS Z 8781-4:2013 in the state where two of the polarizing films are stacked such that absorption axes thereof are mutually in orthogonal, are 2.0 or less.

[Invention 32]

The polarizing film according to any one of Inventions 22 to 31, wherein the polarizing-film base material is a film formed of a polyvinyl alcohol resin or a derivative thereof.

[Invention 33]

A polarizing plate obtained by bonding a transparent protective layer to one or both surfaces of the polarizing film according to any one of Inventions 22 to 32.

[Invention 34]

A display device comprising the polarizing film according to any one of Inventions 22 to 32 or the polarizing plate according to Invention 33.

[Invention 35]

An in-car display device or an outdoor display device comprising the polarizing film according to any one of Inventions 22 to 32 or the polarizing plate according to Invention 33.

[Invention 36]

A product comprising the polarizing film according to any one of Inventions 22 to 32 or the polarizing plate according to Invention 33, wherein the product is a smart window, an organic electroluminescence (common name, OLED), a lens, a filter or a pair of glasses.

## Advantageous Effects of Invention

The present invention can provide a high-performance dye-based polarizing film and dye-based polarizing plate having excellent polarization performance and moisture resistance/heat resistance/light resistance, and particularly, a neutral-gray high-performance dye-based film and dye-based polarizing plate and an azo compound or a salt thereof enabling production of such a film and plate.

Also, the present invention can provide a high-performance achromatic polarizing film having a high transmittance and a high polarization degree, exhibiting an achromatic color both in the white display time and in the black display time, in particular, high-definition white in the white display time, and provide an achromatic polarizing plate and various products (e.g., liquid crystal displays, display devices such as organic electroluminescence (common name OLED) devices, lenses, filters and glasses) using the polarizing film.

## Description of Embodiments

<Azo compound or a salt thereof>

An azo compound of the present invention is represented by formula (1):

[formula 15]

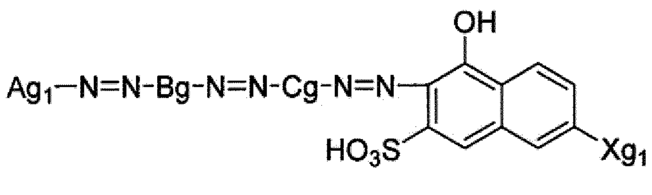

(1)

Bg and Cg are each independently represented by formula (BC-N) or formula (BC-P), both or either one of Bg and Cg is represented by formula (BC-N).

[formula 16]

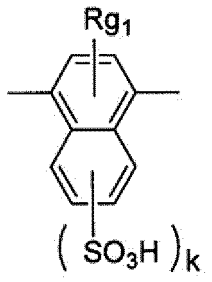

(BC-N)

[formula 17]

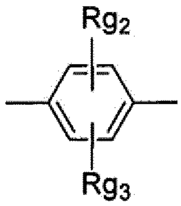

(BC-P)

In an embodiment of the present invention, Cg is represented by formula (BC-N).

In an embodiment of the present invention, one of Bg and Cg is represented by formula (BC-N) and the other is represented by formula (BC-P).

In an embodiment of the present invention, Bg and Cg are each independently represented by formula (BC-N).

In formula (BC-N), k is 0 to 2. In an embodiment of the present invention, k is 1 or 2. In another embodiment of the present invention, k is 1.

$Rg_1$ to $Rg_3$ each independently represent (when Bg and Cg are both represented by formula (BC-N), $Rg_1$ each independently represent) a hydrogen atom, a hydroxy group, a lower alkyl group, a lower alkoxy group or a lower alkoxy group having a sulfo group.

$Rg_1$ is preferably a hydrogen atom, a lower alkyl group or a lower alkoxy group, more preferably a hydrogen atom, a methyl group or a methoxy group and particularly preferably a hydrogen atom or a methoxy group. As the lower alkoxy group having a sulfo group, a linear alkoxy is preferable. The substitution position by a sulfo group is preferably an end of the alkoxy group, more preferably a 3-sulfopropoxy group and a 4-sulfobutoxy group and particularly preferably a 3-sulfopropoxy group.

In the claims and specification of the present application, the term "lower" of the lower alkyl and lower alkoxy, means that the number of carbon atoms is 1 to 5 ($C_{1-5}$), preferably 1 to 4 ($C_{1-4}$), and more preferably 1 to 3 ($C_{1-3}$).

In formula (BC-N), the substitution position by $Rg_1$ is preferably the 2-position or 3-positon relative to an azo group near a naphthol group having $Xg_1$, and more preferably the 2-position. If a sulfo group ($-SO_3H$) is present, the substitution position by a sulfo group is preferably the 5-positon, 6-position, 7-position and 8-position relative to an azo group near a naphthol group having $Xg_1$, more preferably the 6-position or 7-position and particularly preferably the 7-position.

In formula (BC-P), $Rg_2$ and $Rg_3$ each independently represent preferably a hydrogen atom, a lower alkyl group, a lower alkoxy group or a lower alkoxy group having a sulfo group, and more preferably, a hydrogen atom, a methyl group, an ethyl group, a methoxy group, an ethoxy group or a lower alkoxy group having a sulfo group. The lower alkoxy group having a sulfo group is preferably a linear alkoxy an end of which is substituted with a sulfo group, more preferably a 3-sulfopropoxy group, or a 4-sulfobutoxy group. $Rg_2$ and $Rg_3$ are particularly preferably a hydrogen atom, a methyl group, a methoxy group, a 3-sulfopropoxy group or a 4-sulfopropoxy group. As the substitution positions by $Rg_2$ and $Rg_3$, the 2-position alone relative to an azo group near a naphthol group having $Xg_1$, the 5-position alone, a combination of the 2-position and 5-position, 3-position and 5-position, the 2-position and 6-position or 3-position and 6-position can be used. Preferably, the 2-position alone, 5-position alone, and the 2-position and 5-position can be used. Note that the 2-position alone and 5-position alone mean that one of $Rg_2$ and $Rg_3$ is a substituent except a hydrogen atom and binds to the 2-position or 5-position alone, and the other is a hydrogen atom.

In formula (1), $Xg_1$ represents an amino group which may have a substituent, a phenylamino group which may have a substituent, a benzoylamino group which may have a substituent, a naphthotriazole group which may have a substituent or a phenylazo group which may have a substituent. The phrase "which may have a substituent" herein

means that a case where no substituent is present is included. For example, "a phenylamino group which may have a substituent" includes a phenylamino group by itself having no substituent and a phenylamino group having a substituent.

When $Xg_1$ is an amino group which may have a substituent, an amino group having an alkyl group of 1 to 5 carbon atoms, which may have a hydroxy group, a carboxy group or a sulfo group is preferable.

When $Xg_1$ is a benzoylamino group having a substituent, a phenylamino group having a substituent or a phenylazo group having a substituent, the substituent is preferably a hydrogen atom, a lower alkyl group, a lower alkoxy group, a hydroxy group, a carboxy group, a sulfo group, an amino group or a substituted amino group. When $Xg_1$ is a naphthotriazole group having a substituent, the substituent is preferably a sulfo group.

In the claims and specification of the present application, the "substituted amino group" refers to an amino group having an alkyl group of 1 to 5 carbon atoms which may have a substituent such as a hydroxy group, a carboxy group or a sulfo group, except an amino group having a cyclic structure such as a phenylamino group.

When $Xg_1$ is a phenylamino group which may have a substituent, the phenylamino group is preferably represented by formula (X-PAM):

[formula 18]

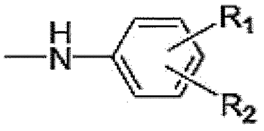

(X-PAM)

In formula (X-PAM), $R_1$ and $R_2$ each independently represent a hydrogen atom, a methyl group, a methoxy group, a sulfo group, an amino group or a substituted amino group and preferably a hydrogen atom, a methyl group, a methoxy group or an amino group. The substitution positions by $R_1$ and $R_2$ are not particularly limited and at least one of $R_1$ and $R_2$ is preferably at the p-position relative to the amino group. Examples of the phenylamino group represented by formula (X-PAM) include a phenylamino group, a 4-methylphenylamino group, a 4-methoxyphenylamino group, a 4-aminophenylamino group, a 4-amino-2-sulfophenylamino group, a 4-amino-3-sulfophenylamino group, a 4-sulfo methylaminophenylamino group and a 4-carboxyethylaminophenylamino group.

When $Xg_1$ is a benzoylamino group which may have a substituent, the benzoylamino group is preferably represented by formula (X-B):

[formula 19]

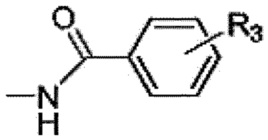

(X-B)

In formula (X-B), $R_3$ is a hydrogen atom, a hydroxy group, an amino group or a substituted amino group, and preferably a hydrogen atom, an amino group or a substituted amino group. The substitution position by $R_3$ is not particularly limited; however, the p-position is preferable. Examples of the benzoylamino group represented by formula (X-B) include a benzoylamino group, a 4-aminobenzoylamino group, a 4-hydroxybenzoylamino group and a 4-carboxy ethyl aminobenzoylamino group.

When $Xg_1$ is a naphthotriazole group having a substituent, the naphthotriazole group is preferably represented by formula (X-N):

[formula 20]

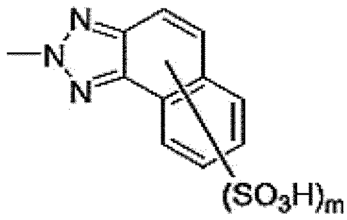

(X-N)

In formula (X-N), m represents 1 or 2 and preferably 2. Examples of the naphthotriazole group represented by formula (X-N) include a 6,8-disulfonaphthotriazole group, a 7,9-disulfonaphthotriazole group, a 7-sulfonaphthotriazole group and a 5-sulfonaphthotriazole group.

When $Xg_1$ is a phenylazo group having a substituent, the phenylazo group is preferably represented by formula (X-PAZ):

[formula 21]

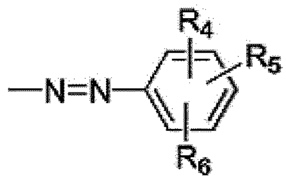

(X-PAZ)

In formula (X-PAZ), $R_4$ to $R_6$ each independently represent a hydrogen atom, a hydroxy group, a lower alkyl group, a lower alkoxy group, a carboxy group, an amino group or a substituted amino group, preferably a hydroxy group, a methyl group, a methoxy group, a carboxy group, an amino group or a substituted amino group, and more preferably a hydroxy group. The phenylazo group represented by formula (X-PAZ) preferably has a single substituent and preferably one of $R_4$ to $R_6$ is a hydroxy group, an amino group or a substituted amino group; whereas the rest is a hydrogen atom.

Examples of the phenylazo group represented by formula (X-PAZ) include a 2-methylphenylazo group, a 3-methylphenylazo group, a 2,5-dimethylphenylazo group, a 3-methoxyphenylazo group, a 2-methoxy-5-methylphenylazo group, a 2,5-dimethoxyphenylazo group, a 4-aminophenylazo group, a 4-hydroxyphenylazo group and a 4-carboxyethyl aminophenylazo group. A 4-aminophenylazo group, a 4-hydroxyphenylazo group or a 4-carboxyethylaminophenylazo group is preferable.

In formula (1), $Ag_1$ represents a phenyl group which may have a substituent or a naphthyl group having a substituent.

If $Ag_1$ is a phenyl group, it is preferable to have at least one sulfo group or carboxy group as a substituent thereof. If the phenyl group has two substituents or more, preferably, at least one of the substituents is a sulfo group or a carboxy group and the other substituent is a sulfo group, a carboxy group, a lower alkyl group, a lower alkoxy group, a lower alkoxy group having a sulfo group, a nitro group, an amino group, an acetylamino group or a lower alkylamino group. The other substituent is, more preferably, a sulfo group, a methyl group, an ethyl group, a methoxy group, an ethoxy group, a carboxy group, a nitro group or an amino group and particularly preferably a sulfo group, a methyl group, a methoxy group, an ethoxy group or a carboxy group. As the lower alkoxy group having a sulfo group, a linear alkoxy is preferable. The substitution position by a sulfo group is preferably an end of an alkoxy group, more preferably a 3-sulfopropoxy group and a 4-sulfobutoxy group and particularly preferably a 3-sulfopropoxy group. The number of substituents of a phenyl group is preferably 1 or 2. The substitution position is not particularly limited; however, the 2-position alone, the 4-position alone, a combination of the 2-position and 4-position and a combination of the 3-position and 5-position are preferable.

If $Ag_1$ is a phenyl group, preferably, $Ag_1$ is represented by formula (A-P):

[formula 22]

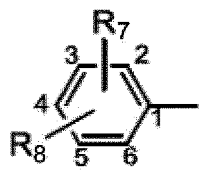

(A-P)

In formula (A-P), $R_7$ and $R_8$ each independently represent a hydrogen atom, a sulfo group, carboxy group, a lower alkyl group, a lower alkoxy group, an amino group, a substituted amino group or a lower alkoxy group having a sulfo group. The lower alkoxy group having a sulfo group is preferably a linear alkoxy group an end of which is substituted with a sulfo group, and more preferably a 4-sulfopropoxy group or a 4-sulfobutoxy group. Preferably, one of $R_7$ and $R_8$ is a sulfo group, an alkoxy group of 1 to 5 carbon atoms having a sulfo group or a carboxy group and the other is a hydrogen atom, a sulfo group, a carboxy group, a methyl group, a methoxy group or a lower alkoxy group having a sulfo group. The substitution positions by $R_7$ and $R_8$ are not particularly limited; however, a combination of the 2-position and the 4-position, a combination of the 2-position and 5-position or a combination of the 3-position and 5-position are preferable and a combination of the 2-position and 4-position is particularly preferable.

The case where Bg and Cg are each independently represented by formula (BC-N) and k = 1, and satisfies the following i) or ii) is preferable

i) in (A-P), one of $R_7$ and $R_8$ represents a hydrogen atom and the other represents a hydrogen atom, a carboxy group, a $C_{1-5}$ alkyl group, a $C_{1-5}$ alkoxy group, an amino group, a substituted amino group or a $C_{1-5}$ alkoxy group having a sulfo group; or

ii) in (A-P), $R_7$ and $R_8$ each independently represent a sulfo group, a carboxy group, a $C_{1-5}$ alkyl group, a $C_{1-5}$ alkoxy group, an amino group, a substituted amino group or a $C_{1-5}$ alkoxy group having a sulfo group.

This is because the azo compound or a salt thereof is further improved in performance.

If $Ag_1$ is a naphthyl group, a substituent thereof preferably has at least one sulfo group. If two or more substituents are present, at least one of the substituents is preferably a sulfo group and the other substituent(s) is a sulfo group, a hydroxy group, a carboxy group or a lower alkoxy group having a sulfo group. As the lower alkoxy group having a sulfo group, a linear alkoxy is preferable. The substitution position by a sulfo group is preferably an end of an alkoxy group, more preferably, a 3-sulfopropoxy group and a 4-sulfobutoxy group, and particularly preferably a 3-sulfopropoxy group.

In an embodiment of the present invention, if the number of sulfo groups is 2, a combination of 5,7-positions and a combination of 6,8-positions are preferable as the positions of the sulfo groups on a naphthyl group and a combination of 6,8-positions is more preferable. If the number of sulfo groups on a naphthyl group is 3, a combination of 3, 6, 8-positions is particularly preferable as the substitution positions by the sulfo groups. The preferable substituents and the positions of substituents will be more specifically described.

In an embodiment of the present invention, $Ag_1$ is represented by formula (A-N):

[formula 23]

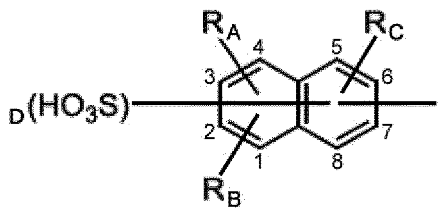

(A-N)

In formula (A-N), $R_A$, $R_B$ and $R_C$ each independently represent a hydrogen atom, a hydroxy group, a sulfo group or a lower alkoxy group having a sulfo group; and D represents 1 or 2. As the lower alkoxy group having a sulfo group, a linear alkoxy group an end of which is substituted with a sulfo group, is preferable, and more preferably a 3-sulfopropoxy group or a 4-sulfobutoxy group.

A sulfo group may be substituted at any one of the 1 to 8-positions, and preferably at the 2-position, 4-position, 5-position, 7-position, 1,3-positions, 2,4-positions, 2,7-positions, 2,8-positions, 4,8-positions or 5,7-positions.

In formula (A-N), the substitution position by -N=N-bond is preferably the 6-position, 7-position or 8-position.

In an embodiment of the present invention, $Ag_1$ is represented by formula (A-N1):

[formula 24]

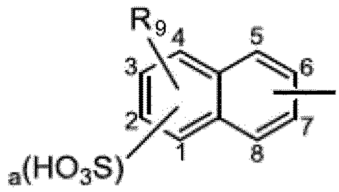

(A-N1)

In formula (A-N1), $R_9$ represents a hydrogen atom or a hydroxy group; and a represents 1 or 2. The substitution position by a sulfo group is preferably either one or two of the 2-position and 4-position, and more preferably the 2-position, 4-position, 1,3-position or 2,4-position.

In formula (A-N1), the substitution position by -N=N-bond is preferably the 5-position, 6-position or 7-position, and more preferably the 6-position or 7-position.

In an embodiment of the present invention, $Ag_1$ is represented by formula (A-N2):

[formula 25]

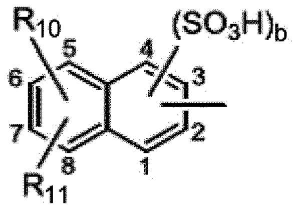

(A-N2)

In formula (A-N2), $R_{10}$ and $R_{11}$ each independently represent hydrogen, a hydroxy group or a sulfo group; and b represents 1 or 2. If one of $R_{10}$ and $R_{11}$ is a sulfo group, the other is preferably a hydrogen atom or a hydroxy group. The positions of $R_{10}$ and $R_{11}$ are not particularly limited; however, the 5-position, 6-position and 7-position are preferable.

The substitution position by -N=N-bond is preferably the 1-position, 2-position or 3-position, and more preferably the 1-position or 2-position.

In an embodiment of the present invention, the substitution position by $(SO_3H)_b$ is preferably either one or both of the 2-position and 4-position.

In an embodiment of the present invention, b represent 1; and $R_{10}$ or $R_{11}$ represents a sulfo group. The substitution position by a sulfo group is preferably 1,5-positions or 1,6-positions.

In an embodiment of the present invention, $Ag_1$ is represented by formula (A-N3):

[formula 26]

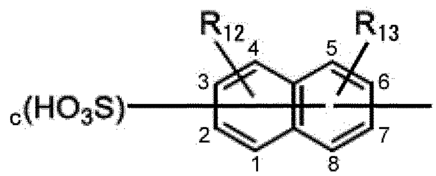

(A-N3)

In formula (A-N3), c represents 0, 1 or 2 and preferably 1; $R_{12}$ and $R_{13}$ are each independently a hydrogen atom and the other represents a sulfoalkoxy group: $HO_3S-(CH_2)_d-O-$; and d represents 3 or 4 and preferably 3. The substitution position by a lower alkoxy group having a sulfo group is preferably either one of the 2-position and 4-position and, particularly preferably the 4-position. A sulfo group may be substituted at any one of the 1 to 8-positions, preferably any one or two of the 2-position, 4-position and 7-position, more preferably the 2-position, 4-position or 2,7-positions, and particularly preferably the 2-position. The lower alkoxy group having a sulfo group is preferably a linear alkoxy group an end of which is substituted with a sulfo group, and more preferably a 3-sulfopropoxy group or a 4-sulfobutoxy group.

In formula (A-N3), the substitution position by -N=N-bond is preferably the 6-position, 7-position or 8-position, and more preferably, the 6-position or 7-position.

Now, examples of an azo compound represented by formula (1) will be described below. Note that, in the formulas, a sulfo group, a carboxy group and a hydroxy group will be shown in the form of a free acid.

[formula 27]

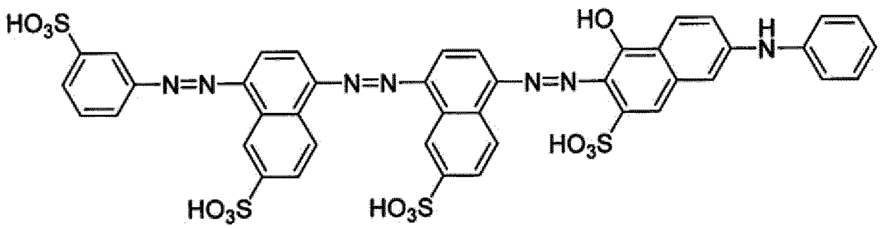

(1-A1)

[formula 28]

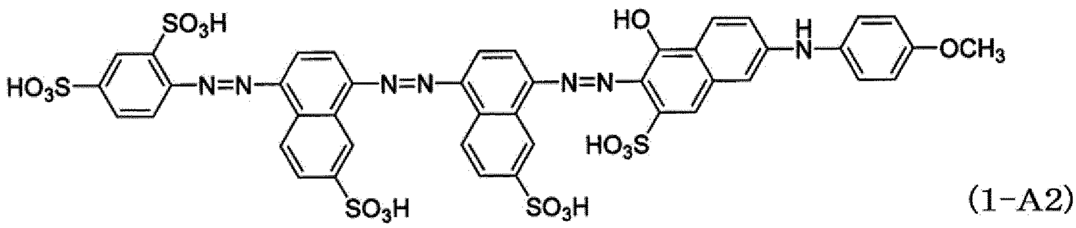

(1-A2)

[formula 29]

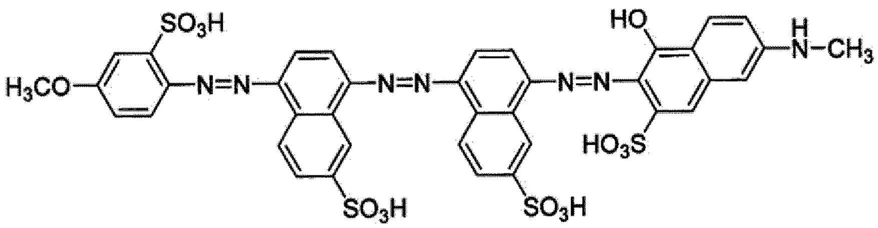

(1-A3)

[formula 30]

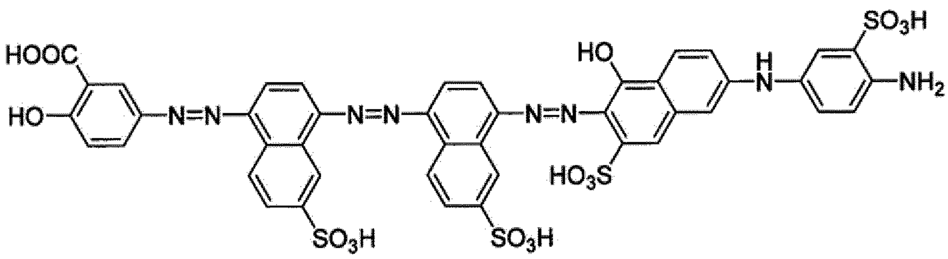

(1-A4)

[formula 31]

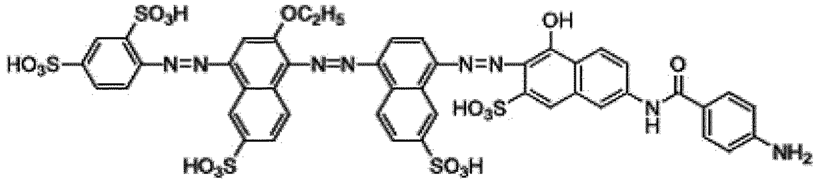

(1-A5)

[formula 32]

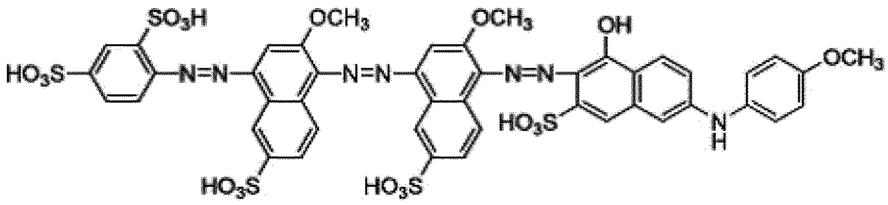

(1-A6)

[formula 33]

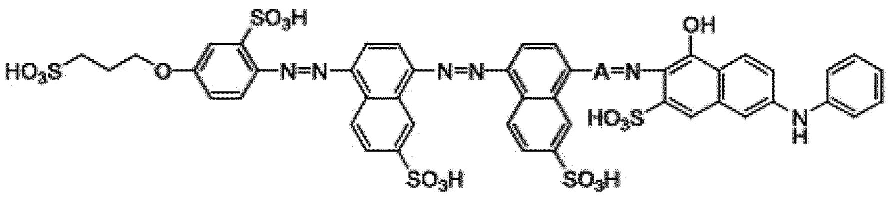

(1-A7)

[formula 34]

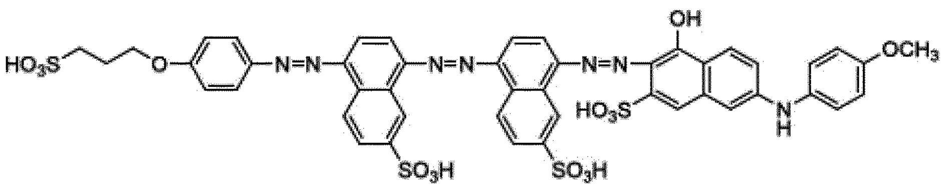

(1-A8)

[formula 35]

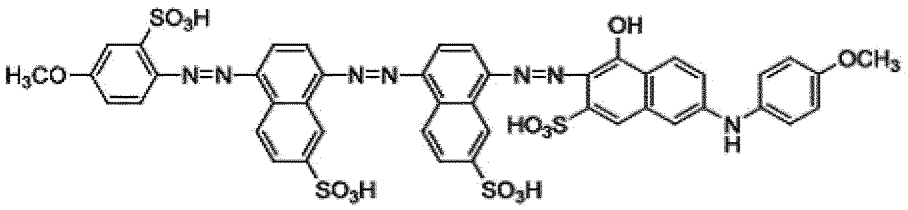

(1-A9)

[formula 36]

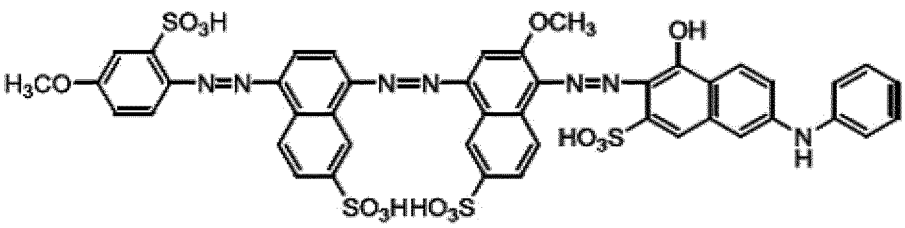

(1-A10)

[formula 37]

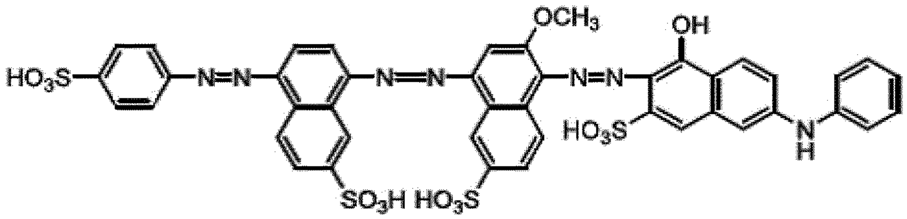

(1-A11)

[formula 38]

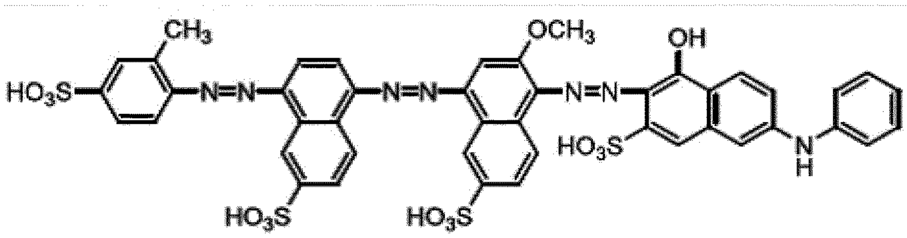

(1-A12)

[formula 39]

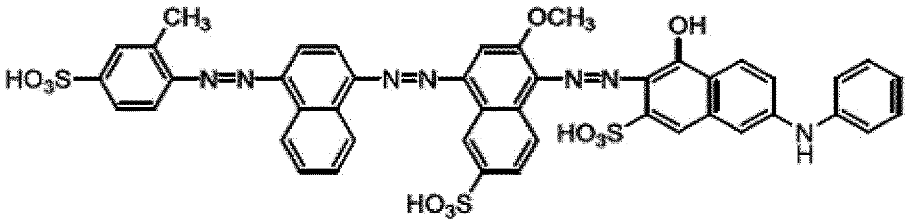

(1-A13)

[formula 40]

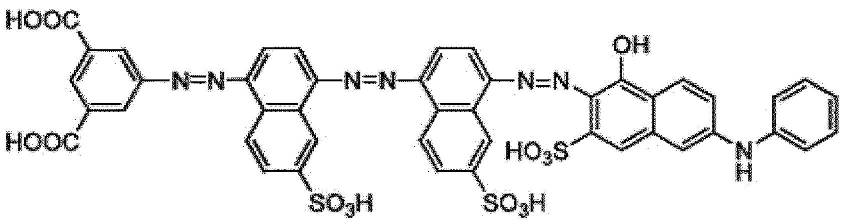

(1-A14)

[formula 41]

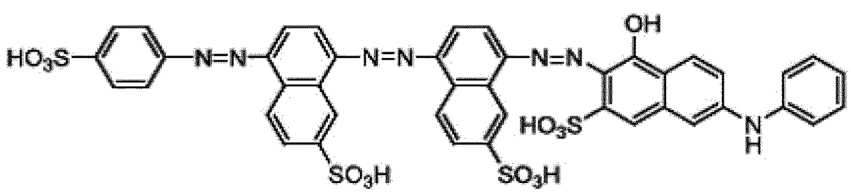

(1-A15)

[formula 42]

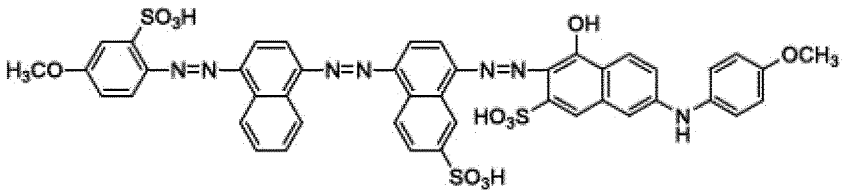

(1-A16)

[formula 43]

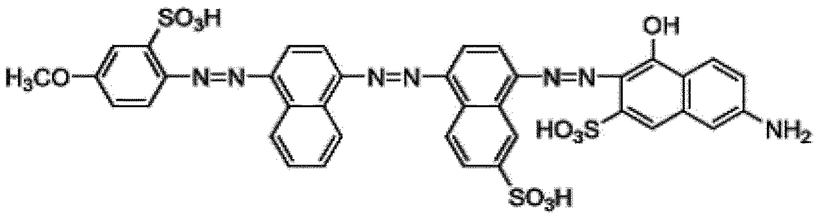

(1-A17)

[formula 44]

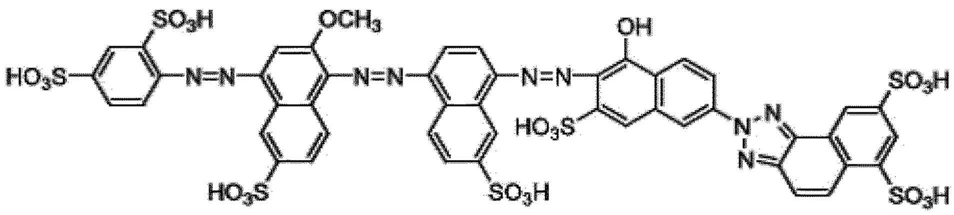

(1-A18)

[formula 45]

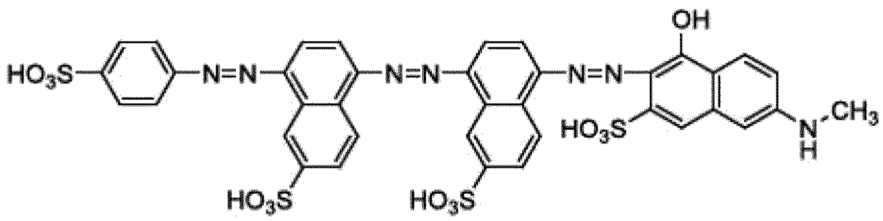

(1-A19)

[0055]

[formula 46]

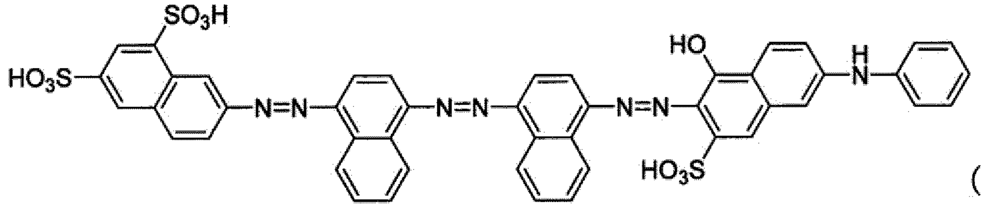

(1-B1)

[formula 47]

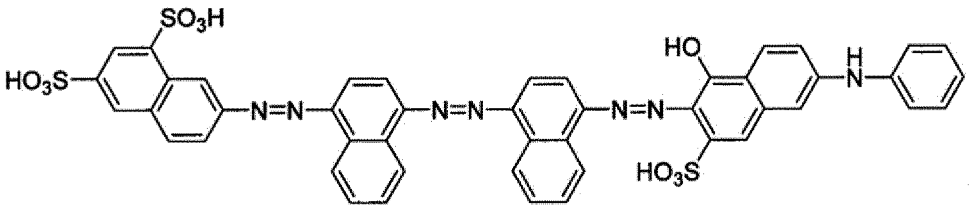

(1-B2)

[formula 48]

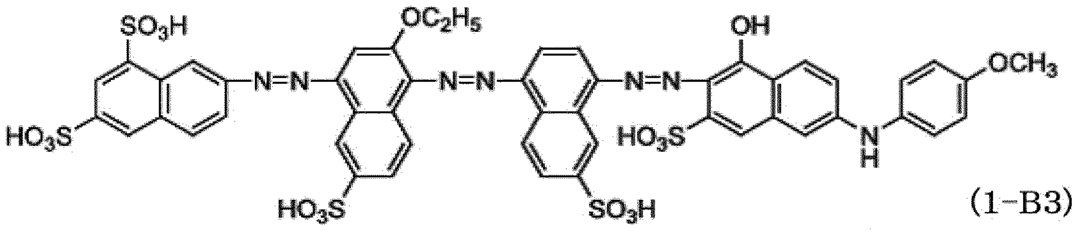

(1-B3)

[formula 49]

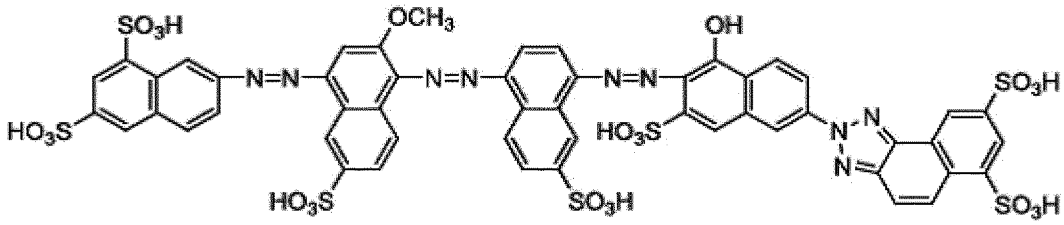

(1-B4)

[formula 50]

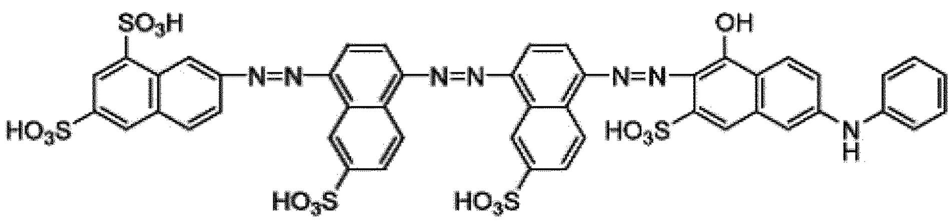

(1-B5)

[formula 51]

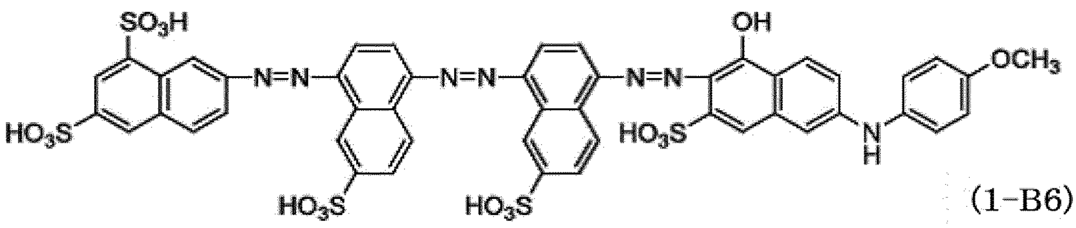

(1-B6)

[formula 52]

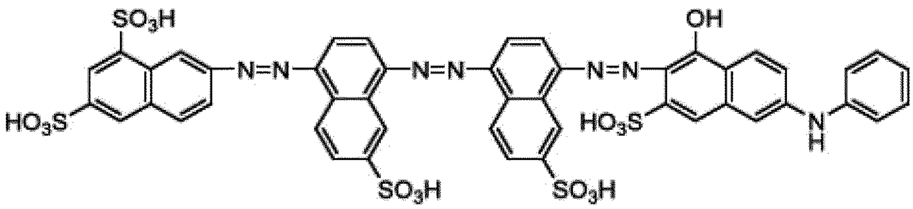

(1-B7)

[formula 53]

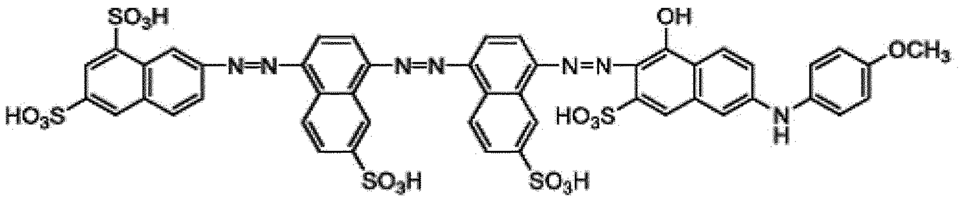

(1-B8)

[formula 54]

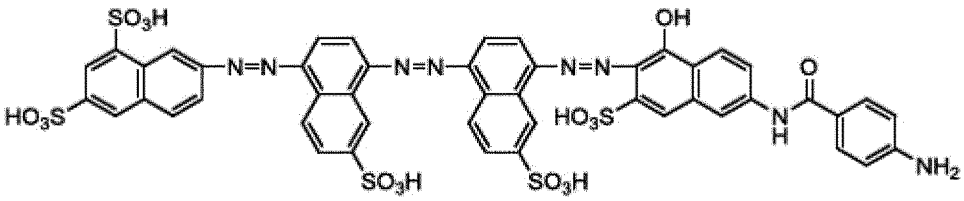

(1-B9)

[formula 55]

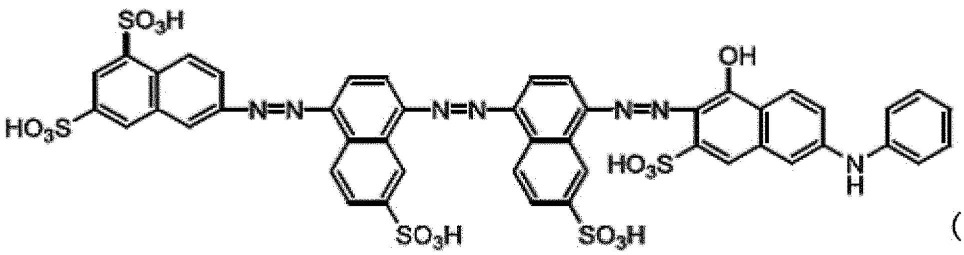

(1-B10)

[formula 56]

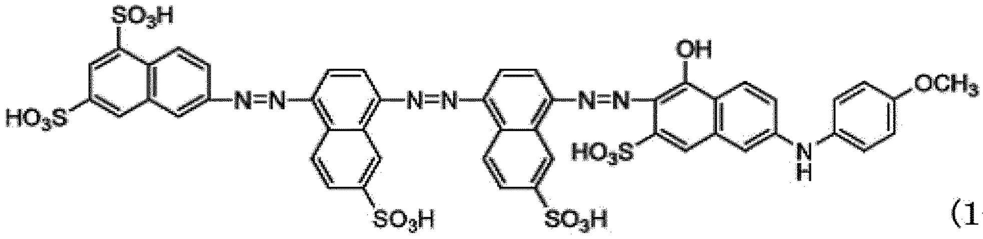

(1-B11)

[formula 57]

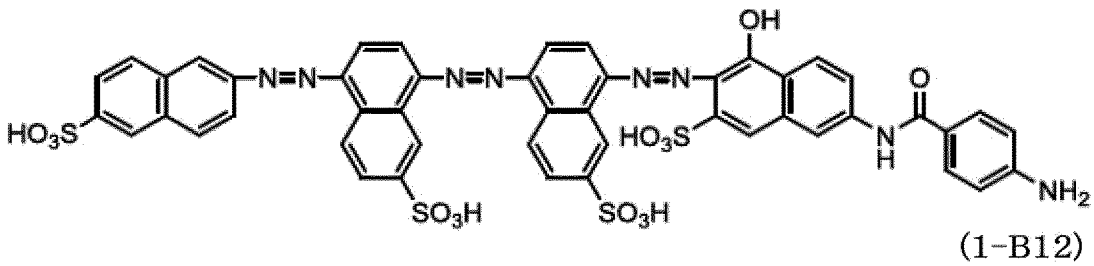

(1-B12)

[formula 58]

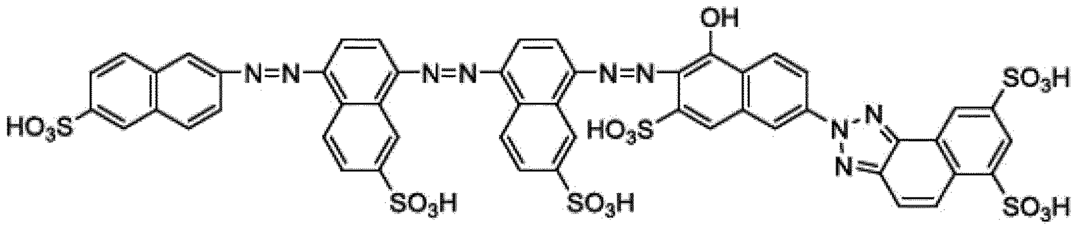

(1-B13)

[formula 59]

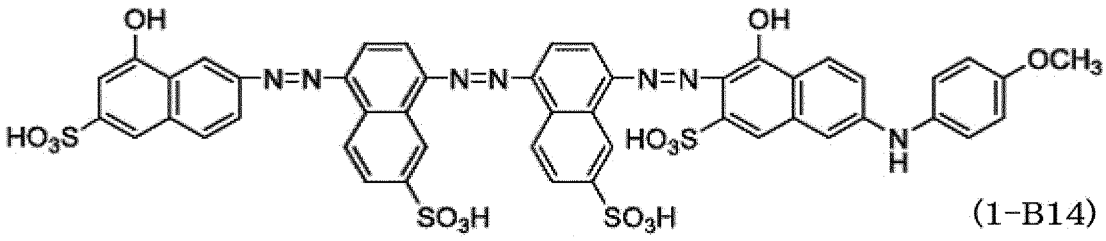

(1-B14)

[formula 60]

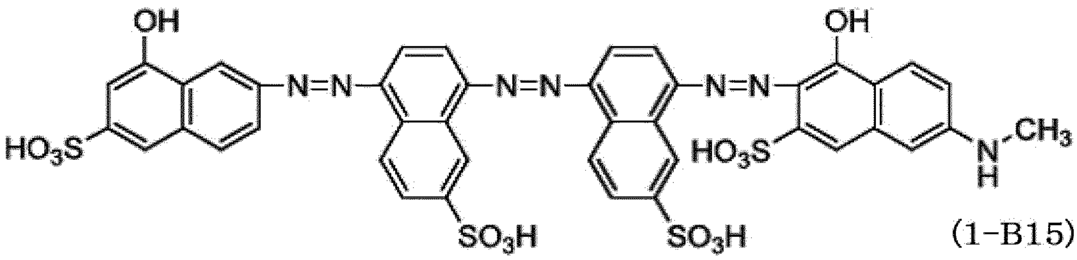

(1-B15)

[formula 61]

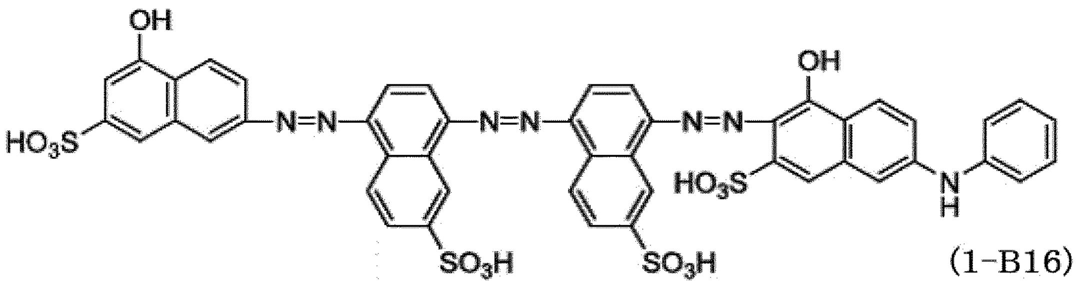

(1-B16)

[formula 62]

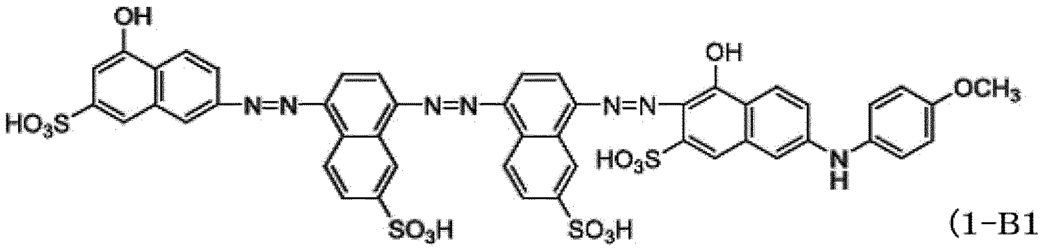

(1-B17)

[formula 63]

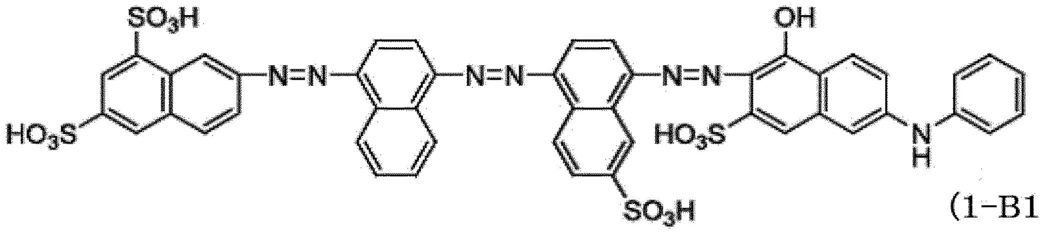

(1-B18)

[formula 64]

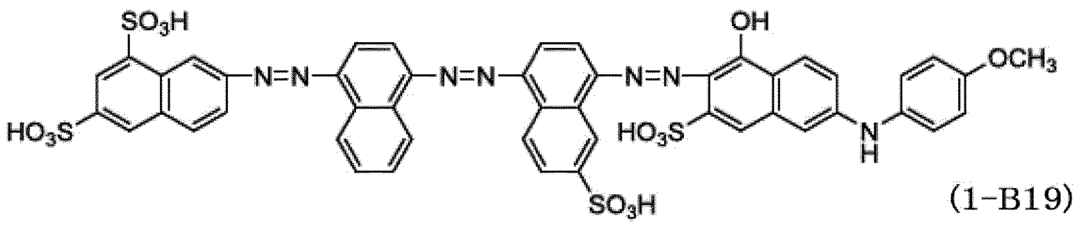

(1-B19)

[formula 65]

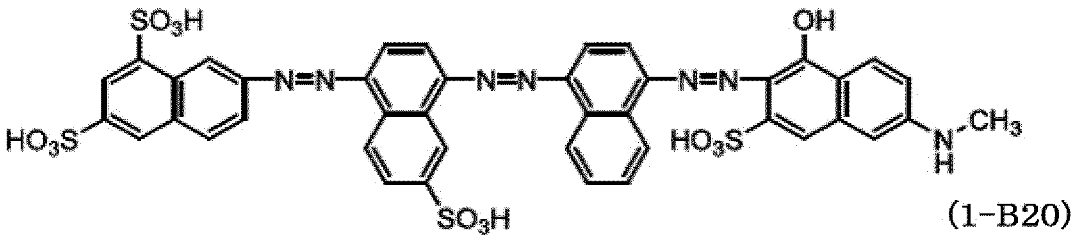

(1-B20)

[formula 66]

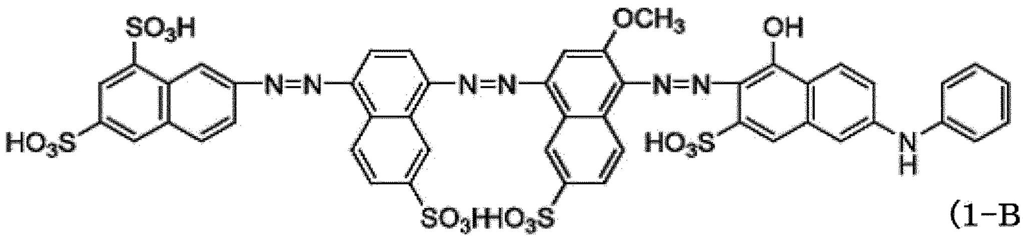

(1-B21)

[formula 67]

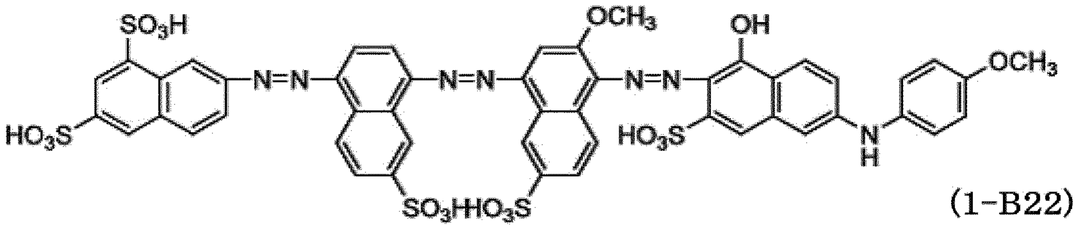

(1-B22)

[formula 68]

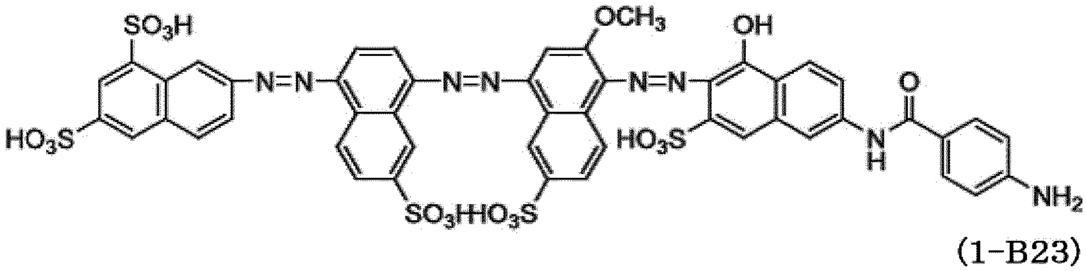

(1-B23)

[formula 69]

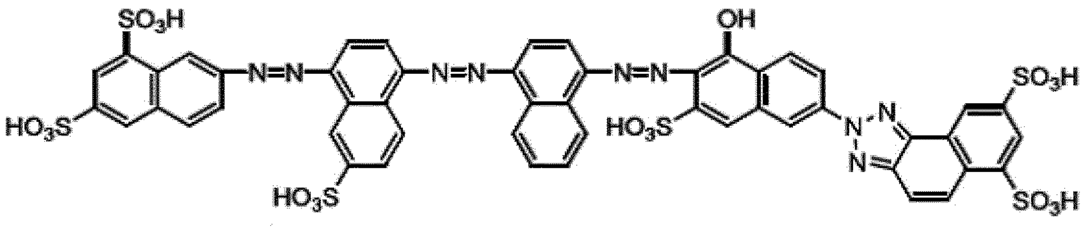

(1-B24)

[formula 70]

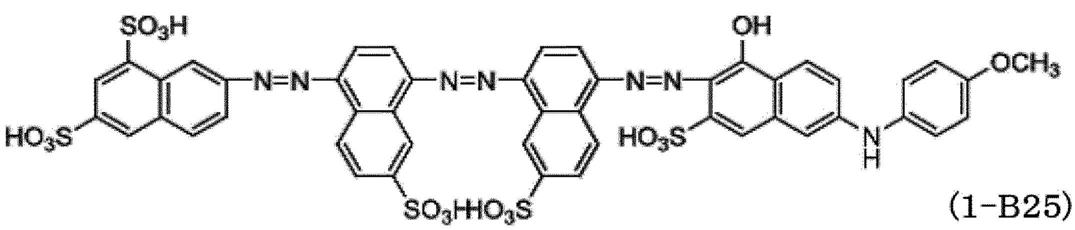

(1-B25)

[formula 71]

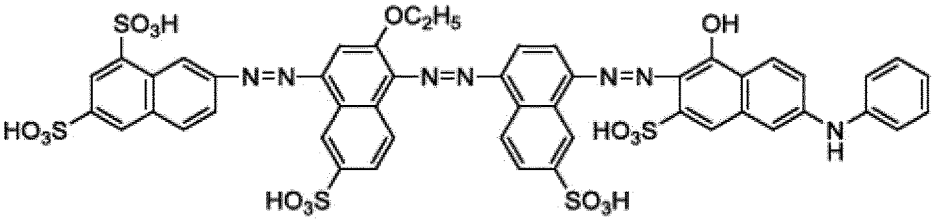

(1-B26)

[formula 72]

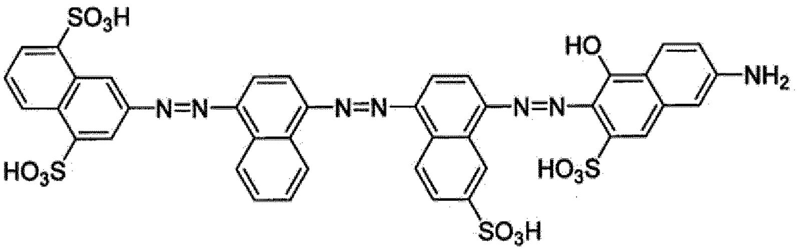

(1-C1)

[formula 73]

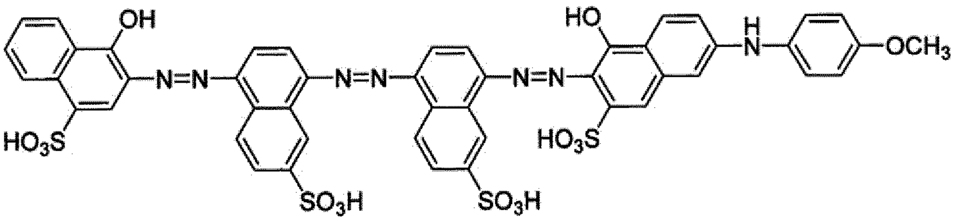

(1-C2)

[formula 74]

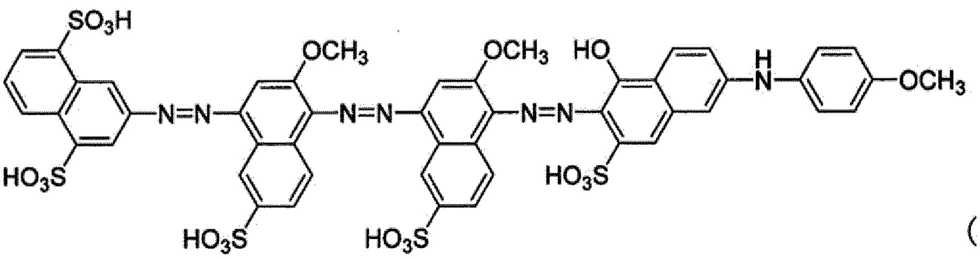

(1-C3)

[formula 75]

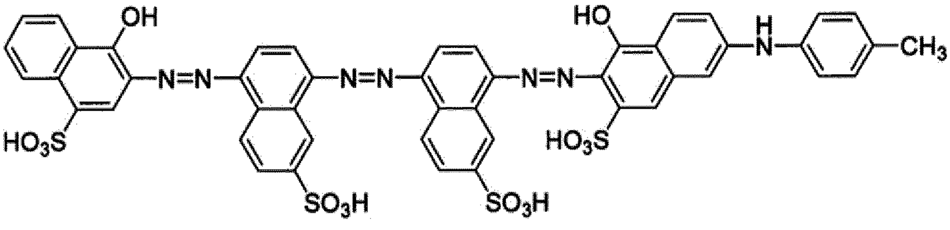

(1-C4)

[formula 76]

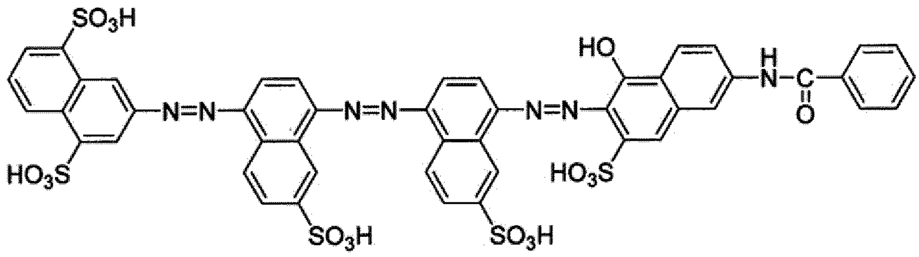

(1-C5)

[formula 77]

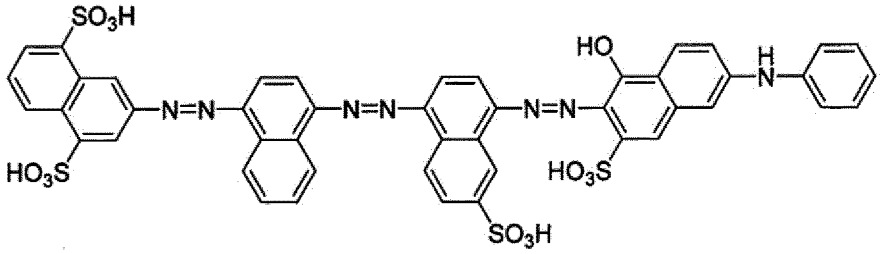

(1-C6)

[formula 78]

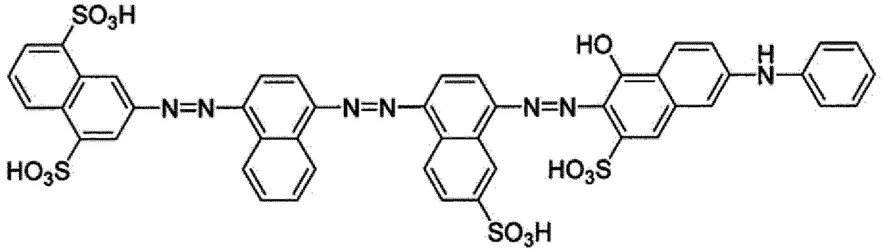

(1-C7)

[formula 79]

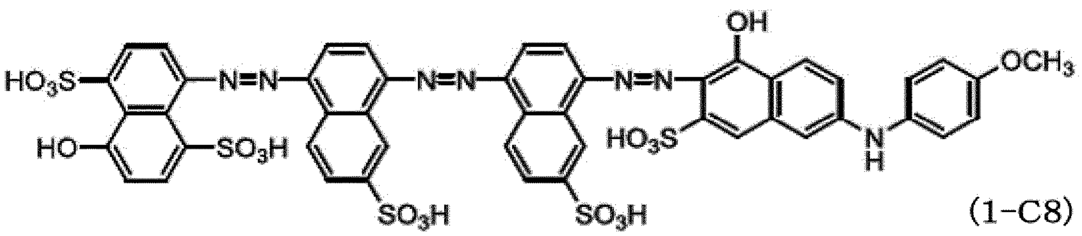

(1-C8)

[formula 80]

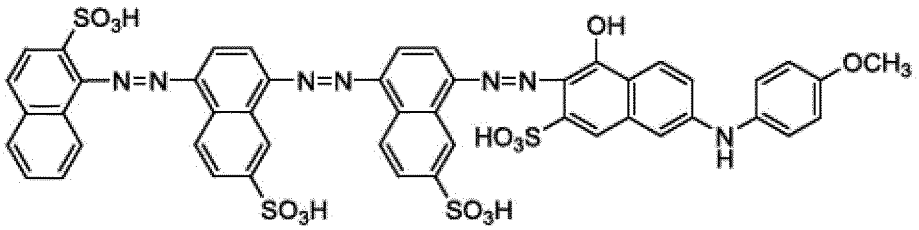

(1-C9)

[formula 81]

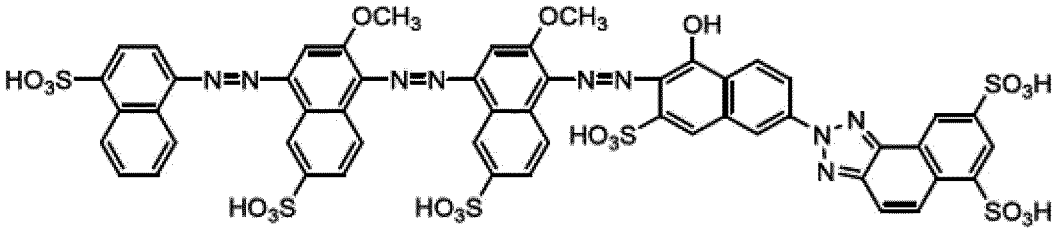

(1-C10)

[formula 82]

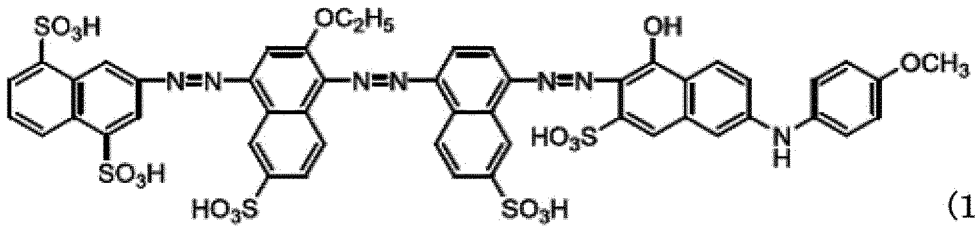

(1-C11)

[formula 83]

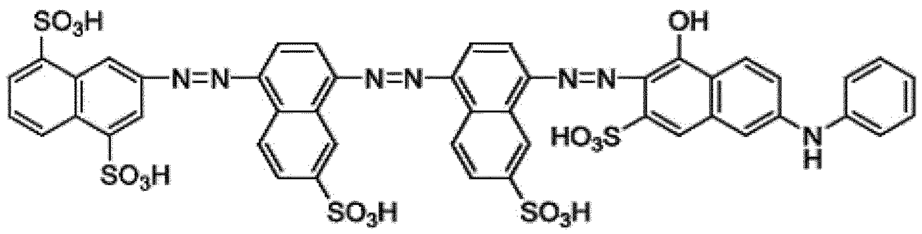

(1-C12)

[formula 84]

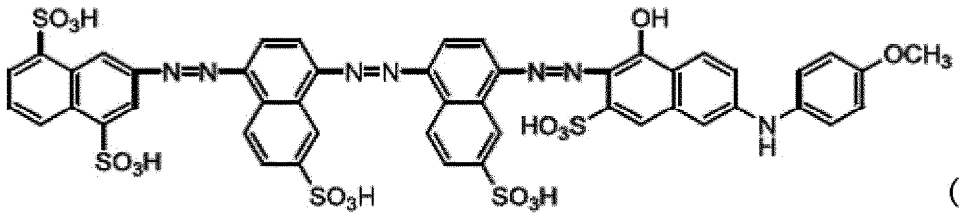

(1-C13)

[formula 85]

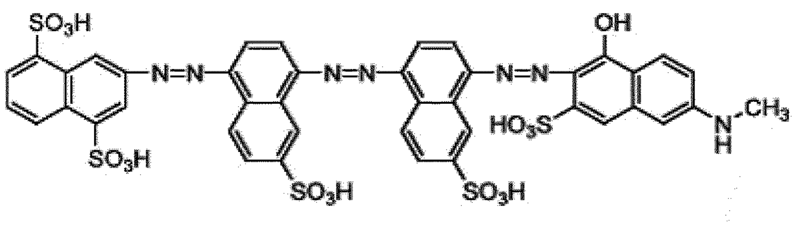

(1-C14)

[formula 86]

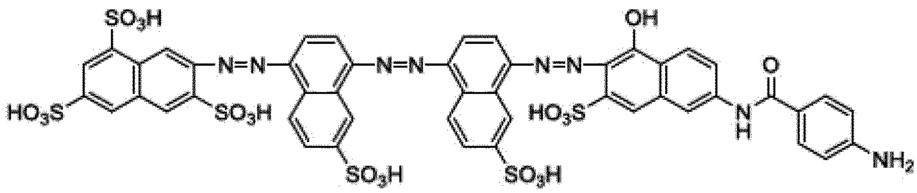

(1-C15)

[formula 87]

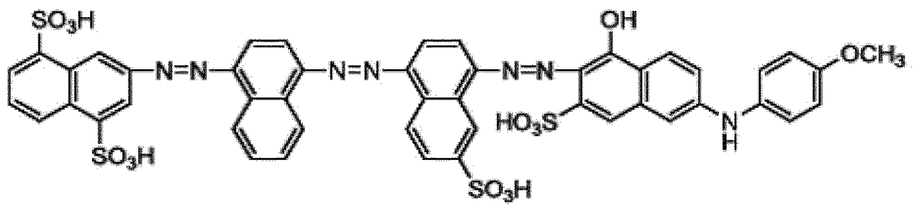

(1-C16)

[formula 88]

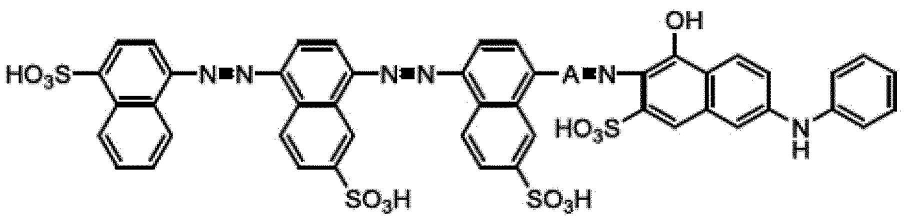

(1-C17)

[formula 89]

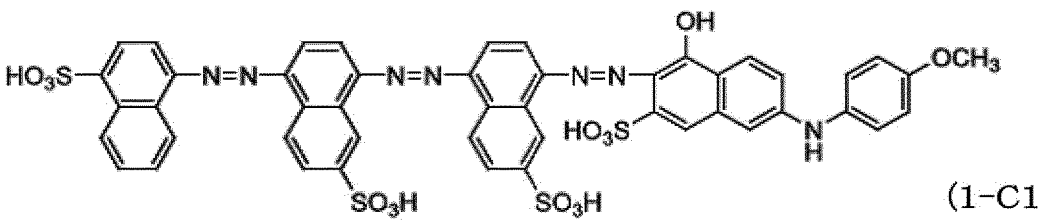

(1-C18)

[formula 90]

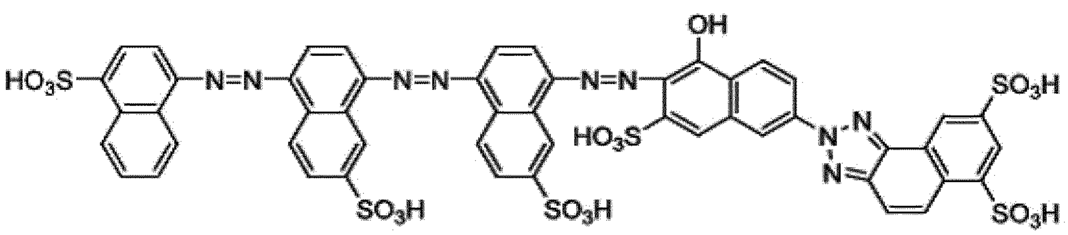

(1-C19)

[formula 91]

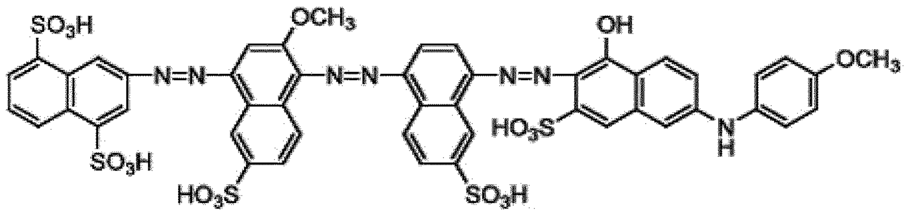

(1-C20)

[formula 92]

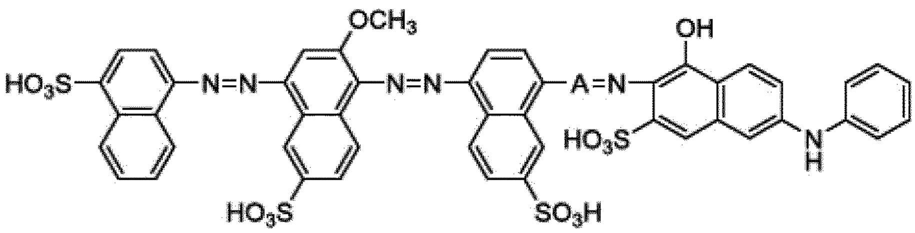

(1-C21)

[formula 93]

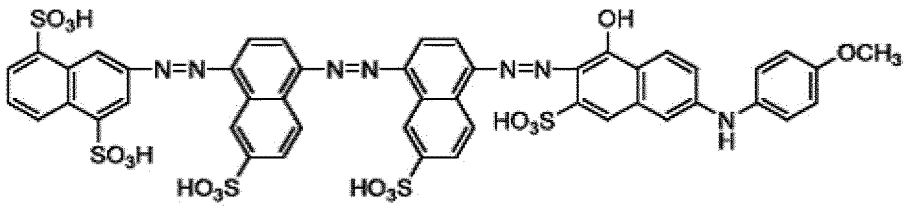

(1-C22)

[formula 94]

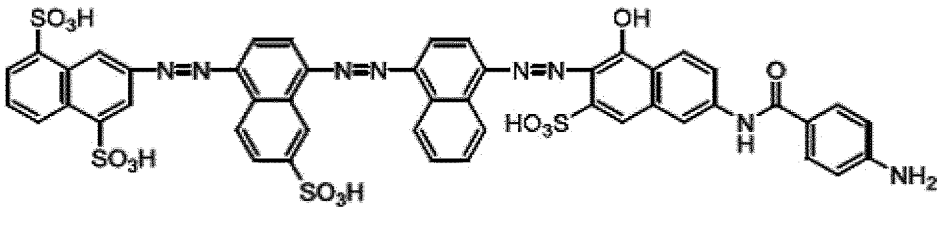

(1-C23)

[formula 95]

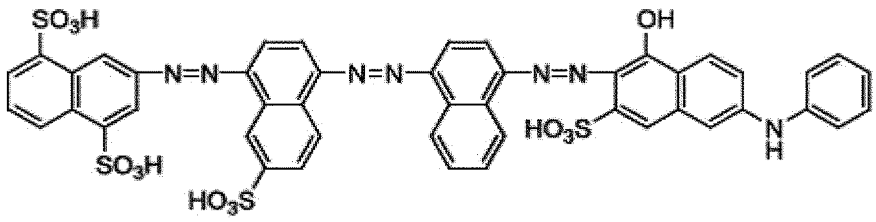

(1-C24)

[formula 96]

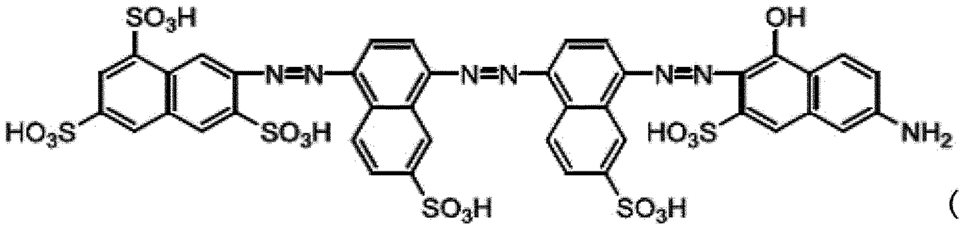

(1-C25)

[formula 97]

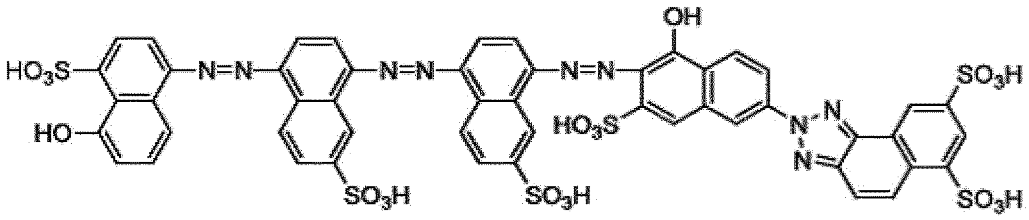

(1-C26)

[formula 98]

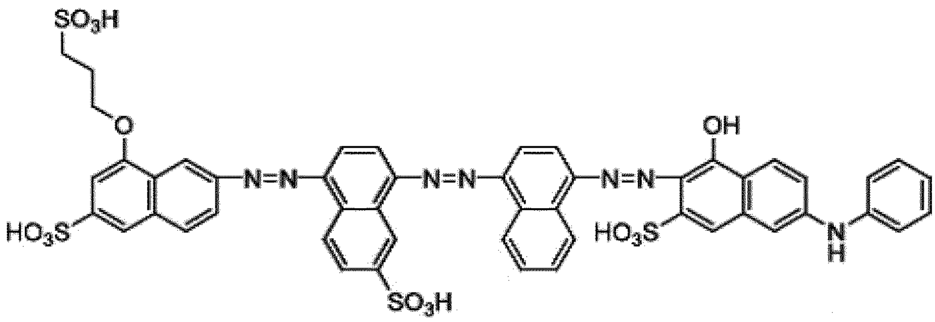

(1-D1)

[formula 99]

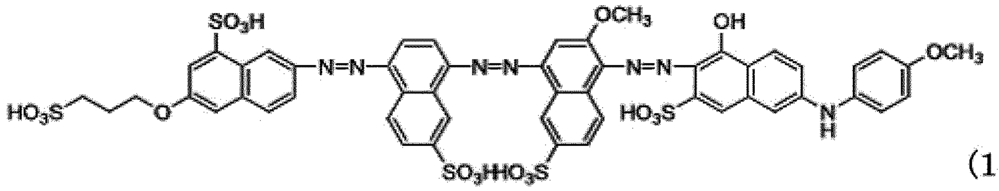

(1-D2)

[formula 100]

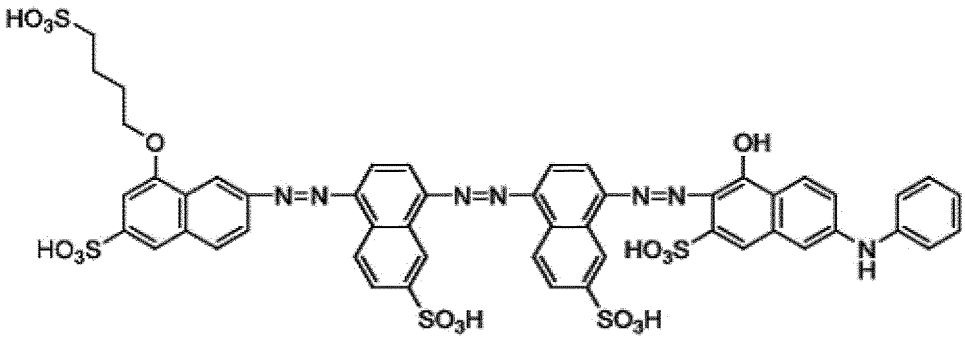

(1-D3)

[formula 101]

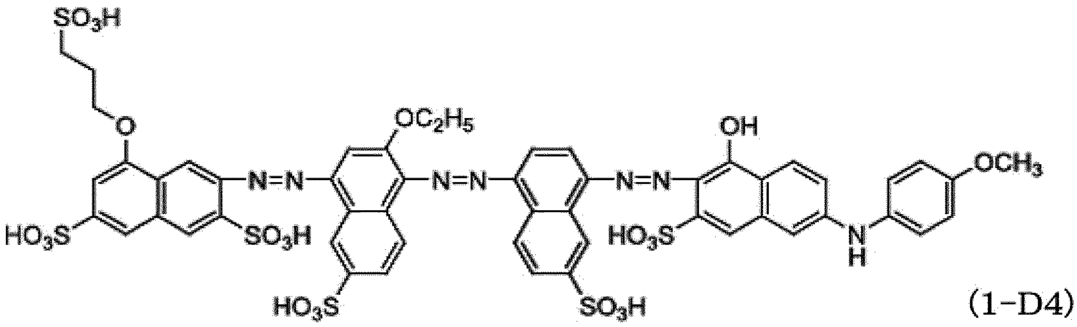

(1-D4)

[formula 102]

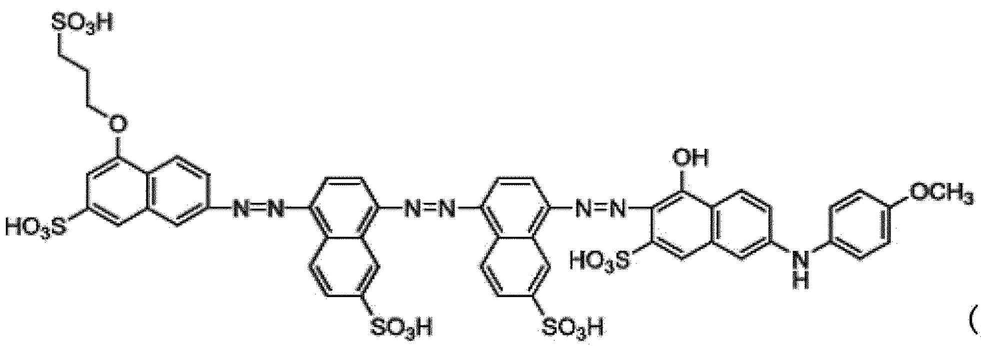

(1-D5)

[formula 103]

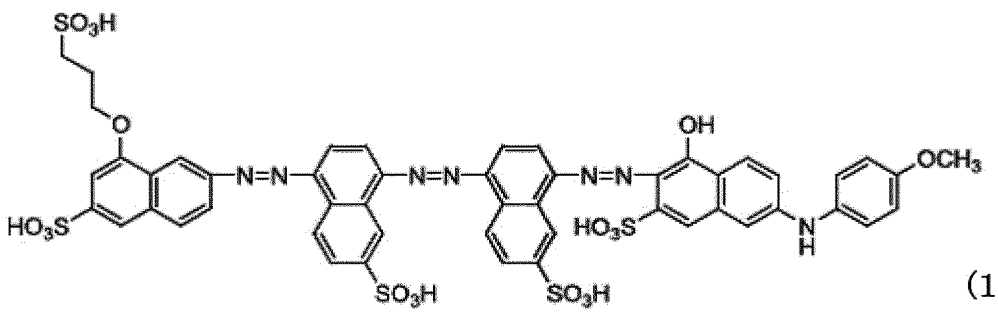

(1-D6)

[formula 104]

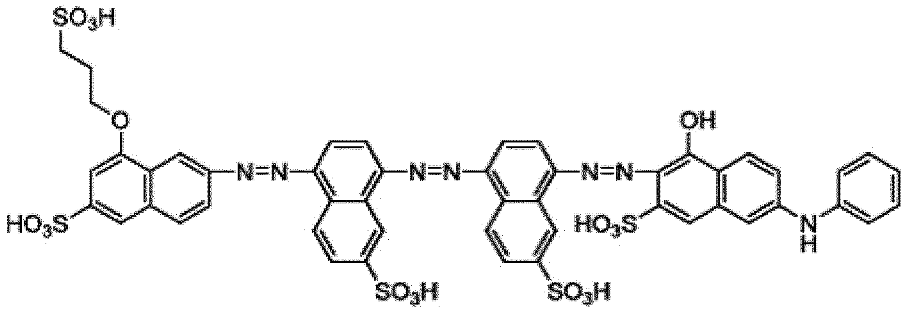

(1-D7)

[formula 105]

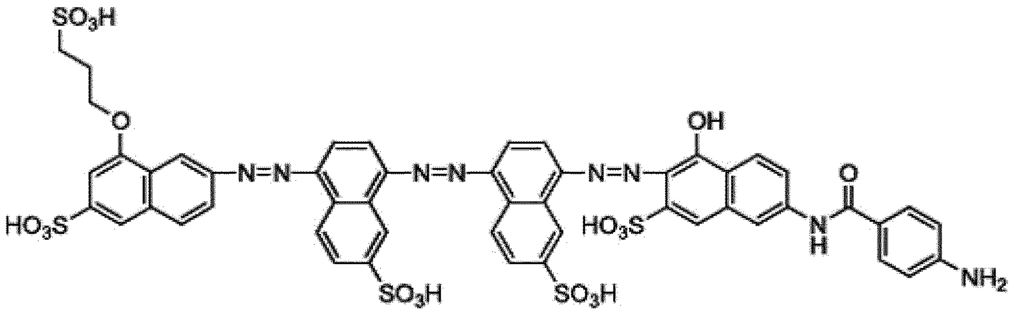

(1-D8)

[formula 106]

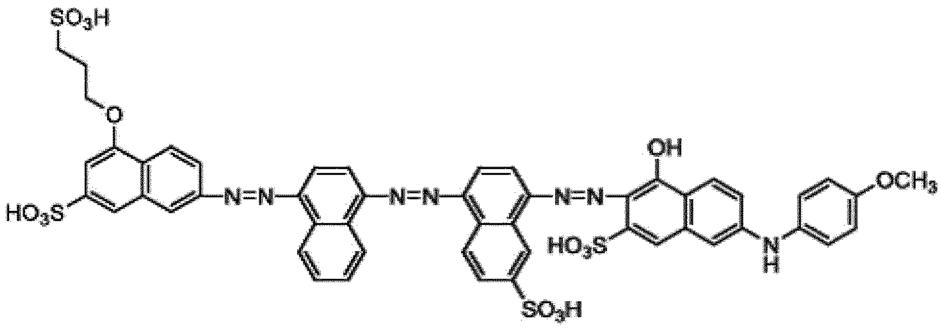

(1-D9)

[formula 107]

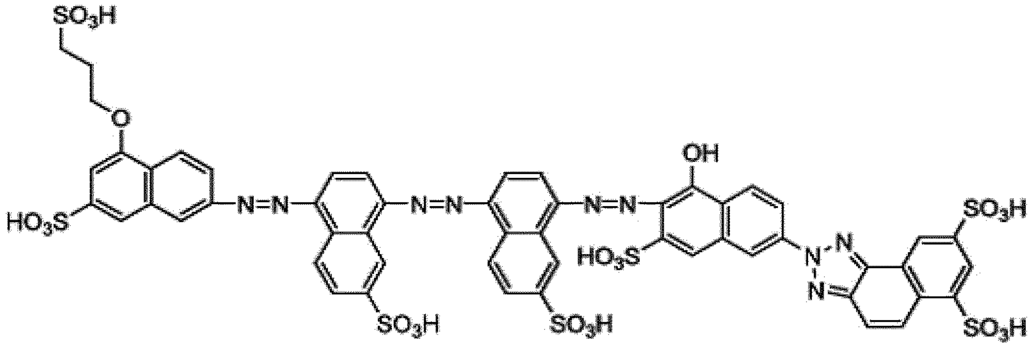

(1-D10)

[formula 108]

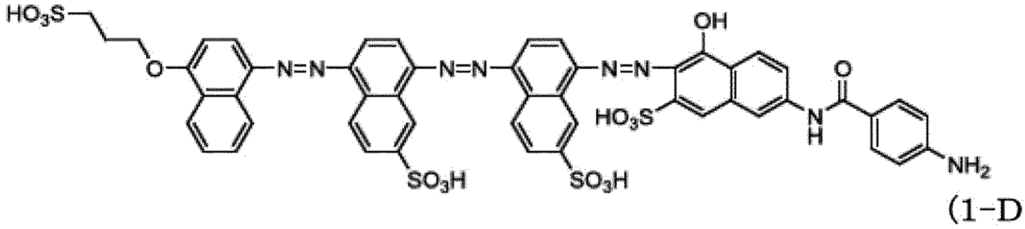

(1-D11)

[formula 109]

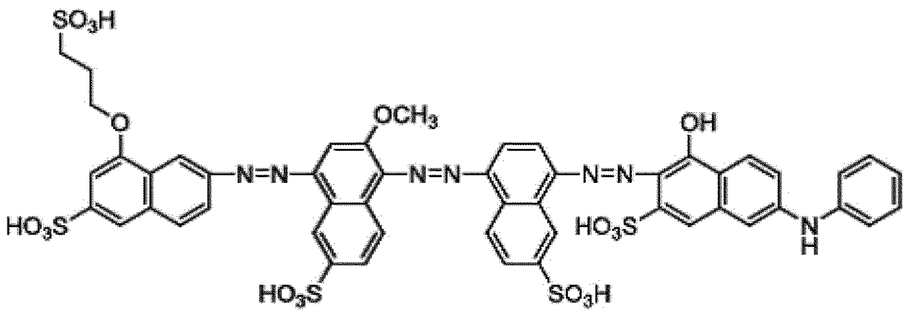

(1-D12)

[formula 110]

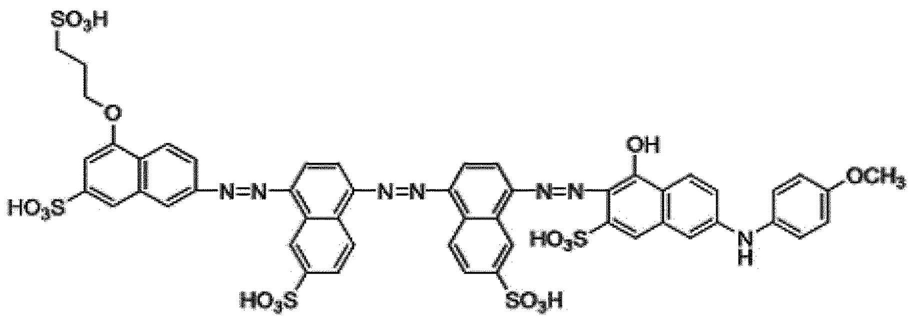

(1-D13)

[formula 111]

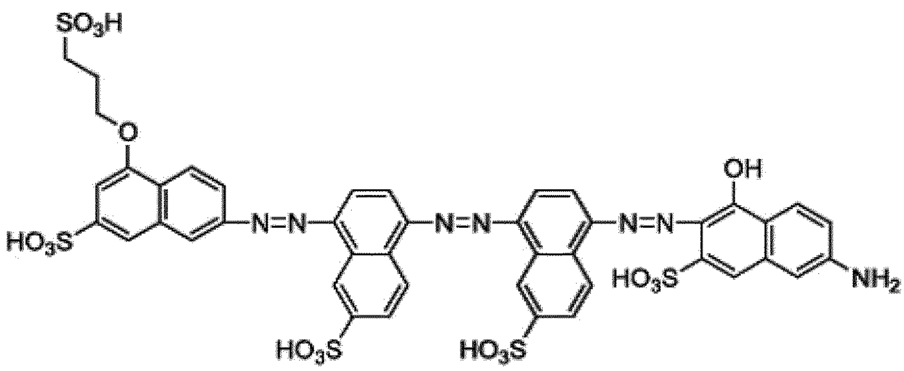

(1-D14)

[formula 112]

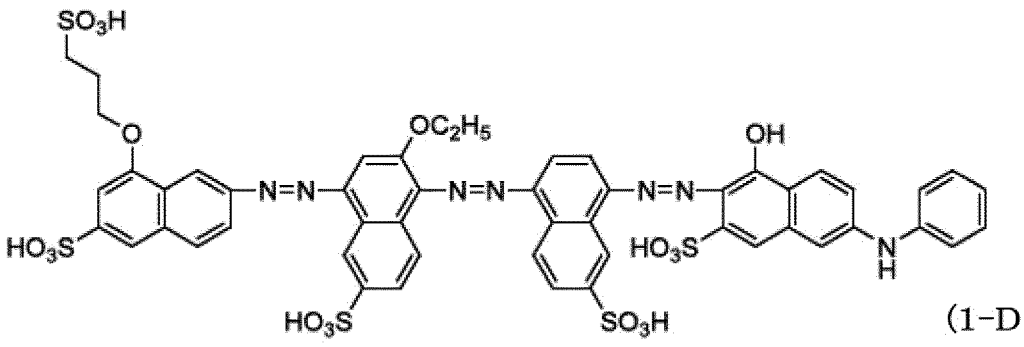

(1-D15)

[formula 113]

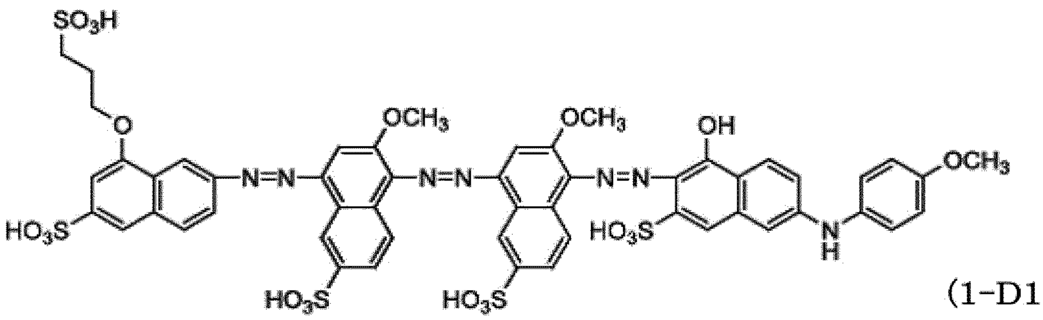

(1-D16)

[formula 114]

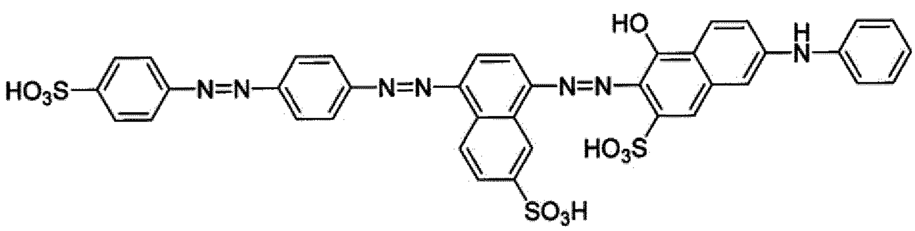

(1-E1)

[formula 115]

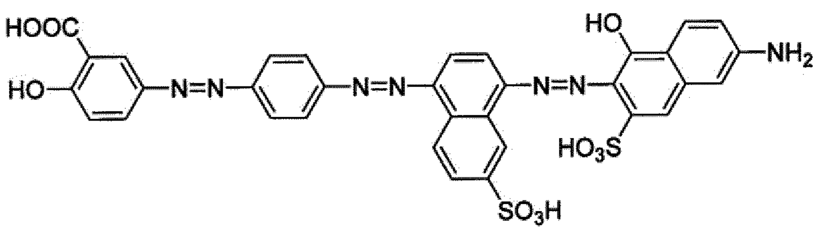

(1-E2)

[formula 116]

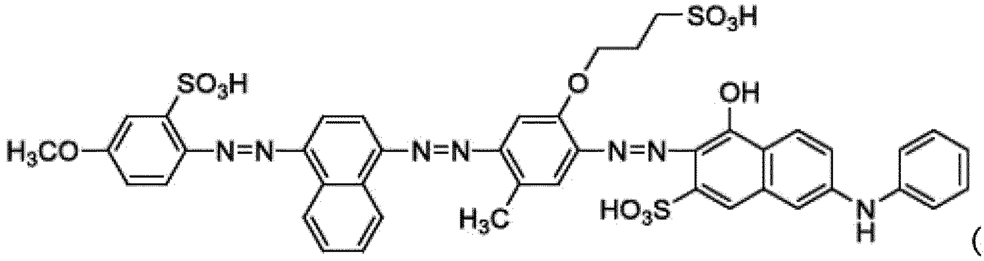

(1-E3)

[formula 117]

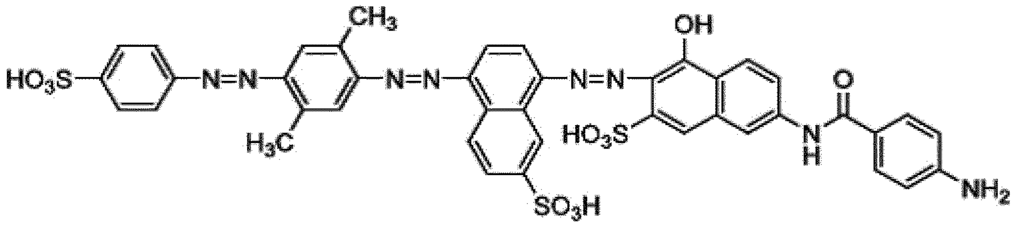

(1-E4)

[formula 118]

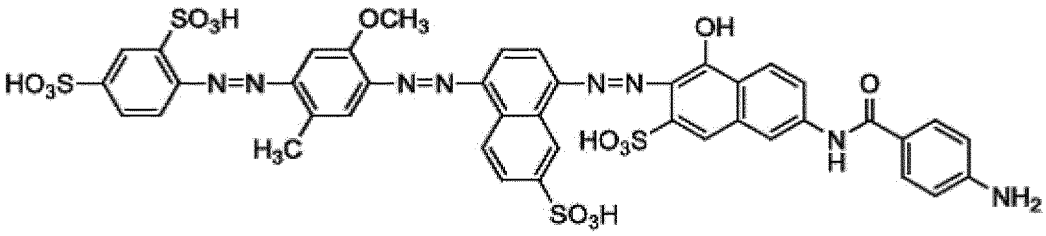

(1-E5)

[formula 119]

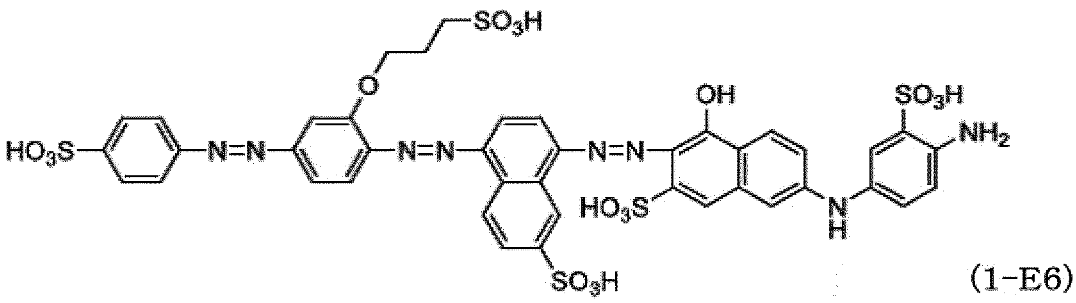

(1-E6)

[formula 120]

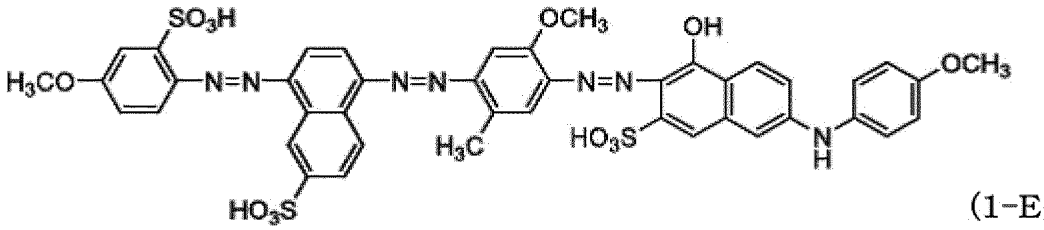

(1-E7)

[formula 121]

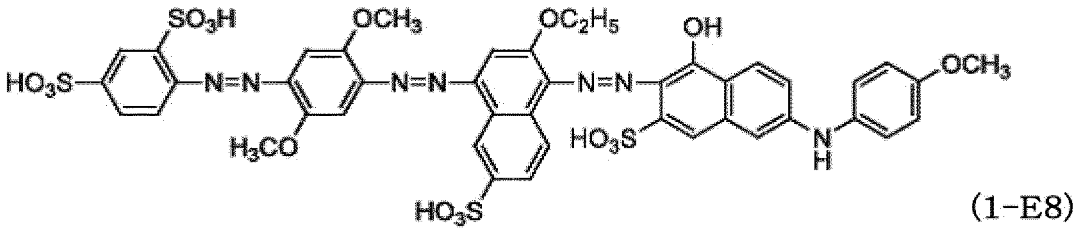

(1-E8)

[formula 122]

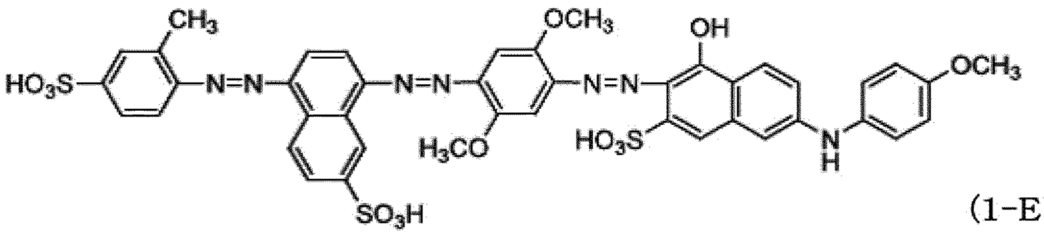

(1-E9)

[formula 123]

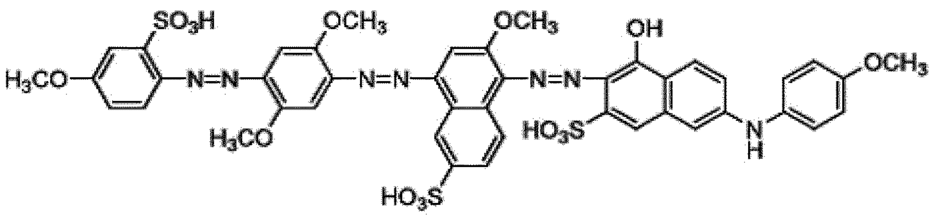

(1-E10)

[formula 124]

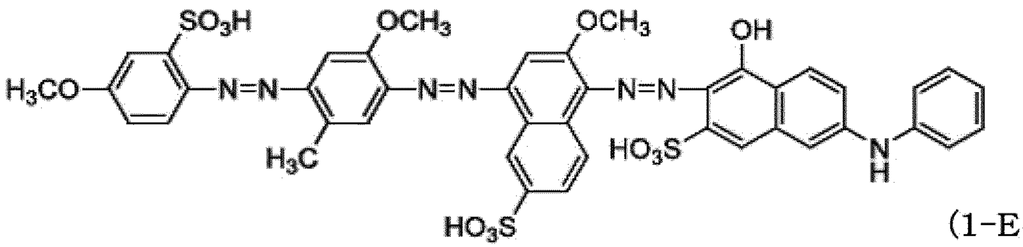

(1-E11)

[formula 125]

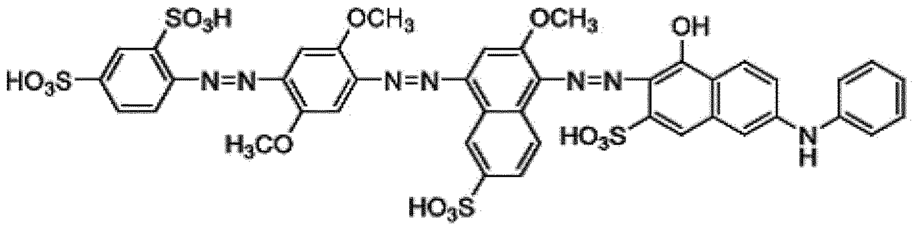

(1-E12)

[formula 126]

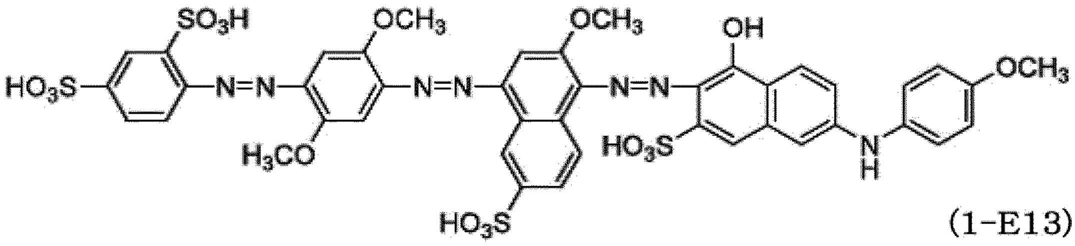

(1-E13)

[formula 127]

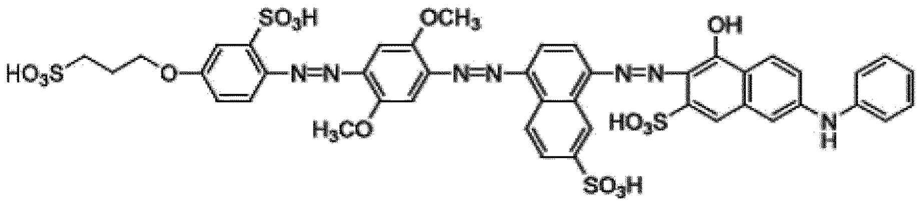

(1-E14)

[formula 128]

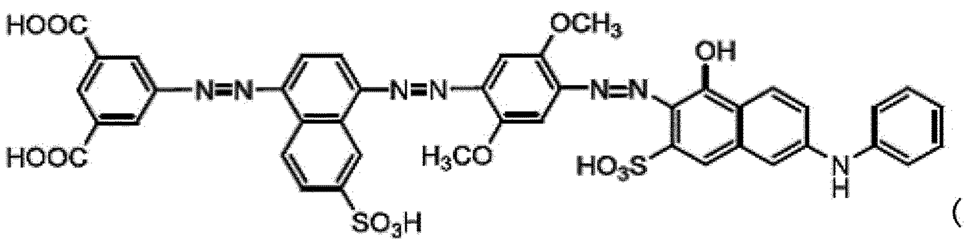

(1-E15)

[formula 129]

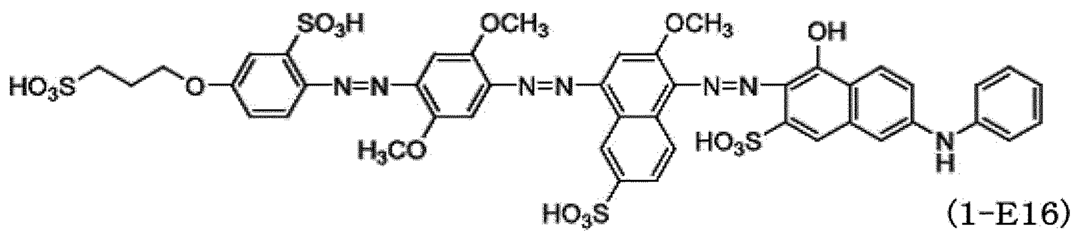

(1-E16)

[formula 130]

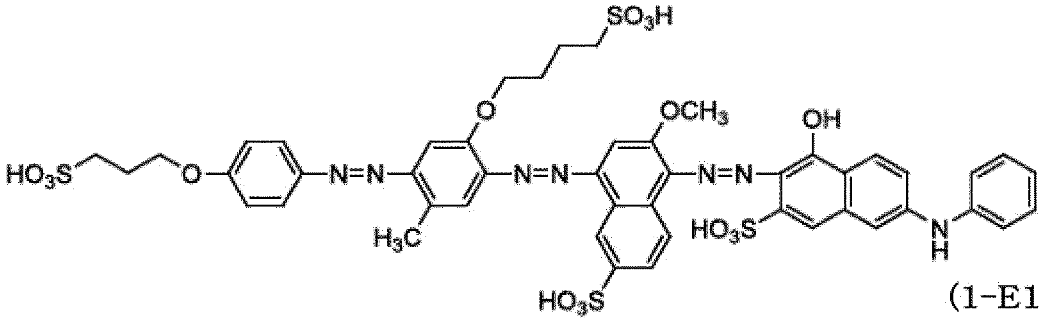

(1-E17)

[formula 131]

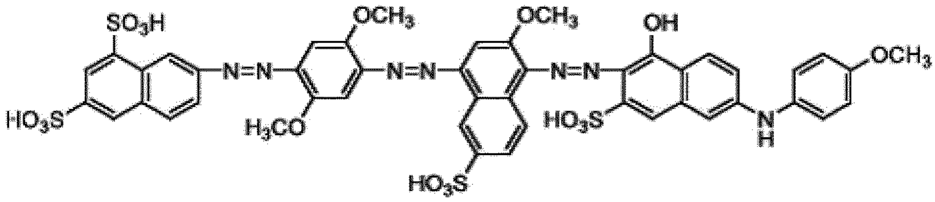

(1-F1)

[formula 132]

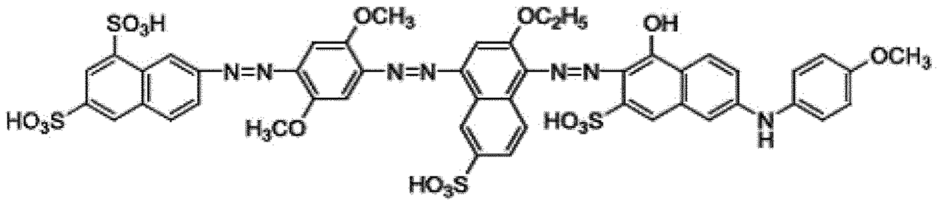

(1-F2)

[formula 133]

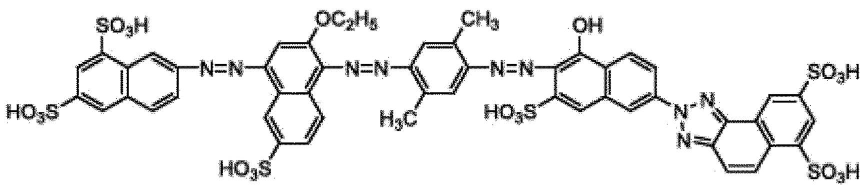

(1-F3)

[formula 134]

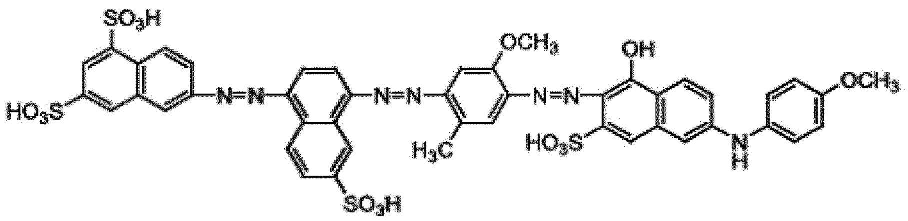

(1-F4)

[formula 135]

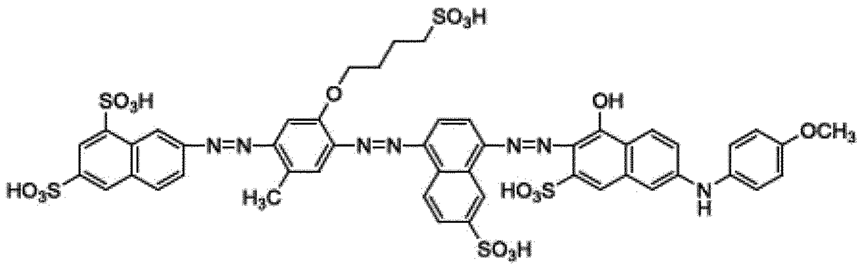

(1-F5)

[formula 136]

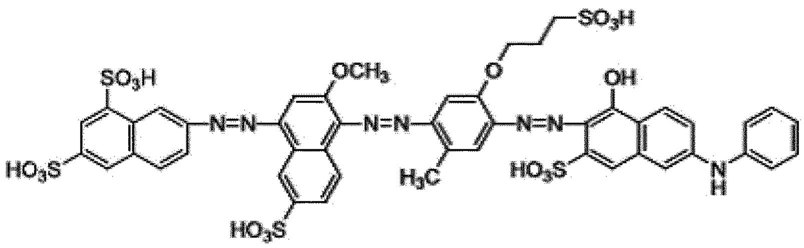

(1-F6)

[formula 137]

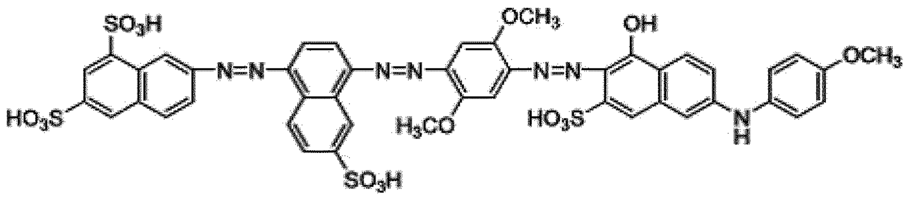

(1-F7)

[formula 138]

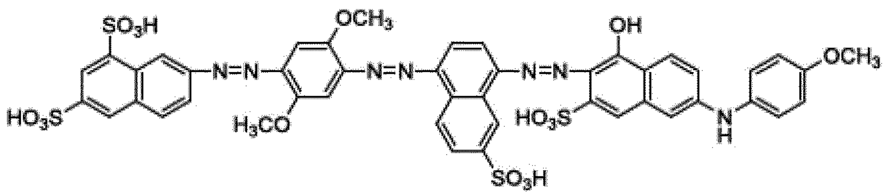

(1-F8)

[formula 139]

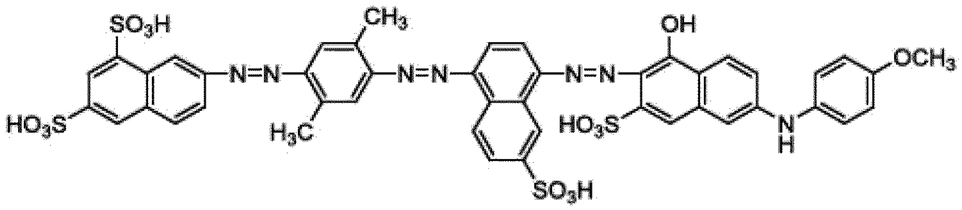

(1-F9)

[formula 140]

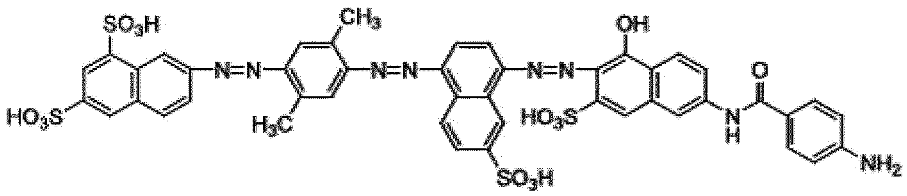

(1-F10)

[formula 141]

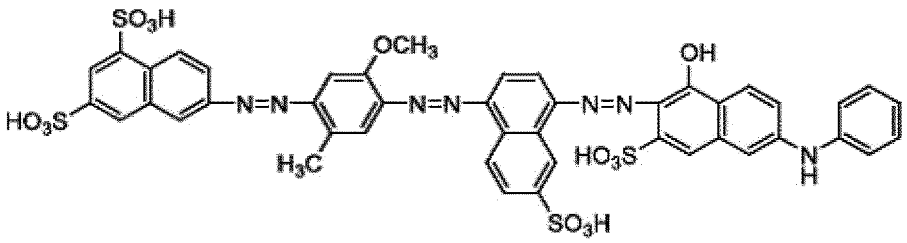

(1-F11)

[formula 142]

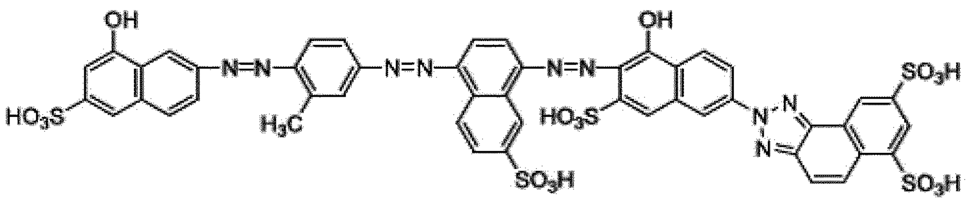

(1-F12)

[formula 143]

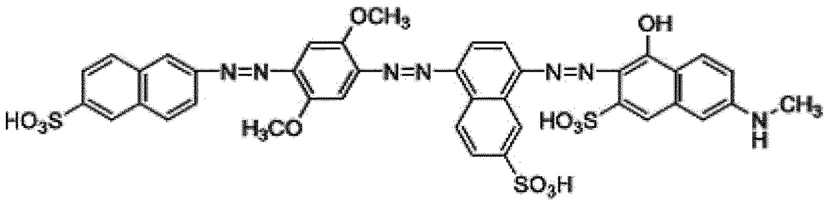

(1-F13)

[formula 144]

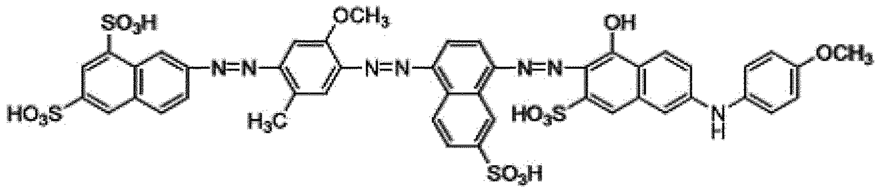

(1-F14)

[formula 145]

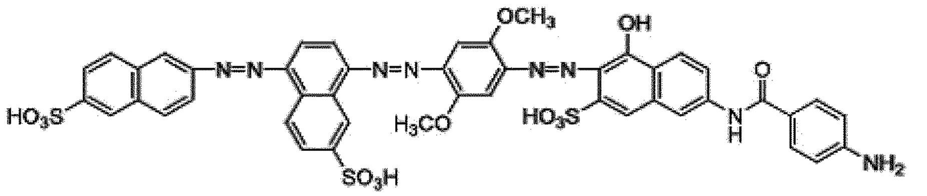

(1-F15)

[formula 146]

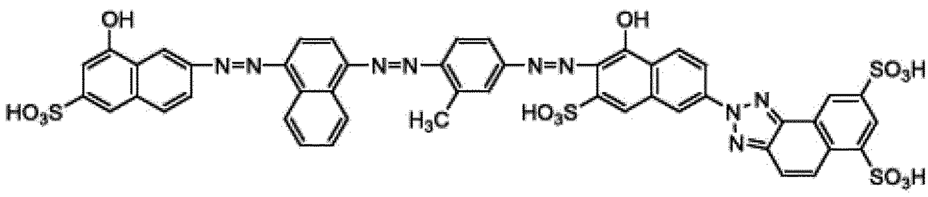

(1-F16)

[formula 147]

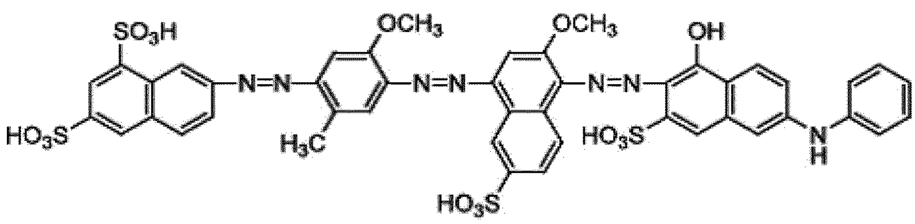

(1-F17)

[formula 148]

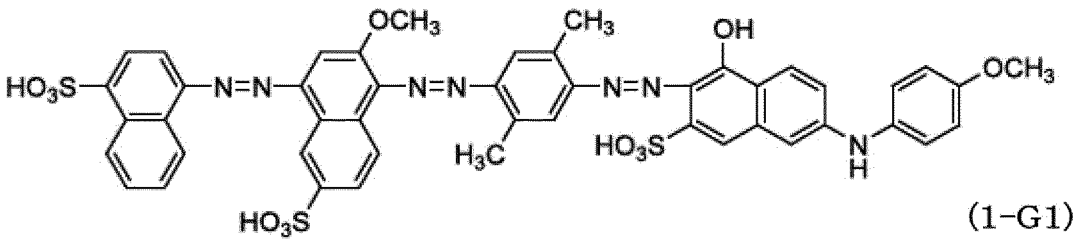

(1-G1)

[formula 149]

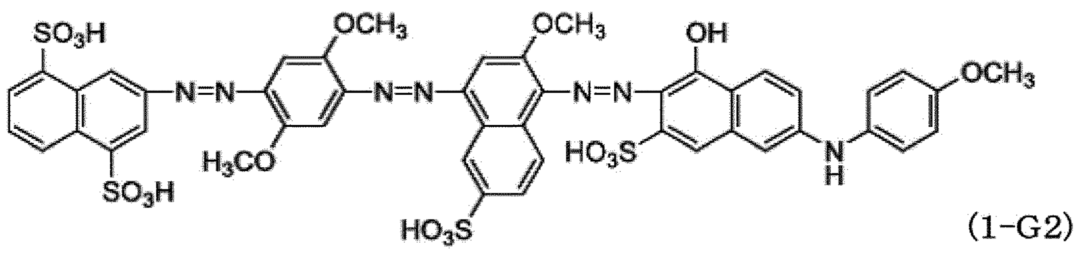

(1-G2)

[formula 150]

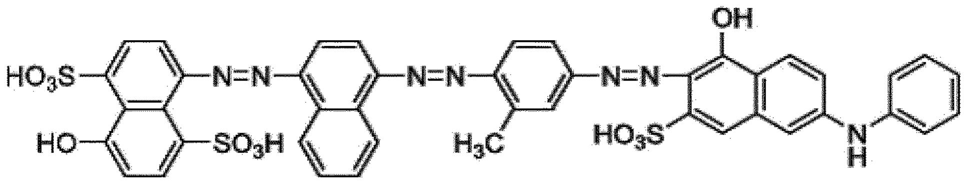

(1-G3)

[formula 151]

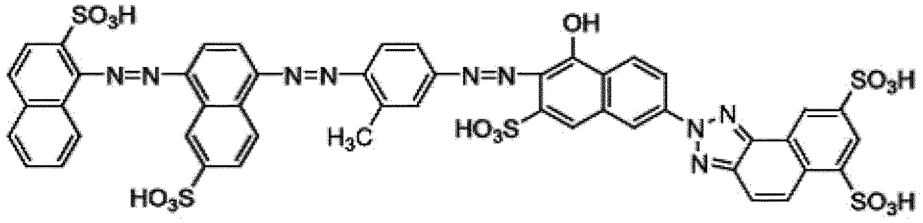

(1-G4)

[formula 152]

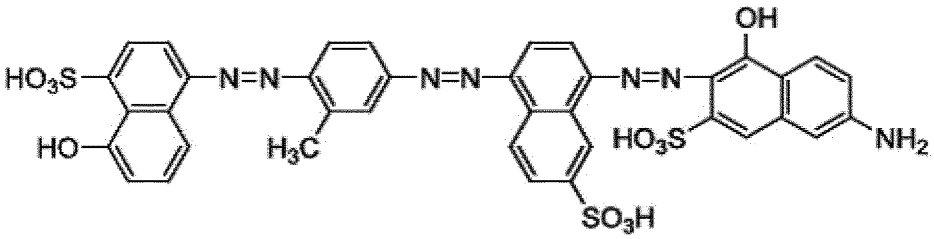

(1-G5)

[formula 153]

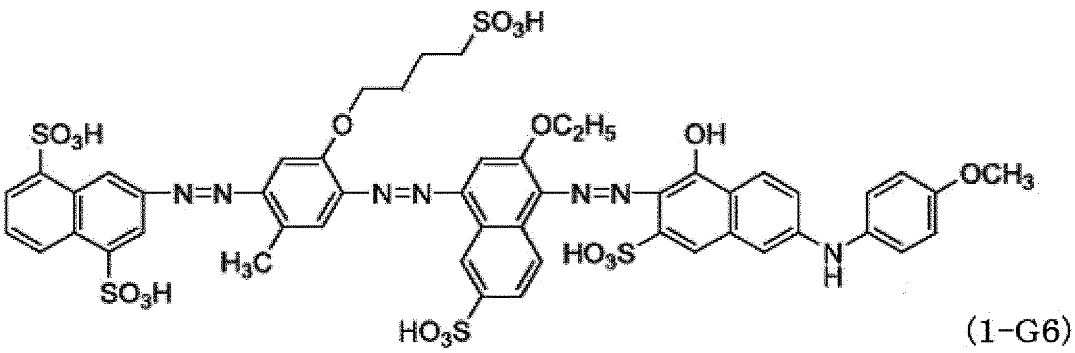

(1-G6)

[formula 154]

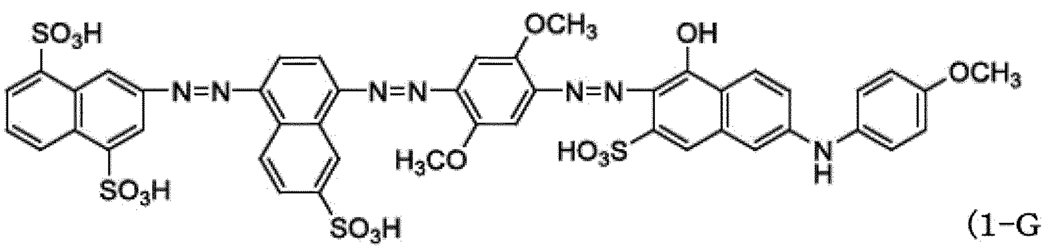

(1-G7)

[formula 155]

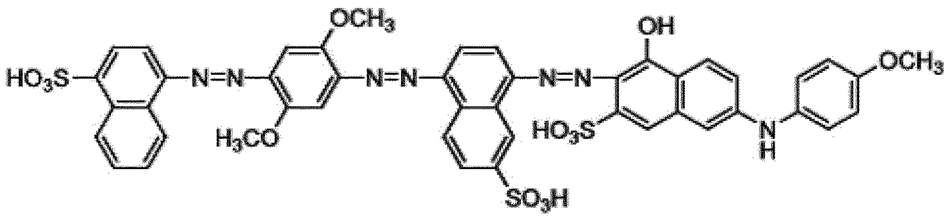

(1-G8)

[formula 156]

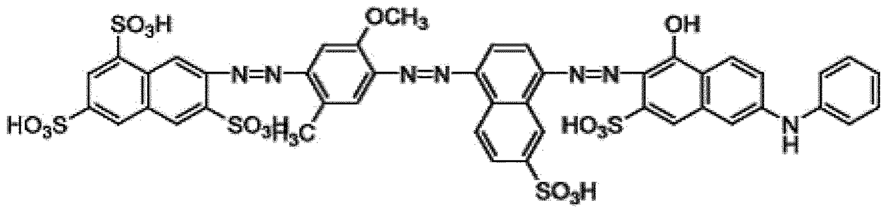

(1-G9)

[formula 157]

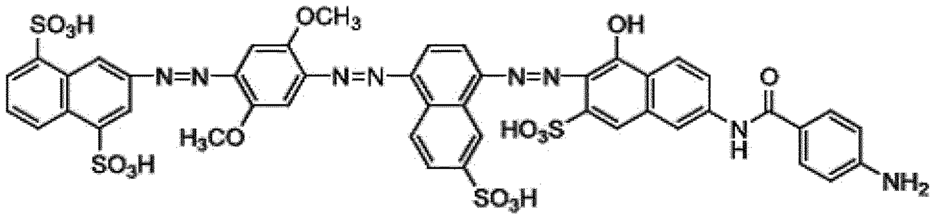

(1-G10)

[formula 158]

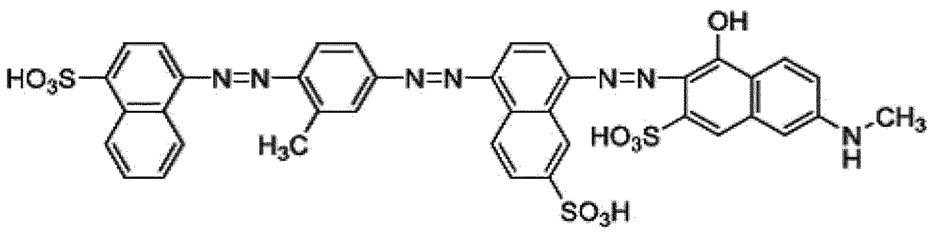

(1-G11)

[formula 159]

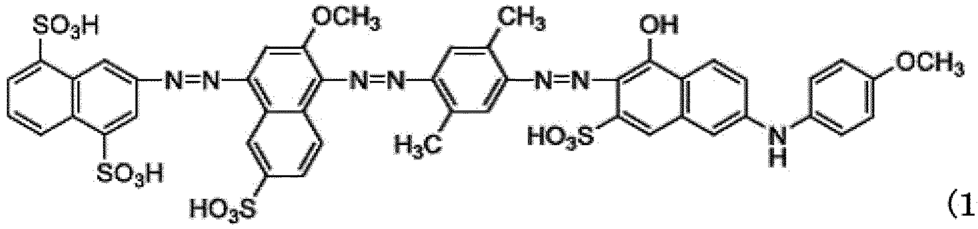

(1-G12)

[formula 160]

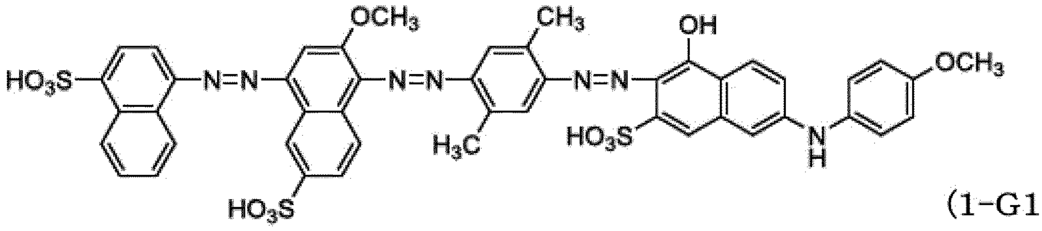

(1-G13)

[formula 161]

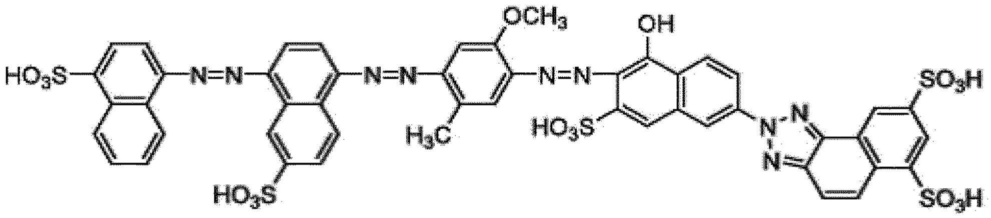

(1-G14)

[formula 162]

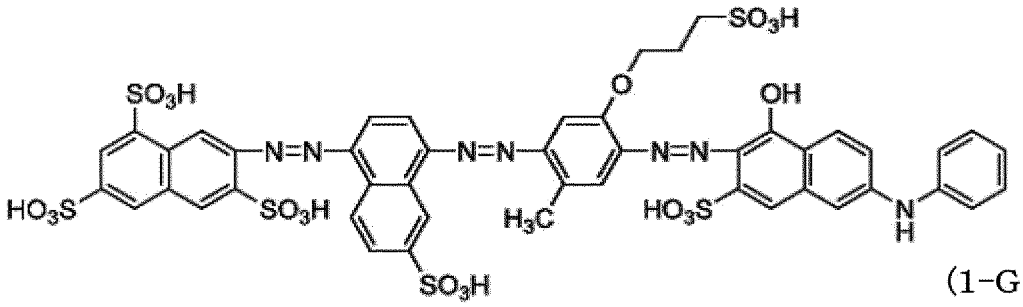

(1-G15)

[formula 163]

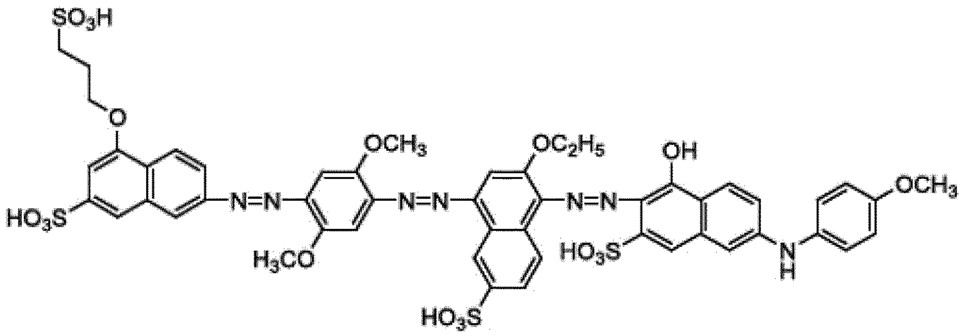

(1-H1)

[formula 164]

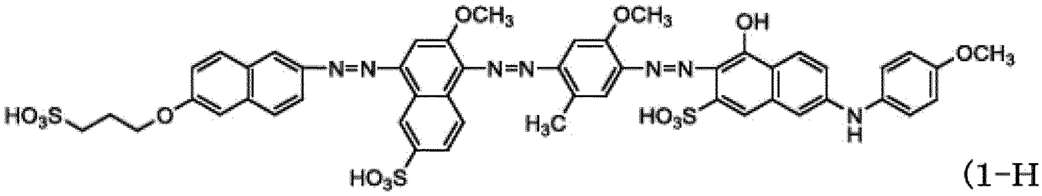

(1-H2)

[formula 165]

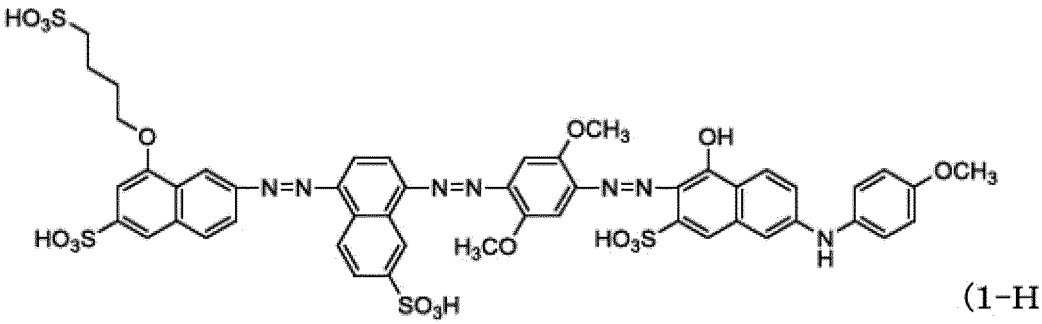

(1-H3)

[formula 166]

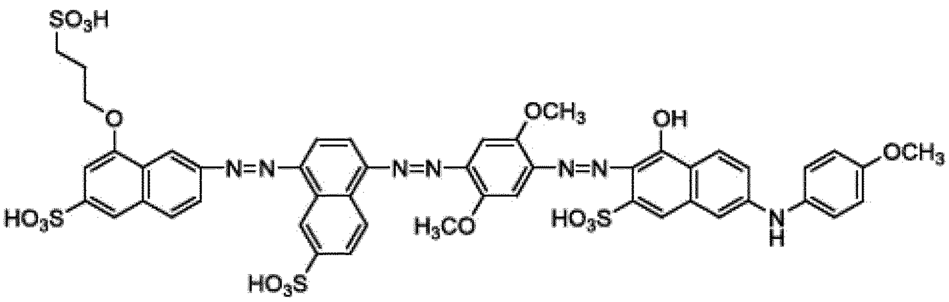

(1-H4)

[formula 167]

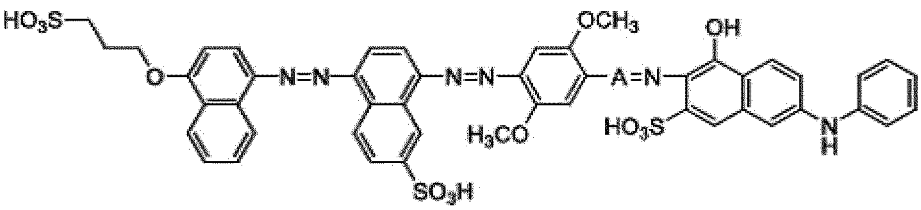

(1-H5)

[formula 168]

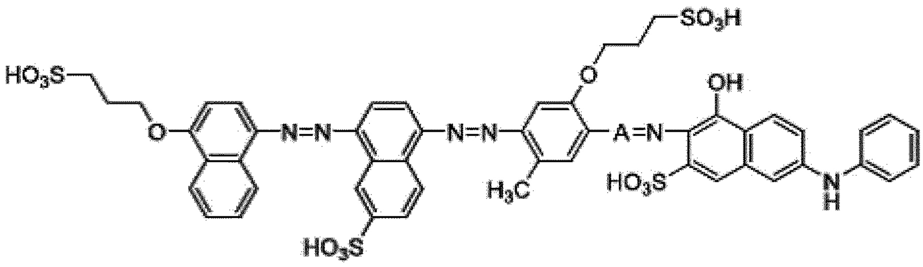

(1-H6)

[formula 169]

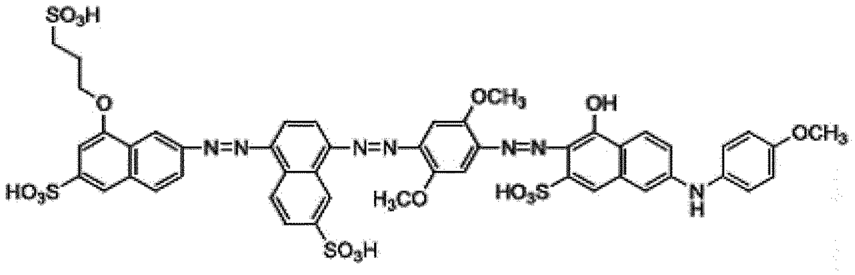

(1-H7)

[formula 170]

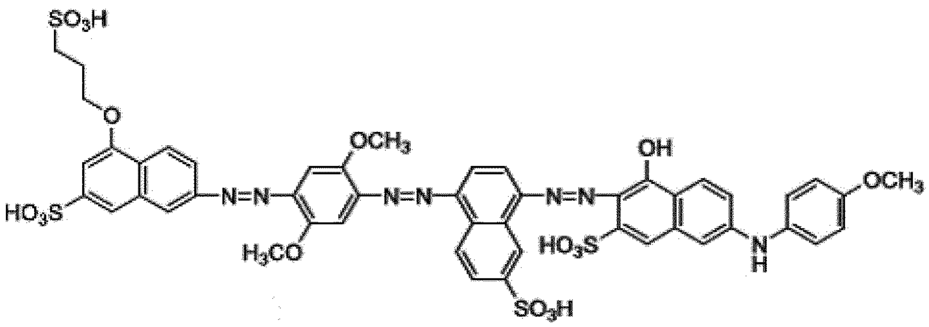

(1-H8)

[formula 171]

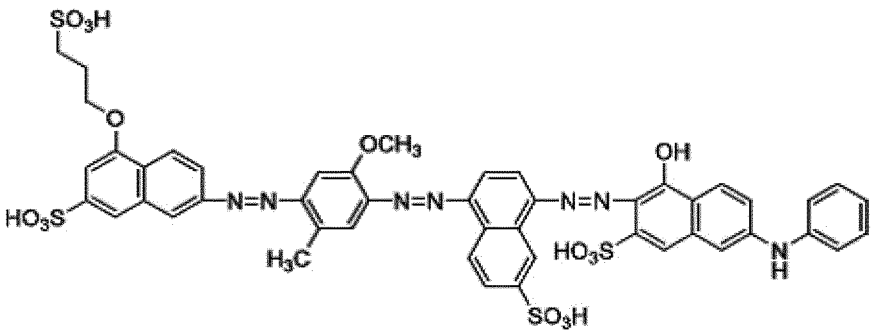

(1-H9)

[formula 172]

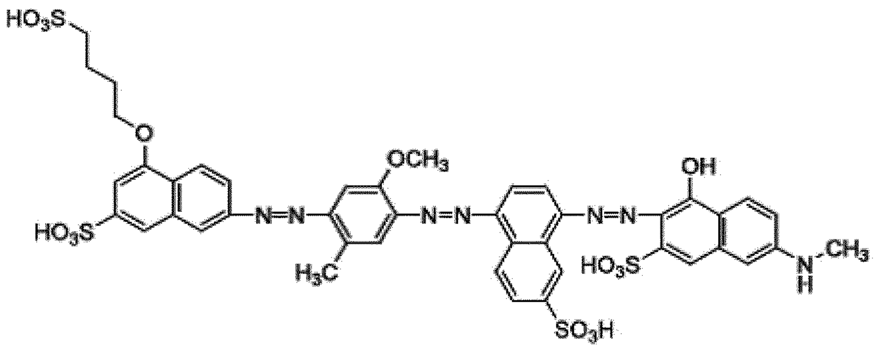

(1-H10)

[formula 173]

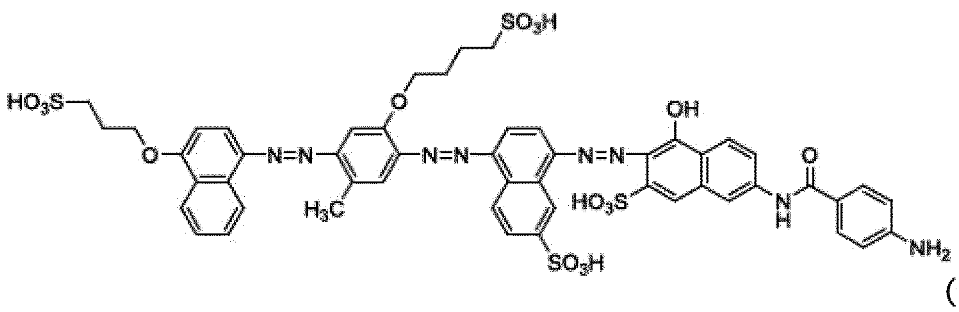

(1-H11)

[formula 174]

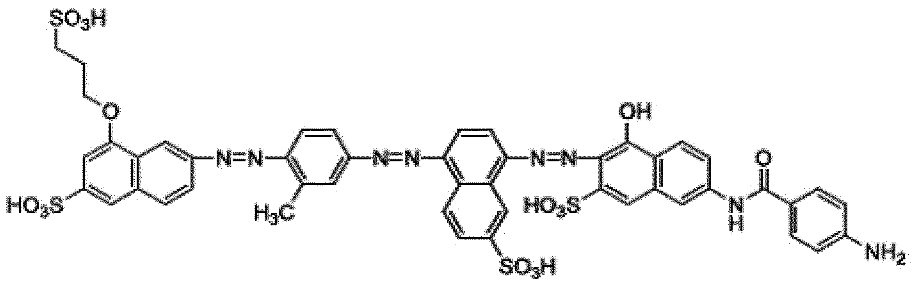

(1-H12)

[formula 175]

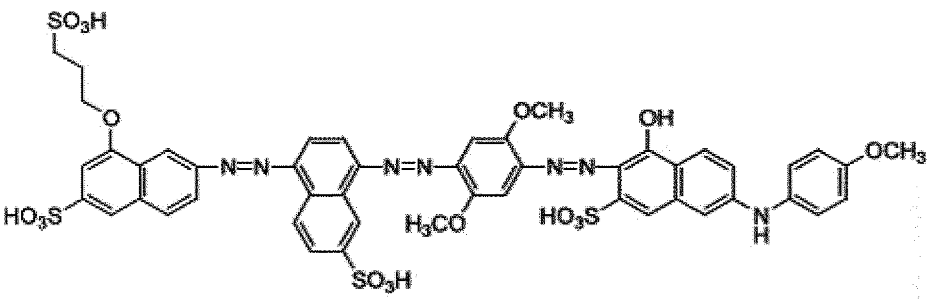

(1-H13)

[formula 176]

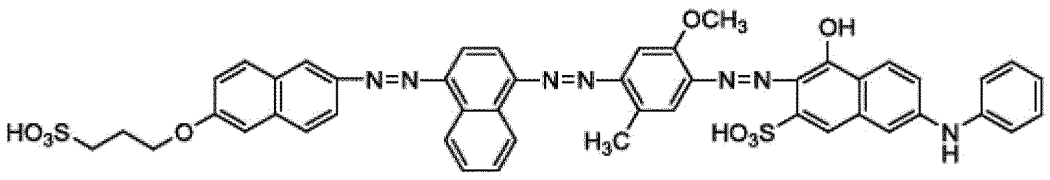

(1-H14)

[formula 177]

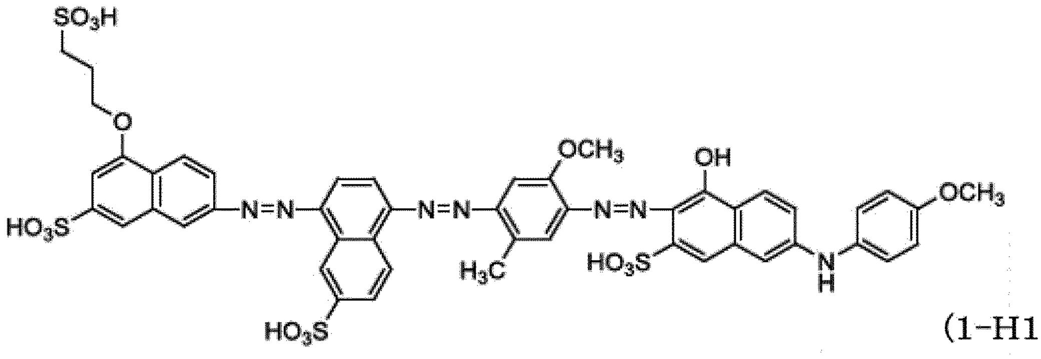

(1-H15)

An azo compound represented by formula (1) or a salt thereof can be easily produced by diazotization and coupling in accordance with the conventional production method of azo dyes as described in [Patent Document 3] and [Non Patent Document 1].

The production method is more specifically as follows.

An aniline or aminonaphthalene represented by formula (i) is diazotized and subjected to the primary coupling with an aminonaphthalene or an aniline represented by formula (ii) to obtain a monoazo amino compound represented by formula (iii). $Ag_1$ and Bg herein are the same as defined in formula (1).

[formula 178]

$$\mathbf{Ag_1\text{-}NH_2} \qquad \text{(i)}$$

[formula 179]

$$\mathbf{Bg\text{-}NH_2} \qquad \text{(ii)}$$

[formula 180]

$$\mathbf{Ag_i\text{-}N{=}N\text{-}Bg\text{-}NH_2} \qquad \text{(iii)}$$

Then, the monoazo amino compound represented by formula (iii) is diazotized and subjected to secondary coupling with an aniline or an aminonaphthalene represented by formula (iv) to obtain a disazoamino compound represented by formula (v). Cg herein is the same as defined in formula (1).

[formula 181]

$$\mathbf{Cg\text{-}NH_2} \qquad \text{(iv)}$$

[formula 182]

$$\mathbf{Ag_1\text{-}N{=}N\text{-}Bg\text{-}N{=}N\text{-}Cg\text{-}NH_2} \qquad \text{(v)}$$

The disazoamino compound represented by formula (v) is diazotized and subjected to tertiary coupling with a naphthol represented by formula (vi) to obtain an azo compound represented by formula (1). $Xg_1$ herein is the same as defined in formula (1).

[formula 183]

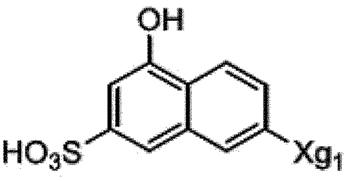

(vi)

In the above production method, the diazotization step is preferably carried out in the normal order by adding a nitrite such as sodium nitrite in an aqueous solution or a suspension solution of mineral acid (such as hydrochloric acid and sulfuric acid) of a diazo component or in the reverse order by adding a nitrite in an aqueous solution of neutral or weakly alkali containing a diazo component and then mixing with a mineral acid. The temperature of the diazotization is appropriately -10 to 40°C. The coupling step with an aniline is preferably carried out at a temperature of -10 to 40°C and in an acidic condition of pH2 to 7 by mixing an acidic aqueous solution such as hydrochloric acid and acetic acid and each of the diazo solutions as mentioned above.

A mono-azo compound represented by formula (iii) and a disazo compound represented by formula (v) obtained by coupling are directly filtered or precipitated with addition of an acid or a salt, followed by filtration and then taken out, or a solution or a suspension solution can be supplied as it is to the following step. If a diazonium salt is less soluble and present in a suspension solution, filtration is performed and the resultant press cake can be used in the next coupling step.

A tertiary coupling reaction between a diazotized product of a disazoamino compound represented by formula (v) and a naphthol represented by formula (vi) is preferably carried out at a temperature of -10 to 40°C in a neutral to alkaline condition of pH7 to 10. After completion of the reaction, the resultant azo compound represented by formula (1) or a salt thereof is taken out preferably by salting-out precipitation followed by filtration. If purification is required, salting out is repeatedly carried out or an organic solvent is added (used) and a precipitate is taken from water. Examples of the organic solvent to be used for purification include a water-soluble organic solvent such as an alcohol (e.g., methanol and ethanol) and a ketone (e.g., acetone).

Examples of the aniline (aminobenzene) compound represented by formula (i) and corresponding to formula (A-P) include 4-aminobenzenesulfonic acid, 3-aminobenzenesulfonic acid, 2-aminobenzenesulfonic acid, 4-aminobenzoic acid, 2-amino-5-methyl benzenesulfonic acid, 2-amino-5-ethylbenzenesulfonic acid, 2-amino-5-propylbenzenesulfonic acid, 2-amino-5-butylbenzenesulfonic acid, 4-amino-3-methyl benzenesulfonic acid, 4-amino-3-ethyl benzenesulfonic acid, 4-amino-3-propylbenzenesulfonic acid, 4-amino-3-butylbenzenesulfonic acid, 2-amino-5-methoxybenzenesulfonic acid, 2-amino-5-ethoxybenzenesulfonic acid, 2-amino-5-propoxybenzenesulfonic acid, 2-amino-5-butoxybenzenesulfonic acid, 4-amino-3-methoxybenzenesulfonic acid, 4-amino-3-ethoxybenzenesulfonic acid, 4-amino-3-propoxybenzenesulfonic acid, 4-amino-3-butoxybenzenesulfonic acid, 2-amino-4-sulfobenzoic acid, 2-amino-5-sulfobenzoic acid, 5-aminoisophthalic acid, 2-amino-5-chlorobenzenesulfonic acid, 2-amino-5-bromobenzenesulfonic acid, 2-amino-5-nitrobenzene sulfonic acid, 2,5-diaminobenzenesulfonic acid, 2-amino-5-dimethyl aminobenzenesulfonic acid, 2-amino-5-diethyl aminobenzenesulfonic acid, 5-acetamide-2-aminobenzenesulfonic acid, 4-aminobenzene-1,3-disulfonic acid and 2-aminobenzene-1,4-disulfonic acid. 4-Aminobenzenesulfonic acid, 2-amino-5-methoxybenzenesulfonic acid, 4-amino-2-methyl benzenesulfonic acid and 4-aminobenzene-1,3-disulfonic acid are preferable.

Examples of the aminonaphthalene compound represented by formula (i) and corresponding to formula (A-N1) include 6-aminonaphthalene-2-sulfonic acid, 5-aminonaphthalenesulfonic acid, 6-aminonaphthalenesulfonic acid, 7-aminonaphthalenesulfonic acid, 7-aminonaphthalene-3-sulfonic acid, 5-aminonaphthalene-2-sulfonic acid, 5-aminonaphthalene-3-sulfonic acid, 7-aminonaphthalene-1,3-disulfonic acid, 6-aminonaphthalene-1,3-disulfonic acid and 7-aminonaphthalene-1,5-disulfonic acid. Of them, 7-aminonaphthalene-3-sulfonic acid, 6-aminonaphthalene-1,3-disulfonic acid, and 7-aminonaphthalene-1,5-disulfonic acid are preferable. Examples of a compound substituted with a hydroxy group include 6-amino-1-hydroxynaphthalene-3-sulfonic acid and 7-amino-1-hydroxynaphthalene-3-sulfonic acid.

Examples of the aminonaphthalene compound represented by formula (i) and corresponding to formula (A-N2) include 1-aminonaphthalene-4-sulfonic acid, 2-aminonaphthalenesulfonic acid, 1-aminonaphthalene-3,6-disulfonic acid, 1-aminonaphthalene-4,8-disulfonic acid and 2-aminonaphthalene-4,8-disulfonic acid. If one of $R_{10}$ and $R_{11}$ is a sulfo group, the other is preferably a hydrogen atom or a hydroxy group. Examples thereof include 3-amino-5-hydroxynaphthalene-2,7-disulfonic acid and 1-amino-8-hydroxynaphthalene-3,6-disulfonic acid. Examples of a compound where both of $R_{10}$ and $R_{11}$ is a sulfo group include 3-aminonaphthalene-2,5,7-trisulfonic acid. Examples of the compound where $R_{10}$ is a hydroxy group and $R_{11}$ is a hydrogen atom include 1-amino-8-hydroxynaphthalene-4-sulfonic acid and 1-amino-8-hydroxynaphthalene-4,6-disulfonic acid.

Examples of the aminonaphthalene compound represented by formula (i) and corresponding to formula (A-N3) include 7-amino-4-(3-sulfopropoxy)naphthalene-2-sulfonic acid, 7-amino-4-(4-sulfobutoxy)naphthalene-2-sulfonic

acid, 6-amino-4-(3-sulfopropoxy)naphthalene-2-sulfonic acid, 6-amino-4-(4-sulfobutoxy)naphthalene-2-sulfonic acid, 3-amino-5-(3-sulfopropoxy)naphthalene-2,7-disulfonic acid, 3-amino-5-(4-sulfobutoxy)naphthalene-2,7-disulfonic acid, 6-amino-3-(3-sulfopropoxy)naphthalene-1-sulfonic acid, 6-amino-3-(4-sulfobutoxy)naphthalene-1-sulfonic acid, 6-amino-3-(4-sulfobutoxy)naphthalene-1-sulfonic acid and 6-amino-3-(3-sulfopropoxy)naphthalene-1-sulfonic acid.

Examples of the aminonaphthalenes represented by formula (ii) or formula (iv) and corresponding to (BC-N) formula or formula (BC-P) include 1-aminonaphthalene, 1-aminonaphthalene-6-sulfonic acid, 1-aminonaphthalene-7-sulfonic acid, 1-amino-2-methoxynaphthalene-6-sulfonic acid, 1-amino-2-methoxynaphthalene-7-sulfonic acid, 1-amino-2-ethoxynaphthalene-6-sulfonic acid and 1-amino-2-ethoxynaphthalene-7-sulfonic acid. Preferably, 1-aminonaphthalene-7-sulfonic acid and 1-amino-2-methoxynaphthalene-7-sulfonic acid are mentioned. In these aminonaphthalenes, an amino group may be protected.

The anilines represented by formula (ii) or formula (iv) and corresponding to formula (BC-N) or formula (BC-P) are divided into anilines having a lower alkoxy group having a sulfo group and the rest. Examples of the anilines having a lower alkoxy group having a sulfo group include 3-(2-amino-4-methylphenoxy)propane-1-sulfonic acid, 3-(2-aminophenoxy)propane-1-sulfonic acid and 3-(2-amino-4-methylphenoxy) butane-1-sulfonic acid. Examples of the rest of anilines include aniline, 2-methylaniline, 3-methylaniline, 2-ethylaniline, 3-ethylaniline, 2,5-dimethylaniline, 2,5-diethylaniline, 2-methoxyaniline, 3-methoxyaniline, 2-methoxy-5-methylaniline, 2,5-dimethoxyaniline, 3,5-dimethylaniline, 2,6-dimethylaniline and 3,5-dimethoxyaniline. In these anilines, an amino group may be protected. Examples of the protecting group include an ω-methanesulfonic group.

In a naphthol represented by formula (vi), $Xg_1$ serving as a tertiary coupling component is the same as defined in formula (1).

<Polarizing film (polarizing element)>

The azo compound or a salt thereof according to the present invention is useful as a dye for a polarizing film (a polarizing element). According to the azo compound or a salt thereof of the present invention, an azo compound or a salt thereof can be used for producing a high-performance dye-based polarizing plate having excellent polarization performance and moisture resistance/heat resistance/light resistance, and particularly, for realizing a neutral-gray high-performance dye-based polarizing plate low in color leakage in a visible-light wavelength region in the orthogonal arrangement. Thus, the azo compound or a salt thereof according to the present invention can be suitably used for producing a neutral-gray polarizing plate for use in display devices used in high temperature and high humidity conditions, such as in-car display devices or outdoor display devices.

Preferably, the polarizing film of the present invention contains an azo compound or a salt thereof as mentioned above and a polarizing-film base material (hereinafter referred to also as base material) to which the azo compound or a salt thereof is to be adsorbed. The base material is preferably a film or the like formed of a hydrophilic polymer capable of adsorbing a dichroic dye, particularly an azo compound. Examples of the hydrophilic polymer include, but are not particularly limited to, a polyvinyl alcohol resin, an amylose resin, a starch based resin, a cellulose resin and a polyacrylate resin. The hydrophilic polymer is most preferably a polyvinyl alcohol resin and a derivative thereof, in view of e.g., dyeability, processability and crosslinking property of a dichroic dye. A polarizing film can be produced by adsorption of an azo compound or a salt thereof on a base material and application of an alignment treatment such as stretching.

The polarizing film according to the present invention may contain an azo compound represented by formula (2) and a salt thereof in addition to an azo compound represented by formula (1) or a salt thereof. The polarizing film according to the present invention may contain an azo compound represented by formula (3) or a salt thereof in addition to an azo compound represented by formula (1) or a salt thereof. The present invention may contain both an azo compound represented by formula (2) and a salt thereof and an azo compound represented by formula (3) or a salt thereof.

An azo compound represented by formula (2) will be described.

[formula 184]

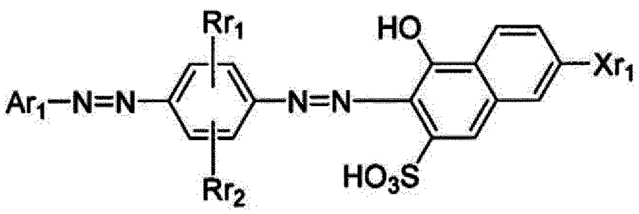

(2)

In formula (2), $Ar_1$ represents a phenyl group having a substituent or a naphthyl group having a substituent.

If $Ar_1$ is a phenyl group, the phenyl group preferably has at least one sulfo group or carboxy group as a

substituent. If a phenyl group has two or more substituents, preferably, at least one of the substituents is a sulfo group or a carboxy group; whereas, the rest is a sulfo group, a carboxy group, a lower alkyl group, a lower alkoxy group, a lower alkoxy group having a sulfo group, a nitro group, an amino group, an acetylamino group, a lower alkylamino group or a substituted amino group. More preferably, as the rest of substituents, a sulfo group, a methyl group, an ethyl group, a methoxy group, an ethoxy group, a carboxy group, a nitro group or an acetylamino group is mentioned, and particularly preferably, a sulfo group, a methyl group, a methoxy group, an ethoxy group or a carboxy group is mentioned. As the lower alkoxy group having a sulfo group, linear alkoxy is preferable. The substitution position by a sulfo group is preferably an end of an alkoxy group, more preferably a 3-sulfopropoxy group and a 4-sulfobutoxy group, and particularly preferably a 3-sulfopropoxy group. The number of sulfo groups that a phenyl group has is preferably 1 or 2. The substitution position thereof is not particularly limited; however, the 2-position alone, 4-position alone, a combination of the 2-position and 4-position and a combination of the 3-position and 5-position are preferable.

If $Ar_1$ is a naphthyl group having a substituent, the naphthyl group preferably has at least one sulfo group as the substituent. If the naphthyl group has two or more substituents, preferably, at least one of the substituents is a sulfo group; whereas, the rest is a sulfo group, a hydroxy group, a carboxy group or a lower alkoxy group having a sulfo group. As the lower alkoxy group having a sulfo group, linear alkoxy is preferable. The substitution position by a sulfo group is preferably an end of an alkoxy group, more preferably a 3-sulfopropoxy group and a 4-sulfobutoxy group, and particularly preferably a 3-sulfopropoxy group. If the number of sulfo groups is 2, the positions of the sulfo groups on a naphthyl group are preferably a combination of the 5,7-positions, a combination of the 6,8-positions. The combination of the 6,8-positions is more preferable. If the number of sulfo groups that a naphthyl group has is 3, the substitution positions by the sulfo groups are particularly preferably the 3,6,8-positions.

$Rr_1$ and $Rr_2$ each independently represent a hydrogen atom, a lower alkyl group, a lower alkoxy group or a lower alkoxy group having a sulfo group. $Rr_1$ and $Rr_2$ each independently represent preferably a hydrogen atom, a lower alkyl group or a lower alkoxy group, and more preferably a hydrogen atom, methyl group or methoxy group. As the lower alkoxy group having a sulfo group, a linear alkoxy group is preferable. The substitution position by a sulfo group is preferably an end of an alkoxy group, more preferably a 3-sulfopropoxy group and a 4-sulfobutoxy group, and particularly preferably a 3-sulfopropoxy group. The substitution position by $Rr_1$ or $Rr_2$ is the 2-position alone, the 5-position alone, the 2-position and 5-position, 3-position and 5-position, and the 2-position and 6-position except the case where $Rr_1$ and $Rr_2$ are each a hydrogen atom, preferably, the 2-position alone, the 5-position alone, the 2-position and 5-position and 3-position and 5-position, more preferably the 2-position alone, the 5-position alone, the 2-position and 5-position.

$Xr_1$ represents an amino group which may have a substituent, a phenylamino group which may have a substituent, a phenylazo group which may have a substituent or a benzoylamino group which may have a substituent, and preferably a phenylamino group which may have a substituent. The amino group which may have a substituent is preferably an amino group having one or two substituents selected from the group consisting of a hydrogen atom, a lower alkyl group, a lower alkoxy group, a sulfo group, an amino group and a lower alkylamino group, and more preferably, an amino group having one or two substituents selected from the group consisting of a hydrogen atom, a methyl group, an ethyl group, a methoxy group, an ethoxy group, an amino group and a lower alkylamino group. The phenylamino group which may have a substituent is preferably a phenylamino group having one or two substituents selected from the group consisting of a hydrogen atom, a lower alkyl group, a lower alkoxy group, a sulfo group, an amino group and a lower alkylamino group, and more preferably, a phenylamino group having one or two substituents selected from the group consisting of a hydrogen atom, a methyl group, a methoxy group, a sulfo group and an amino group. The benzoylamino group which may have a substituent is preferably a benzoylamino group having one selected from the group consisting of a hydrogen atom, a hydroxy group, an amino group and a carboxyethylamino group. The phenylazo group which may have a substituent is preferably a phenylazo group having one to three selected from the group consisting of a hydrogen atom, a hydroxy group, an alkyl group having 1 to 4 carbon atoms, an alkoxy group having 1 to 4 carbon atoms, an amino group and a carboxyethylamino group. $Xr_1$ is preferably a benzoylamino group which may have a substituent and a phenylamino group which may have a substituent, and more preferably, a phenylamino group. The position of a substituent is not particularly limited; however, one of the substituents is particularly preferably positioned at the p-position. For example, in the case of a phenylamino group, a substituent is preferably present at the p-position relative to the amino group.

Examples of the azo compound represented by formula (2) include C. I. Direct Red 81, C. I. Direct Red 117, C. I. Direct Violet 9 and C. I. Drect Red 127 and azo compounds described in e.g., Patent Documents 9 to 11.

Examples of the azo compound represented by formula (2) will be described below in the form of a free acid.

[formula 185]

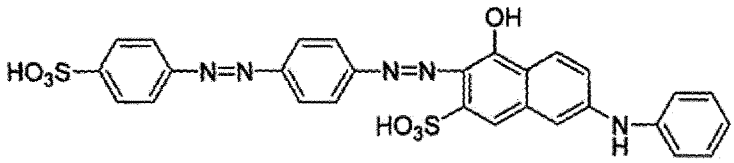

(2-1)

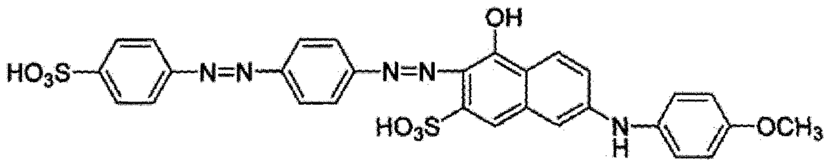

(2-2)

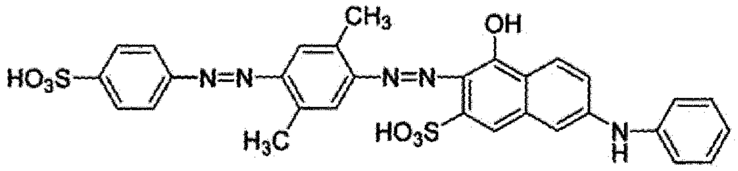

(2-3)

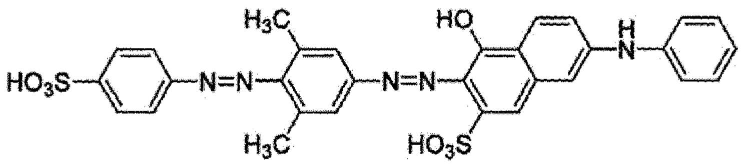

(2-4)

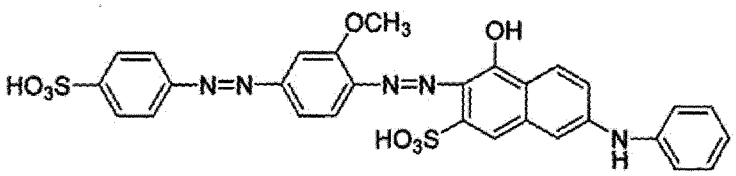

(2-5)

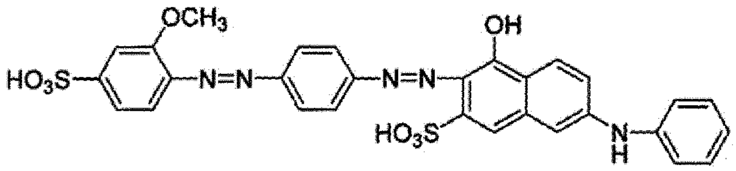

(2-6)

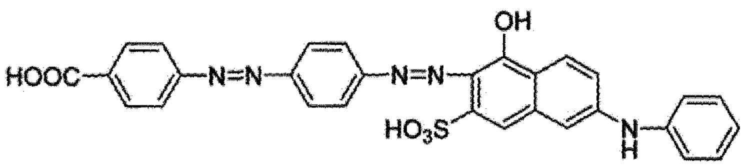

(2-7)

[formula 186]

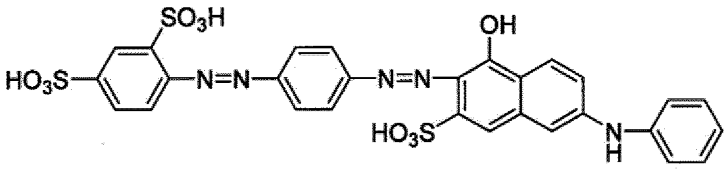

(2-8)

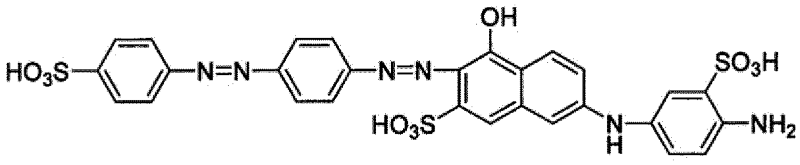

(2-9)

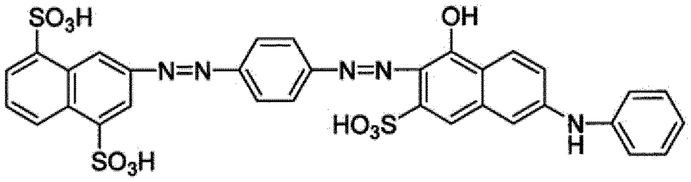

(2-10)

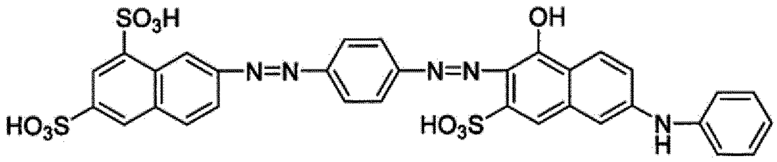

(2-11)

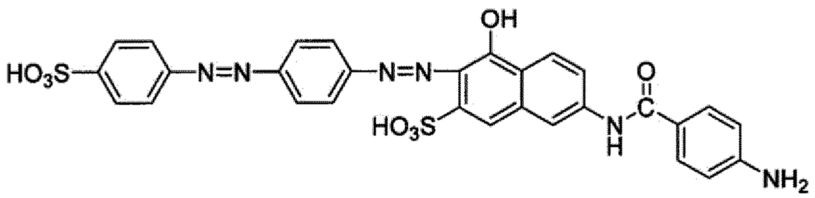

(2-12)

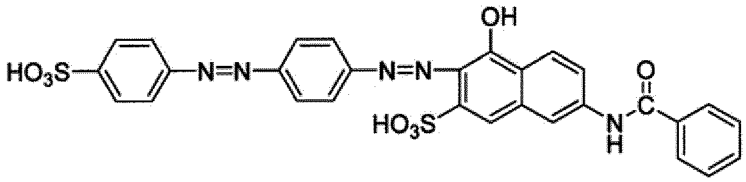

(2-13)

[formula 187]

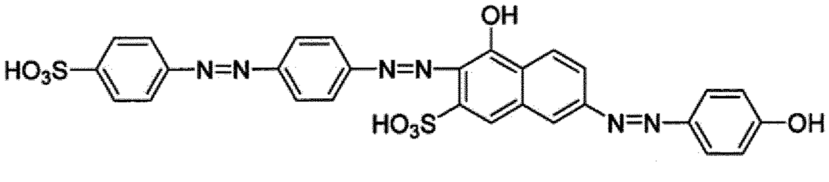

(2-14)

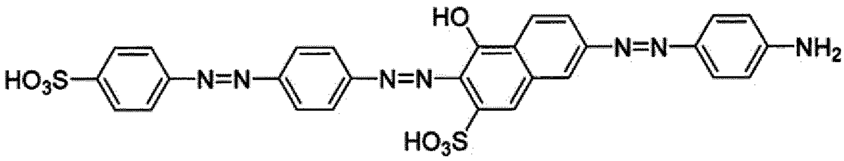

(2-15)

[formula 188]

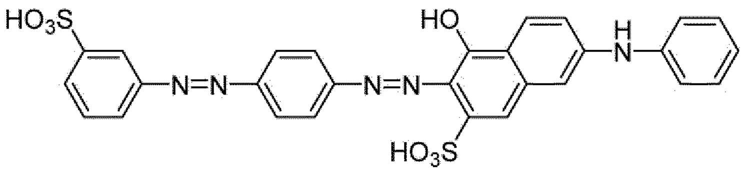

(2-16)

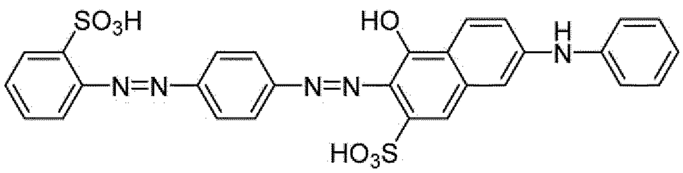

(2-17)

Examples of a method for obtaining the azo compound represented by formula (2) include, but are not limited to, the methods described in e.g., Patent Documents 9 to 11.

In the polarizing film of the present invention containing an azo compound represented by formula (BC-N) and a salt thereof, the content of an azo compound represented by formula (2) and a salt thereof is preferably 0.01 to 1000 parts by mass, and more preferably 0.02 to 500 parts by mass relative to 100 parts by mass of the azo compound represented by formula (1).

In the present invention, if an azo compound represented by formula (1) or a salt thereof is used in combination with an azo compound represented by formula (2) and a salt thereof, a compound represented by formula (1) and known in the art can be used. Examples of the azo compound represented by formula (1) or a salt thereof include azo compounds of C. I. Direct Blue 34, C. I. Direct Blue 69, C. I. Direct Blue 70, C. I. Direct Blue 71, C. I. Direct Blue 72, C. I. Direct Blue 75, C. I. Direct Blue 78, C. I. Direct Blue 81, C. I. Direct Blue 82, C. I. Direct Blue 83, C. I. Direct Blue 186, C. I. Direct Blue 258, Benzo Fast Chrome Blue FG (C. I. 34225), Benzo Fast Blue BN (C. I. 34120) and C. I. Direct Green 51.

The polarizing film of the present invention, since it contains an azo compound represented by formula (1) and an azo compound represented by formula (2) in combination, has higher transmittance and higher polarization degree than a conventional achromatic polarizing plate; at the same time, it can realize white, like high-quality paper, commonly called paper white, in the white display time and achromatic black, in particular, high-quality and distinctive black, in the black display time.

It is preferable that the polarizing film of the present invention contains an azo compound represented by formula (3) in addition to an azo compound represented by formula (1) for further improvement of the performance. It is also preferable that an azo compound represented by formula (3) is further contained in addition to the combination of an azo compound represented by formula (1) and an azo compound represented by formula (2), in view of performance.

[formula 189]

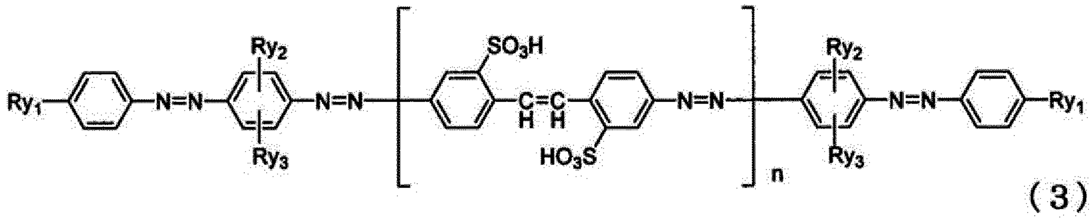

(3)

In formula (3), $Ry_1$ represents a sulfo group, a carboxy group, a lower alkyl group, a lower alkoxy group or a hydroxy group, preferably a sulfo group, a hydroxy group, a methoxy group, an ethoxy group or a carboxy group, and further preferably a sulfo group or a carboxy group. $Ry_2$ or $Ry_3$ each independently represent a hydrogen atom, a sulfo group, a lower alkyl group, a lower alkoxy group or a lower alkoxy group having a sulfo group, preferably a hydrogen atom, a sulfo group, a methyl group, a methoxy group, a 3-sulfopropoxy group or a 4-sulfobutoxy group, and particularly preferably, a hydrogen atom. Reference symbol n represents an integer of 1 to 3.

If the polarizing film of the present invention contains both an azo compound represented by formula (2) and a salt thereof and an azo compound represented by formula (3) or a salt thereof, the content of the azo compound represented by formula (3) or a salt thereof relative to the content (100 parts by mass) of the azo compound represented by formula (2) and a salt thereof is preferably 0.01 to 300 parts by mass, and more preferably 0.1 to 200 parts by mass. Formula (3) can be used in an amount of satisfactorily 0.01 to 500 parts by mass, preferably 0.05 to 300 parts by mass, and particularly preferably 0.1 to 200 parts by mass relative to the content (100 parts by mass) of formula (1).

In the polarizing film of the present invention, it is preferable that the blending ratio of aforementioned azo compounds satisfying the above contents thereof is further controlled such that transmittance and chromaticity fall within the preferable ranges (described later). The performance of a polarizing film changes depending on not only the blending ratio of individual azo compounds but also various factors such as swelling degree, stretch ratio of a base material adsorbing an azo compound, staining time, staining temperature, pH during staining and the influence of a salt. Because of this, the blending ratio of individual azo compounds can be determined depending on the swelling degree of a base material, the temperature, time, pH, the type and concentration of a salt during staining as well as the stretch ratio. Such a compounding ratio can be determined by those skilled in the art based on the later description without trials and errors.

An azo compound represented by formula (3) influences the transmittance of 400 to 500 nm. In the polarizing film, particularly, transmittance and polarization degree (dichroism) on the short wavelength side of 400 to 500 nm influence leak of blue in the black display time and white tinted with yellow in the white display time. An azo compound represented by formula (3) can suppress deterioration of transmittance of light on a short-wavelength side in the parallel arrangement of the polarizing film, improve polarization characteristics (dichroism) at 400 to 500 nm and further decrease tinting with yellow in the white display time and leak of blue in the black display time. If an azo compound represented by formula (3) is further added, the polarizing film has a further neutral color phase within the range of a single-plate transmittance of 35 to 65%, exhibits white, like high-quality paper, in the white display time and acquires a further improved polarization degree.

An azo compound represented by formula (3) or a salt thereof can be synthesized in accordance with the method described, for example, in WO2007/138980; however, a commercially supplied one is available.

Examples of an azo compound represented by formula (3) include, but are not limited to, C. I. Direct Yellow 4, C. I. Direct Yellow 12, C. I. Direct Yellow 72 and C. I. Direct Orange 39 and an azo compound having a stilbene structure described in e.g., WO2007/138980.

Examples of an azo compound represented by formula (3) will be further described below. Note that, the compounds will be shown in the form of a free acid and reference symbol n in formula (3-2) represents an integer of 1 to 3.

[formula 190]

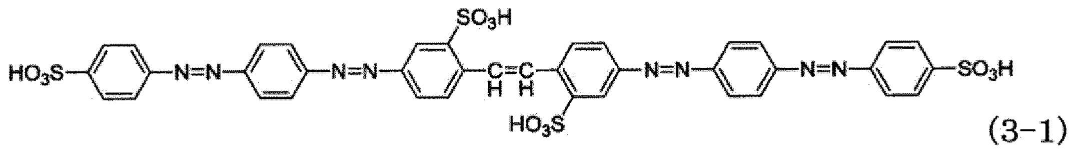

(3-1)

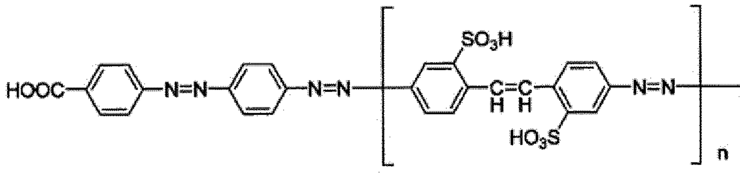

(3-2)

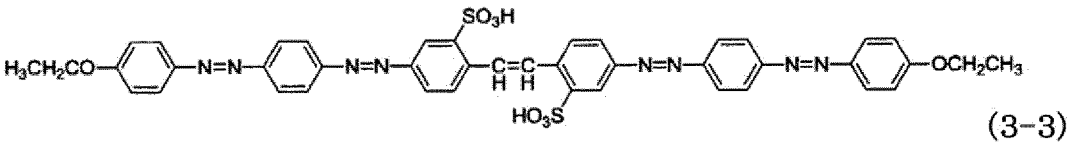

(3-3)

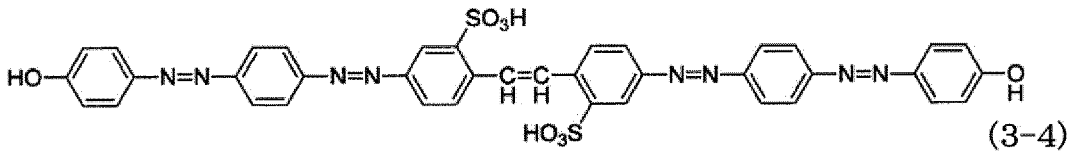

(3-4)

The polarizing film of the present invention, since it contains an azo compound represented by formula (2) and/or an azo compound represented by formula (3) in addition to an azo compound represented by formula (1), has a high transmittance and a high polarization degree; at the same time, it can realize further higher-quality paper white in the white display time and further high-quality and distinctive black in the black display time.

An azo compound represented by formula (1), an azo compound represented by formula (2) and an azo compound represented by formula (3) may be present in the free form or a salt. As the salt, an alkali metal salt such as a lithium salt, a sodium salt and a potassium salt; or an organic salt such as an ammonium salt and an alkyl amine salt may be mentioned. The salt is preferably a sodium salt.

The polarizing film according to the present invention successfully has chromaticity: a* value and b* value within preferable ranges (described later) and performance such as single-plate transmittance and an average transmittance in a specific wavelength range.

The polarizing film of the present invention is a dye-based polarizing film containing a dichroic pigment, which contains at least an azo compound represented by formula (1) or a salt thereof, and a polarizing-film base material. The polarizing film of the present invention may be either a color polarizing film or a neutral gray polarizing film, and preferably a neutral gray polarizing film. The term "neutral gray" herein means that light leakage (color leakage) of a specific wavelength within a visible-light wavelength region is low when two polarizing films are stacked such that the orientation directions thereof are crossed at right angles.

The polarizing film of the present invention contains a single or a plurality of azo compounds represented by formula (1) or salts thereof as a dichroic pigment and may further contain one or more organic dyes other than the dichroic pigment, as necessary. The organic dye(s) to be used in combination is not particularly limited; however, the organic dye preferably has characteristic absorption in a wavelength region different from the absorption wavelength region of an azo compound represented by formula (1) or a salt thereof, and has high dichroism. Typical examples of the organic dye(s) to be used in combination include C. I. Direct Yellow 28, C. I. Direct Yellow 44, C. I. Direct Orange 26, C. I. Direct Orange 71, C. I. Direct Orange 107, C. I. Direct Red 2, C. I. Direct Red 31, C. I. Direct Red 79, C. I. Direct Red 247, C. I. Direct Green 80 and C. I. Direct Red 59 and dyes described in Patent Documents 1 to 5. As described above, an azo compound represented by formula (2) or a salt thereof and/or an azo compound represented by formula (3) or a salt thereof may be further contained. These pigments may be added to a polarizing film as a free acid or an alkali metal salt (for example, Na salt, K salt, Li salt), an ammonium salt or an amine salt.

If an organic dye other than the dichroic pigment is used in combination, the type of organic dye varies depending on the type of polarizing film, i.e., depending on whether a desired polarizing film is a neutral gray polarizing film, a color

polarizing film for a liquid crystal projector or a color polarizing film for another application. The blending ratio of the organic dye is not particularly limited; however, the content of a single organic dye or the total content of a plurality of organic dyes based on the content (100 parts by mass) of the azo compound represented by formula (1) or a salt thereof preferably falls within the range of 0.01 to 5000 parts by mass, more preferably 0.1 to 3000 parts by mass, and particularly preferably 1 to 1000 parts by mass.

In the case of a neutral gray polarizing film, the type and blending ratio of organic dye other than the dichroic pigment to be used in combination are controlled such that color leakage within a visible-light wavelength region from the resultant polarizing film is low.

In the case of a color polarizing film, the type and blending ratio of organic dye other than the dichroic pigment to be used in combination are controlled such that the resultant polarizing film has a high average single-plate light transmittance within a predetermined wavelength region and a low average orthogonal arrangement light transmittance, for example, an average single-plate light transmittance of 39% or more in the predetermined wavelength region and an average orthogonal arrangement light transmittance of 0.4 or less.

Color polarizing films or a neutral gray polarizing film can be produced by adding a dichroic pigment containing at least an azo compound represented by formula (1) or a salt thereof and further another organic dye as necessary to a polarizing-film base material (for example, polymer film) in accordance with a method known in the art and aligning the pigment, e.g., alignment by mixing with a liquid crystal or by a coating method.

The polarizing-film base material is preferably a polymer film, more specifically, a film formed from a hydrophilic polymer that can absorb a dichroic pigment, particularly an azo compound. Examples of the hydrophilic polymer include, but are not particularly limited to, a polyvinyl alcohol resin, an amylose resin, a starch based resin, a cellulose resin and a polyacrylate resin. The hydrophilic polymer is more preferably a film comprising a polyvinyl alcohol resin or a derivative thereof in view of, e.g., dyeability, processability and crosslinking property of a dichroic pigment. Examples of the polarizing-film base material include a polyvinyl alcohol or a derivative thereof and a polyvinyl alcohol or a derivative thereof modified with an olefin such as ethylene and propylene or an unsaturated carboxylic acid such as crotonic acid, acrylic acid, methacrylic acid and maleic acid. As the polarizing-film base material, a film formed of a polyvinyl alcohol or a derivative thereof is preferably used in view of dye adsorptive property and orientation. The thickness of the polarizing-film base material is usually 10 to 100 $\mu$m and preferably about 25 to 80 $\mu$m.

If the polarizing-film base material is a polymer film, in adding a dichroic pigment as an azo compound represented by formula (1) or a salt thereof to the film, usually a method of staining a polymer film can be employed. Staining can be performed, for example, as follows. First, an azo compound of the present invention or a salt thereof and an organic dye other than the azo compound or a salt thereof as necessary, are dissolved in water to prepare a dyebath. The concentration of the dye(s) in the dyebath is not particularly limited; however, the concentration is usually selected from the range of about 0.001 to 10 mass%. If necessary, a dyeing aid may be used, for example, sodium sulfate is preferably used in a concentration of about 0.1 to 10 mass%. In the dyebath thus prepared, a polymer film is soaked for, for example, 1 to 10 minutes to stain the polymer film. The staining temperature preferably falls within the range of about 25 to 80°C, and particularly preferably about 35 to 50°C.

Dichroic pigment containing an azo compound represented by formula (1) or a salt thereof is aligned by stretching the polymer film stained. As the stretching method, for example, a method known in the art such as a wet process and a dry process can be used. The stretch ratio is usually 2 to 8 fold, preferably 3 to 7 fold and more preferably 4 to 6.5 fold. The stretching of the polymer film may be carried out before staining. In this case, alignment of a water-soluble dye is carried out in a staining process. To the polymer film containing a water-soluble dye and aligned, if necessary, a post treatment, such as a treatment with boric acid, is applied in accordance with a method known in the art. Such a post treatment is carried out for improving the light transmittance and polarization degree of a polarizing film. The conditions of the boric acid treatment vary depending on the type of polymer film and the type of dye to be used. A boric acid concentration of an aqueous boric acid solution is generally set to fall within the range of 0.1 to 15 mass% and preferably 1 to 10 mass%. The treatment is carried out at a temperature within the range of, for example, 30 to 80°C and preferably 40 to 75°C by soaking the polymer film in the aqueous boric acid solution for, e.g., 0.5 to 10 minutes. Simultaneously with the treatment, if necessary, a fixation treatment may be carried out in an aqueous solution containing a cationic polymer compound.

(Transmittance)

Transmittance herein refers to transmittance corrected based on the luminosity factor in accordance with JIS Z 8722:2009. Transmittance can be obtained by measuring spectral transmittances of a measurement sample (for example, a polarizing film or a polarizing plate) at individual wavelengths at intervals of 5 nm or 10 nm within the range of 400 to 700 nm and correcting the spectral transmittances based on the luminosity factor in a 2-degree viewing field (C light source).

(I) Difference in average transmittance between two wavelength ranges

The polarizing film of the present invention preferably has a difference in average transmittance between predetermined wavelength ranges within a predetermined value or less. The average transmittance refers to an average value of transmittance within the predetermined wavelength range.

Wavelength ranges of 420 nm to 480 nm, 520 nm to 590 nm and 600 nm to 640 nm are main wavelength ranges based on the color-matching function to be used in calculation in JIS Z 8781-4:2013 for indicating color. Specifically, in the XYZ color matching function of JIS Z 8701, on which JIS Z 8781-4:2013 is based, when the maximum value of x(λ) is specified as 600 nm, the maximum value of y(λ) is specified as 550 nm, and the maximum value of z(λ) is specified as 455 nm, and the maximum value of each of them is specified as 100, each wavelength giving a value of 20 or more is wavelength ranges of 420 nm to 480 nm, 520 nm to 590 nm, and 600 nm to 640 nm, respectively.

In the polarizing film of the present invention, when transmittance (hereinafter referred to also as "parallel transmittance") is measured through two polarizing films stacked such that absorption axes thereof become in parallel (in the light display time or in the white display time), an absolute value of a difference in the average transmittance between the range of 420 nm to 480 nm and the range of 520 nm to 590 nm is preferably 2.5% or less, more preferably 1.8% or less, further preferably 1.5% or less, and particularly preferably, 1.0% or less. Further, the absolute value of a difference in the average parallel transmittance between the range of 520 nm to 590 nm and the range of 600 nm to 640 nm is preferably 2.0% or less, more preferably 1.5% or less, and further preferably 1.0% or less. Such a polarizing film can display white, like high-quality paper, in the parallel arrangement.

In the polarizing film of the present invention, when transmittance (hereinafter referred to also as "orthogonal transmittance") is measured through two polarizing films stacked such that absorption axes thereof become in orthogonal (in the black display time or in dark display time), an absolute value of a difference in the average transmittance between the range of 420 nm to 480 nm and the range of 520 nm to 590 nm, is preferably 0.3% or less; and the absolute value of a difference in the average transmittance between the range of 520 nm to 590 nm and the range of 600 nm to 640 nm is preferably 0.6% or less. Such polarizing films can display achromatic black in the orthogonal arrangement. Regarding to the transmittance in the orthogonal arrangement, the absolute value of a difference in the average transmittance between the range of 420 nm to 480 nm and the range of 520 nm to 590 nm is more preferably 0.2% or less and further preferably 0.1% or less. Regarding to the transmittance in the orthogonal arrangement, the absolute value of a difference in average transmittance between the range of 520 nm to 590 nm and the range of 600 nm to 640 nm is more preferably 0.2% or less, and further preferably 0.1% or less.

An average transmittance of each of the single-plate transmittance, parallel transmittance and orthogonal transmittance in each of the wavelength ranges 380 nm to 420 nm, 480 nm to 520 nm and 640 nm to 780 nm, if average transmittances of the above wavelength ranges, i.e., 420 nm to 480 nm, 520 nm to 590 nm and 600 nm to 640 nm, are controlled as mentioned above, is rarely significantly affected by a pigment but preferably controlled to some extent. The difference in the average transmittance between the range of 380 nm to 420 nm and the range of 420 nm to 480 nm is preferably 15% or less. It is preferable that the difference in the average transmittance between the range of 480 nm to 520 nm and the range of 420 nm to 480 nm is 15% or less; the difference in the average transmittance between the range of 480 nm to 520 nm and the range of 520 nm to 590 nm is 15% or less; and the difference in the average transmittance between the range of 640 nm to 780 nm and the range of 600 nm to 640 nm is 20% or less.

(II) Single-plate transmittance

The polarizing film according to the present invention preferably has a single-plate transmittance of 35% to 65%. The single-plate transmittance refers to a transmittance of a single measurement sample (for example, a polarizing film or a polarizing plate) corrected based on the luminosity factor according to JIS Z 8722:2009. As the performance of a polarizing plate, high transmittance is required; however, if a single-plate transmittance is 35% to 60%, natural brightness can be obtained even if such a plate is used in a display device. As the transmittance increases, the polarization degree tends to decrease. In view of balance with the polarization degree, the single-plate transmittance is more preferably 37% to 50%, and further preferably 38% to 45%. If the single-plate transmittance exceeds 65%, the polarization degree sometimes decreases; however, in order to obtain bright transmittance of a polarizing film or a specific polarization performance and contrast, the single-plate transmittance may exceed 65%.

(III) Average transmittance in specific wavelength range

The average transmittance of the polarizing film measured in the parallel arrangement in a wavelength range of 520 nm to 590 nm is for example, 25% to 50%, and preferably 28% to 50%. If a display device employs such a polarizing film, a clear, bright and high luminance display device can be obtained. The transmittance of the wavelength range of 520 nm to 590 nm is one of the major wavelength ranges employed in the color function used in calculation for

obtaining a color based on JIS Z 8781-4:2013. Particularly, the wavelength range of 520 nm to 590 nm is the wavelength range where luminosity factor is the highest based on the color function and the transmittance within this range is close to the transmittance visually confirmed. Because of this, it is very important to control the transmittance in the wavelength range of 520 nm to 590 nm. The average transmittance measured in the parallel arrangement in a wavelength range of 520 nm to 590 nm is more preferably 29% to 50% and further preferably 30% to 40%. The polarization degree of the polarizing film at this time is preferably 80% to 100%, more preferably 95% to 100%, and further preferably 99% to 100%. The higher the polarization degree, the more preferable. In consideration of the relationship between the polarization degree and transmittance, more specifically, depending on which one of brightness and polarization degree (or contrast) is emphasized, the transmittance and polarization degree can be appropriately controlled.

The average single-plate light transmittance refers to the average light transmittance of a single polarizing plate (hereinafter, when simply referred to as a polarizing plate, it is used for the same meaning), to which none of a polarizing film, AR (antireflection) layer and a support such as a transparent glass plate are provided, in a specific wavelength region when natural light is applied. The average light transmittance in the orthogonal arrangement refers to the average of light transmittance of two polarizing films or polarizing plates arranged such that the orientation directions thereof are crossed at right angles, in a specific wavelength region when natural light is applied.

(Chromaticity a* value and b* value)

Chromaticity a* value and b* value are values obtained when the transmittance of natural light is measured in accordance with JIS Z 8781-4:2013. A chromatic display method determined in JIS Z 8781-4:2013 is equivalent to the chromatic display method determined in the International Commission on Illumination (abbreviated as CIE). Chromaticity a* value and b* value are determined by applying natural light to a measurement sample (for example, a polarizing film or a polarizing plate). Note that, in the following, chromaticity a* value and b* value of a single measurement sample is expressed as a*-s and b*-s; chromaticity a* value and b* value of two measurement samples arranged such that the absorption axes thereof are mutually in parallel (in the white display time) are expressed as a*-p and b*-p; and chromaticity a* value and b* value of two measurement samples arranged such that the absorption axes thereof are mutually in orthogonal (in the black display time) are expressed as a*-c and b*-c.

According to an embodiment of the present invention, in the polarizing film of the present invention, it is preferable that an absolute value of each of a*-s and b*-s is 1.0 or less and an absolute value of each of a*-p and b*-p is 2.0 or less. Such a polarizing film exhibits neutral color when it is used alone and can exhibit high-definition white in the white display time. Absolute values of a*-p and b*-p of the polarizing film are more preferably 1.5 or less and further preferably 1.0 or less. Further, an absolute value of each of a*-c and b*-c of the polarizing film is preferably 2.0 or less, and more preferably 1.0 or less. Such a polarizing film exhibits achromatic black in the black display time.

Even if chromaticity a* value and b* value (absolute value) differs only by 0.5, difference in color is perceived by a person and some persons perceive a color difference significantly. Because of this, it is very important to control these values of a polarizing film. Particularly, if each of a*-p, b*-p, a*-c and b*-c values (absolute values) is 1.0 or less, it is possible to obtain a satisfactory polarizing plate exhibiting white in the white display time and black in the black display time without perceiving contamination with a color. In the parallel arrangement, an achromatic color, in other words, white like high-quality paper, can be realized, and in the orthogonal arrangement, an achromatic, high quality and distinctive black can be realized.

In an embodiment of the present invention, the polarizing film of the present invention has high contrast and high transmittance and, in addition, has achromatism and high polarization degree when it is used alone. Furthermore, the polarizing film of the present invention can exhibit white, like high-quality paper, (paper white), in the white display time and an achromatic color, black, in particular, high-quality and distinctive black, in the black display time. Up to present, such a polarizing film having not only high transmittance but also achromatism has not been obtained. The polarizing film of the present invention further has high durability, particularly durability to high temperature and high humidity.

In an embodiment of the present invention, the polarizing film of the present invention absorbs a lower amount of light having a wavelength of 700 nm or more compared to an iodine-based polarizing plate generally used and that disclosed in Patent Document 3. Because of this, the polarizing film of the present invention has an advantage in that heat generation is low even if light such as sun light is applied. For example, when a liquid crystal display is used, for example, outside, sun light is applied to the liquid crystal display, with the result that a polarizing film is irradiated. Sun light contains light having a wavelength of 700 nm or more and near infrared ray having an exothermic effect. A polarizing film using an azo compound described, for example, in Patent Document 12, Example 3 absorbs near infrared ray of a wavelength near 700 nm, and slightly generates heat; however, the polarizing film of the present invention, since it absorbs an extremely small amount of near infrared ray, generates only a small amount of heat when it is exposed to sun light outside. Generation of a small amount of heat means that deterioration of the polarizing film is low. In this respect, the polarizing film of the present invention is excellent.

Now, a method for producing a polarizing film will be more specifically described below by taking a case of producing a polarizing film by adsorption of an azo compound on a base material made of a polyvinyl alcohol resin, as an example. Note that, the method for producing the polarizing film according to the present invention is not limited to the following process.

(Preparation of base film)

The base film can be produced by forming a polyvinyl alcohol resin into a film. The polyvinyl alcohol resin is not particularly limited and a commercially available one may be used or the polyvinyl alcohol resin may be synthesized by a method known in the art. The polyvinyl alcohol resin can be obtained by saponification of, for example, a polyvinyl acetate resin. Examples of the polyvinyl acetate resin include polyvinyl acetate, which is a homopolymer of vinyl acetate, a copolymer of vinyl acetate and another monomer co-polymerizable to vinyl acetate. As the another monomer co-polymerizable with vinyl acetate, for example, an unsaturated carboxylic acid, an olefin, a vinyl ether and an unsaturated sulfonic acid can be mentioned. The saponification degree of a polyvinyl alcohol resin is usually preferably about 85 to 100 mol% and more preferably 95 mol% or more. The polyvinyl alcohol resin may be further modified. For example, polyvinyl formal obtained through modification with aldehyde and polyvinyl acetal can be used. The polymerization degree of a polyvinyl alcohol resin, which refers to a viscosity average polymerization degree, can be obtained in accordance with a method known in the technical field. The polymerization degree is usually about 1,000 to 10,000 and more preferably about 1,500 to 6,000.

A method for forming a film of a polyvinyl alcohol resin is not particularly limited and a film formation method known in the art can be employed. In this case, in a polyvinyl alcohol resin film, a plasticizer such as glycerin, ethylene glycol, propylene glycol and a lower molecular weight polyethylene glycol, may be contained. The amount of plasticizer in the whole mass of the film is preferably 5 to 20 mass% and more preferably 8 to 15 mass%. Although the film thickness of the base film is not particularly limited, the thickness is, for example, about 5 μm to 150 μm and preferably about 10 μm to 100 μm.

(Swelling step)

To the base film obtained above, a swelling treatment is applied. The swelling treatment is preferably applied by soaking the base film in a solution of 20 to 50°C for 30 seconds to 10 minutes. As the solution, water is preferable. The stretch ratio is controlled to be preferably 1.00 to 1.50 fold and more preferably 1.10 to 1.35 fold. If the time for producing a polarizing film is shortened, the swelling treatment can be skipped since a base film is also swollen in a staining step described later.

(Staining step)

In the staining step, to a resin film obtained by applying a swelling treatment to a base film, an azo compound is added by adsorption and impregnation. If the swelling step is skipped, a base film can be swollen also in the staining step. The step of adding an azo compound by adsorption and impregnation is a step of staining a resin film and thus called as a staining step.

As the azo compound, an azo compound represented by formula (1) or a salt thereof is used and optionally other organic dyes such as an azo compound represented by formula (2) and/or formula (3) or a salt(s) thereof can be additionally used. In addition, an azo compound (a dichroic dye) described in Non Patent Document 2, etc. may be used for controlling color as long as the performance of the polarizing film of the present application is not impaired. These azo compounds may be used in the form of a free acid or a salt. Examples of such a salt include an alkali metal salt such as a lithium salt, a sodium salt and a potassium salt or an organic salt such as an ammonium salt and an alkyl amine salt. Preferably, a sodium salt is used.

The staining step is not particularly limited as long as it is a step of adding a pigment to a resin film by adsorption or impregnation. A resin film is preferably stained, for example, by soaking the resin film in a stain solution or can be also stained by applying a stain solution to the resin film. Each of the azo compounds present in the stain solution can be controlled so as to fall within the range of, for example, 0.001 to 10 mass%.

In this step, the temperature of the solution is preferably 5 to 60°C, more preferably 20 to 50°C, and particularly preferably 35 to 50°C. The soaking time in the solution can be appropriately controlled; however the soaking time is controlled in the range of preferably 30 seconds to 20 minutes, and more preferably 1 to 10 minutes.

The stain solution may further contain a dyeing aid in addition to an azo compound, if necessary. Examples of the dyeing aid include sodium carbonate, sodium hydrogen carbonate, sodium chloride, sodium sulfate, anhydrous sodium sulfate and sodium tripolyphosphate. The content of the dyeing aid can be appropriately controlled to any concentration depending on the time and temperature determined by dyeability of the dye. The content of each of them

is preferably 0.01 to 5 mass%, and more preferably 0.1 to 2 mass%, in a stain solution.

(Washing step 1)

Before entering the following step after the staining step, a washing step (hereinafter referred to also as "washing step 1") can be performed. Washing step 1 is a step of washing away the stain solution attached onto the surface of a resin film in the staining step. Owing to washing step 1, it is possible to suppress the dye from migrating into a treatment solution to be used in the following step. In washing step 1, generally, water is used as a washing solution. Washing is preferably performed by soaking a resin film in a washing solution; however, washing can be made by applying the washing solution to a resin film. The washing time is not particularly limited; however the washing time is preferably 1 to 300 seconds, and more preferably 1 to 60 seconds. In washing step 1, the temperature of the washing solution must be a temperature at which the material constituting a resin film (for example, a hydrophilic polymer, a polyvinyl alcohol resin, herein) does not melt. The washing process is generally carried out at 5 to 40°C. Note that even if washing step 1 is not carried out, the resin film has no problem with performance. Thus, washing step 1 may be skipped.

(Step of adding crosslinking agent and/or water resistant additive)

After the staining step or washing step 1, a step of adding a crosslinking agent and/or a water resistant additive can be carried out. As a method of adding a crosslinking agent and/or a water resistant additive to a resin film, soaking the resin film in a treatment solution is preferable. Alternatively, a treatment solution may be applied to a resin film. The treatment solution contains at least one crosslinking agent and/or water resistant additive and a solvent. In this step, the temperature of the treatment solution is preferably 5 to 70°C, and more preferably 5 to 50°C. The treatment time of this step is preferably 30 seconds to 6 minutes, and more preferably 1 to 5 minutes.

Examples of the crosslinking agent that can be used include a boron compound such as boric acid, borax or ammonium borate; a polyvalent aldehyde such as glyoxal or glutaraldehyde; a multivalent isocyanate compound such as biuret type, isocyanurate type or block type; and a titanium compound such as titanium oxysulfate. Other than these, ethylene glycol, glycidyl ether and polyamide epichlorohydrin, etc., can be used. As the water resistant additive, for example, succinicperoxide, ammonium persulfate, calcium perchlorate, benzoin ethyl ether, ethylene glycol diglycidyl ether, glycerin diglycidyl ether, ammonium chloride or magnesium chloride is mentioned; and preferably boric acid is used. As the solvent for a crosslinking agent and/or water resistant additive, water is preferable; however the solvent is not limited to water. The concentration of a crosslinking agent and/or water resistant additive can be appropriately determined by those skilled in the art depending on the type. In the case of boric acid, the concentration of boric acid in a treatment solution is preferably 0.1 to 6.0 mass%, and more preferably 1.0 to 4.0 mass%. Note that it is not essential to add the crosslinking agent and/or water resistant additive. To reduce the time, if a crosslinking treatment or water resistant treatment is not required, this treatment step may be skipped.

(Stretching step)

After the staining step, washing step 1 or a step of adding a crosslinking agent and/or water resistant additive are performed, a stretching step is performed. In the stretching step, a resin film is stretched along a single axis. As the stretching method, either a wet stretching method or a dry stretching method may be employed. The stretch ratio is preferably 3 fold or more, more preferably 4 to 8 fold, and particularly preferably 5 to 7 fold.

In the dry stretching method, if air is used as a heating medium for stretching, a resin film is preferably stretched at a temperature of medium (air) from normal temperature to 180°C and in the atmosphere having a humidity of 20 to 95%RH. Examples of the heating method include, but are not limited to, a roll-opening zone stretching method, a roll heating stretching method, a rolling extension and an infrared-radiation stretching method. In the stretching step, stretching can be performed by a single stage or multistage such as two-stage or more.

In the wet stretching method, a resin film is preferably stretched in water, a water-soluble organic solvent or a solution mixture of them. A resin film is preferably stretched while soaking the resin film in a solution containing at least one crosslinking agent and/or water resistant additive. As the crosslinking agent and water resistant additive used herein are the same described in the aforementioned step of adding a crosslinking agent and/or water resistant additive. In the stretching step, the concentration of the crosslinking agent and/or water resistant additive is preferably, e.g., 0.5 to 15 mass% and more preferably 2.0 to 8.0 mass%. The temperature for the stretching is preferably 40 to 60°C and more preferably 45 to 58°C. The time for drawing is usually 30 seconds to 20 minutes and more preferably 2 to 5 minutes. In the wet stretching step, a single-stage stretching may be employed, or a multiple-stage (two stages or more) may be employed.

(Washing step 2)

After the stretching step, since a crosslinking agent and/or water resistant additive sometimes deposit or a foreign matter adheres onto a surface of a resin film, a washing step (hereinafter referred to also as "washing step 2") for washing the surface of the resin film can be performed. The washing time is preferably 1 second to 5 minutes. In washing, a resin film is preferably soaked in a washing solution; however, the washing solution may be applied to the resin film. As the washing solution, water is preferable. Washing can be made in one stage or a multiple stages (two stages or more). The temperature of the washing solution, which is not particularly limited, is usually 5 to 50°C and preferably 10 to 40°C.

Examples of the treatment solutions or solvents thereof used in the treatment steps so far mentioned include, but are not particularly limited to, water; an alcohol such as dimethyl sulfoxide, N-methyl pyrrolidone, methanol, ethanol, propanol, isopropyl alcohol, glycerin, ethylene glycol, propylene glycol, diethylene glycol, triethylene glycol, tetraethylene glycol or trimethylolpropane; and an amine such as ethylenediamine and diethylenetriamine. As the treatment solution or a solvent thereof, water is most preferable. These treatment solutions or solvents thereof may be used alone or in the form of a mixture (of two or more).

(Drying step)

After stretching step or washing step 2, a drying step for a resin film is carried out. In the drying step, natural drying may be employed. To enhance drying efficiency, surface water can be removed by compression by roll, an air knife or an absorption roll and/or air blow drying. The temperature of the drying treatment is preferably 20 to 100°C and more preferably 60 to 100°C. The time for the drying treatment is, for example, 30 seconds to 20 minutes and preferably 5 to 10 minutes.

In a method for producing a polarizing film, the swelling degree of base material in the swelling step; the blend ratio of individual azo compounds, the temperature and pH of the stain solution, the type and concentration of a salt such as sodium chloride, sodium sulfate and sodium tripolyphosphate and staining time in the staining step; and the stretch ratio in the stretching step are preferably controlled such that a polarizing film preferably satisfies at least one of the following conditions (i) to (v) and more preferably controlled such that a polarizing film further satisfies the conditions (vi) and (vii).

(i) Re: parallel transmittance; absolute value of a difference between the average transmittance in the range of 420 nm to 480 nm and the average transmittance in the range of 520 nm to 590 nm is 2.5 or less; and, absolute value of a difference between the average transmittance in the range of 520 nm to 590 nm and the average transmittance in the range of 600 nm to 640 nm is 2.0 or less.

(ii) Re: orthogonal transmittance; absolute value of a difference between the average transmittance in the range of 420 nm to 480 nm and the average transmittance in the range of 520 nm to 590 nm is 0.3 or less; and absolute value of a difference between the average transmittance in the range of 520 nm to 590 nm and the average transmittance in the range of 600 nm to 640 nm is 0.6 or less.

(iii) The single-plate transmittance is 35% to 65%.

(iv) Each of a* value and b* value (absolute values) is 1.0 or less in a single polarizing film and 2.0 or less in the parallel arrangement.

(v) Each of a* value and b* value (absolute values) measured in the orthogonal arrangement is 2 or less.

(vi) Re: parallel transmittance; average transmittance in the range of 520 nm to 590 nm is 25 to 50%.

(vii) Difference in average transmittance between the range of 380 nm to 420 nm and the range of 420 nm to 480 nm is 15% or less; difference in average transmittance between the range of 480 nm to 520 nm and the range of 420 nm to 480 is 15% or less; difference in average transmittance between the range of 480 nm to 520 nm and the range of 520 nm to 590 nm is 15% or less; and/or difference in average transmittance between the range of 640 nm to 780 nm and the range of 600 nm to 640 nm is 20% or less.

A polarizing film containing an azo compound represented by formula (1) can be produced by the aforementioned method. The polarizing film has a higher transmittance and higher polarization degree than polarizing films conventional used. In addition, when two polarizing films are stacked such that the absorption axes thereof are arranged in parallel, white, like high-quality paper, can be exhibited. The color phase of the polarizing film by itself is neutral color (neutral gray). Furthermore, when two polarizing films are stacked such that the absorption axes thereof are arranged in orthogonal, high-quality achromatic black is exhibited. The polarizing film has high durability against high temperature and high humidity.

By attaching a protective film to the dye-based polarizing film, the film can be used as a polarizing plate. If necessary, a protective layer or an AR layer and a support etc., can be further provided. Examples of use of the dye-based polarizing film of the present invention include LCD projectors, calculators, clocks, laptop computers, word processors, liquid crystal televisions, car navigations, indoor and outdoor measuring instruments and displays, lenses and glasses. The dye-based polarizing film of the present invention has high polarization performance equivalent to a polarizing film using iodine and excellent durability. Because of this, the dye-based polarizing film of the present invention can be particularly preferably used in display devices requiring high polarization performance and durability, such as liquid crystal displays, liquid crystal projectors and display devices for automotive use and for outdoor use (for example, industrial instruments and wearable applications).

The present invention can be used not only in liquid crystal display devices but also display devices such as organic EL device (common name: OLED) and a see-through display device. The present invention, since it has equal transmittance independent of wavelength and an achromatic color phase in the parallel arrangement and orthogonal arrangement, is preferably used in smart windows, lenses, filters and glasses. In particular, since difference in transmittance between the wavelengths in the polarizing plate of the present invention is lower than polarizing plates so far used and the durability thereof is high, the polarizing plate of the present invention is extremely useful as a polarizing plate for a sensor.

<Polarizing plate>

The polarizing plate according to the present invention includes a polarizing film and a transparent protective layer provided to one or both surfaces of the polarizing film. The transparent protective layer is provided for, e.g., improving the water resistance and handling of the polarizing film.

The transparent protective layer is a protective film formed of a transparent substance. The protective film is a layer-form film that can keep the form of a polarizing film and is preferably a plastic, etc., having excellent transparency, mechanical strength, thermal stability and moisture-proof property. Alternatively, by forming an equivalent layer thereto, an equivalent function may be provided. Examples of plastic constituting the protective film include a film obtained from a thermoplastic resin such as a polyester resin, a (cellulose) acetate resin, a polyether sulfone resin, a polycarbonate resin, a polyamide resin, a polyimide resin, a polyolefin resin, an acrylic resin, a fluororesin (e.g. an ethylene tetrafluoride/hexafluoropropylene copolymer) or a thermosetting resin or UV curable resin such as an acrylic resin, a urethane resin, an acrylic urethane resin, an epoxy resin, or a silicone resin. Of these, as polyolefin resin, an amorphous polyolefin resin having a cyclic polyolefin polymerization unit such as a norborne monomer or a polycyclic norbornene monomer, is mentioned. Generally, it is preferable to select a protective film which does not impair the performance of the polarizing film after it is laminated. As the protective film, a triacetylcellulose (TAC) film formed of a cellulose acetate resin, a cycloolefin film and a norbornene film are particularly preferable. To the protective film, a treatment such as a hard coat treatment, an antireflection treatment, a treatment for preventing of sticking and a treatment for diffusion and antiglare may be applied as long as the effect of the present invention is not reduced. The thickness of the protective film is usually preferably 10 to 200 $\mu$m and more preferably 20 to 80 $\mu$m.

The polarizing plate further preferably has an adhesive layer between a transparent protective layer and a polarizing film for bonding them. Examples of an adhesive constituting the adhesive layer include, but are not particularly limited to, a polyvinyl alcohol adhesive, a urethane emulsion adhesive, an acrylic adhesive and a polyester-isocyanate-adhesive. A polyvinyl alcohol adhesive is preferable. Examples of the polyvinyl alcohol adhesive include, but are not limited to, Gohsenol NH-26 (manufactured by The Nippon Synthetic Chemical Industry Co., Ltd.) and Exceval RS-2117 (manufactured by Kuraray Co., Ltd.). To the adhesive, a crosslinking agent and/or a water resistant additive can be added. As the polyvinyl alcohol adhesive, a maleic anhydride-isobutylene copolymer is preferably used. If necessary, a crosslinking agent may be added to the adhesive. Examples of the maleic anhydride-isobutylene copolymer include Isovan # 18 (manufactured by Kuraray Co., Ltd.), Isovan # 04 (manufactured by Kuraray Co., Ltd.), ammonia-modified Isovan # 104 (manufactured by Kuraray Co., Ltd.), ammonia-modified Isovan # 110 (manufactured by Kuraray Co., Ltd.), imidized Isovan # 304 (manufactured by Kuraray Co., Ltd.) and imidized Isovan # 310 (manufactured by Kuraray Co., Ltd.). In this case, as the crosslinking agent, a water-soluble polyvalent epoxy compound can be used. Examples of the water-soluble polyvalent epoxy compound include Denacol EX-521 (manufactured by Nagase ChemteX Corporation) and TETRAT-C (manufactured by Mitsui Gas Chemical Company). As an adhesive other than a polyvinyl alcohol resin, urethane, acrylic, epoxy adhesive known in the art can be used. Particularly, a polyvinyl alcohol having a modified acetoacetyl group is preferably used. Further, as a crosslinking agent thereof, a polyvalent aldehyde is preferably used. In order to improve the adhesive strength or water resistance of an adhesive, additives such as a zinc compound, a chloride and an iodide, can be added alone or in combination, in a concentration of about 0.1 to 10 mass%. The additives to an adhesive are not particularly limited and can be appropriately selected by those skilled in the art. After a transparent protective layer and a polarizing film are bonded by an adhesive, the resultant film is dried at an appropriate temperature or heated to successfully obtain a polarizing plate.

On a surface of a polarizing plate, another transparent protective layer may be provided. Examples of the other transparent protective layer include a hard coat layer of an acrylic or a polysiloxane resin and a protective layer of a

urethane resin. In order to improve a single plate light transmittance, it is preferable to provide an AR layer on the protective layer. The AR layer can be formed, for example, by deposition or sputtering of a substance such as silicon dioxide and titanium oxide or by thinly applying a fluorine substance. The polarizing plate, if a retarder is further bonded on a surface thereof, can be used as an elliptical polarizing plate.

The polarizing plate, if, it is bonded to, for example, a display device such as a liquid crystal organic electroluminescence (common name: OLED or OEL) display device, various functional layers for improving the viewing angle and/or contrast, a layer or a film having a brightness improvement effect can be provided to the unexposed surface of the protective layer or the film after bonding. Examples of the various functional layers include a layer or film for controlling a phase difference. The polarizing plate is preferably bonded to these films and display devices by an adhesive.

The polarizing plate may include various functional layers known in the art such as an antireflection layer, an anti-glare layer and a hard coat layer on the exposed surface of a protective layer or film. Each of these various functional layers is produced preferably by a coating method; however, a film having the function of each of the layers may be bonded with an adhesive or a gluing agent.

The polarizing plate may be either a color polarizing plate or a neutral polarizing plate depending on the use.

The polarizing plate according to the present invention is highly resistant polarizing plate having a high transmittance and a high polarization degree, realizing achromatism, and particularly, exhibiting white, like high-quality paper, in the white display time and neutral black in the black display time.

The neutral-gray polarizing plate of the present invention is characterized in that color leakage in a visible-light wavelength region is low in the orthogonal arrangement and polarization performance is excellent, discoloration and reduction of polarization performance are prevented even in high temperature and high humidity conditions and light leakage in a visible light region is low in the orthogonal arrangement. Thus, the neutral-gray polarizing plate of the present invention is preferably used in in-car display devices or outdoor display devices.

The neutral-gray polarizing plate for in-car display devices or outdoor display devices is preferably a polarizing plate with an AR layer, which is formed by providing an AR layer for further improving a single plate light transmittance, to a polarizing plate formed of a polarizing film and a protective film, and more preferably a polarizing plate with an AR layer and a support in which a support formed of a transparent resin, etc. is provided. The AR layer can be provided to one or both surfaces of a polarizing plate. The support is preferably provided on one of the surfaces of a polarizing plate and may be provided on a polarizing plate with the AR layer interposed between them or directly provided. The support preferably has a flat portion to which a polarizing plate is to be bonded and is preferably a transparent substrate because of an optical use. Transparent substrates are roughly classified into inorganic substrates and organic substrates. Examples of the inorganic substrates include a soda glass, a borosilicate glass, a quartz substrate, a sapphire substrate, and a spinel substrate. Examples of the organic substrates include acrylic, polycarbonate, polyethylene terephthalate, polyethylene naphthalate, and cycloolefin polymer. Of them, an organic substrate is preferable. The thickness and size of the transparent substrate may be determined as desired.

The color polarizing plate is excellent in polarization performance. Neither discoloration nor deterioration of the polarization performance occur even in high temperature and high humidity conditions. Because of this, the color polarizing plate is preferably used in liquid crystal projectors, in-car display devices and outdoor display devices. A polarizing film to be used in these polarizing plates is produced in accordance with the method described in the section of a method for producing the polarizing film of the present invention. A polarizing plate is formed by attaching a protective layer to the polarizing film and used, if necessary, by attaching a protective layer or an AR layer and a support, etc., thereto.

In the color polarizing plate for a liquid crystal projector, it is preferable that an average single-plate light transmittance is 39% or more, an average light transmittance in the orthogonal arrangement is 0.4% or less in the requisite wavelength region of the polarizing plate (A. in a case of using an extra high pressure mercury lamp, blue channel: 420 to 500 nm, green channel: 500 to 580 nm, red channel: 600 to 680 nm; B. peak wavelength in a case of using a three primary color LED lamp; blue channel: 430 to 450 nm, green channel: 520 to 535 nm, red channel: 620 to 635 nm); more preferably that an average single-plate light transmittance is 41% or more, and an average light transmittance in the orthogonal arrangement is 0.3% or less and further preferably 0.2% or less in the requisite wavelength region of the polarizing plate; and particularly preferably that an average single-plate light transmittance is 42% or more, an average light transmittance in the orthogonal arrangement is 0.1% or less in the requisite wavelength region of the polarizing plate. As described above, the color polarizing plate for a liquid crystal projector has brightness and excellent polarization performance.

The color polarizing plate with a support for an in-car display device or outdoor display device can be produced by applying a transparent adhesive (gluing) agent, for example, to a flat portion of a support and then attaching a polarizing plate onto the adhesive surface. Alternatively, a transparent adhesive (gluing) agent is applied to a polarizing plate and a support may be attached to the adhesive surface. As the adhesive (gluing) agent used herein, for example, an acrylic ester based adhesive (gluing) agent is preferable. Note that, if the polarizing plate is used as an ellipse polarizing plate, the polarizing plate is usually attached such that a retardation plate side faces to a support; however, the polarizing plate may be attached such that a polarizing plate faces to a transparent substrate.

<Product such as display device>

The polarizing film or polarizing plate of the present invention, to which, if necessary, e.g., a protective layer or a function layer and a transparent support made of, e.g., glass, crystal or sapphire are provided, is applied to LCD projectors, calculators, clocks, laptop computers, word processors, liquid crystal televisions, polarized lenses, polarized glasses, car navigations, and indoor and outdoor measuring instruments and displays. The polarizing film or polarizing plate of the present invention is preferably used in liquid crystal display devices, for example, a reflective liquid crystal display device, a semi-transmissive liquid crystal display device and an organic electroluminescence. The polarizing film or polarizing plate of the present invention is suitably used in various indicators requiring high polarization performance and durability, for example in-car display devices or outdoor display devices (for example, displays of industrial instruments and wearable applications) (including a liquid crystal and a non-liquid crystal). A display device using the polarizing film or polarizing plate of the present invention can exhibit white, like high-quality paper, and neutral black. Further, the display device has high durability, reliability and high color reproducibility with high contrast for a long term.

The polarizing film or polarizing plate to be provided in a liquid crystal display device is preferably neutral gray. If a neutral gray polarizing film or polarizing plate is used, the color phase of a liquid crystal display in a dark state may sometime change. Then, prevent a color change of a liquid crystal display in a dark state due to color leakage of a specific wavelength when a polarizing film is installed in a liquid crystal display device

In a liquid crystal display device, a polarizing plate is arranged on either one or both of the incident side and exit side of liquid crystal cells. The polarizing plate may or may not be in contact with the liquid crystal cells; however, the polarizing plate is preferably not in contact with the liquid crystal cell in view of durability. In the case where a polarizing plate is in contact with liquid crystal cells on the exit side thereof, the liquid crystal cells can be served as a support of the polarizing plate. In the case where a polarizing plate is not in contact with liquid crystal cells, the polarizing plate preferably employs a support other than the liquid crystal cells. In view of durability, it is preferable that a polarizing plate is arranged on both incident side or exit side of a liquid crystal cell; further preferable that a polarizing plate is arranged such that the polarizing surface faces to liquid crystal cells and a support surface faces to a light source. Note that the incident side of liquid crystal cells refers to the side closer to a light source and the opposite side thereof is the exit side.

Liquid crystal cells to be provided in in-car display devices or outdoor display devices, particularly in-car liquid crystal display devices or outdoor liquid crystal display devices are, for example, active matrix type liquid crystal cells and preferably those formed by enclosing a liquid crystal between a transparent substrate on which electrodes and TFT are formed and a transparent substrate on which counter electrodes are formed. Light radiated from a light source such as a cold cathode tube lamp or white LED passes through a neutral-gray polarizing plate, and then, through a liquid crystal cell, a color filter, further a neutral-gray polarizing plate and is projected on the display screen.

In the in-car display devices or outdoor display devices thus constituted, since the neutral-gray polarizing plate has brightness, excellent polarization performance, durability and light resistance, discoloration and deterioration of polarization performance rarely occur even in high temperature and high humidity conditions within cars and outdoors. Thus, the in-car display devices or outdoor display devices are highly reliable.

Examples

Now, the present invention will be more specifically described by way of Examples; however these are just examples and should not be construed as limiting the invention. In the examples, % and parts are units based on mass, unless otherwise specified.

[Example 1]

<1>

4-Aminobenzene-1,3-disulfonic acid (as $Ag_1$-NH2) (25.3 parts) was added in water (200 parts) and 35% hydrochloric acid (40 parts) was added thereto. Subsequently, a 40% aqueous sodium nitrite solution (17.3 parts) was added and the mixture was stirred at 10 to 20°C to perform diazotization. To the mixture, 1-aminonaphthalene-7-sulfonic acid (as Bg-$NH_2$) (22.3 parts) dissolved in a 15% aqueous sodium carbonate solution, was added. To this solution, a 15% aqueous sodium carbonate solution was added to adjust pH to be 2. The solution was further stirred to complete a coupling reaction. Thereafter, salting out was performed with sodium chloride followed by filtration to obtain the monoazo amino compound (39.0 parts) represented by formula (A2').

[formula 191]

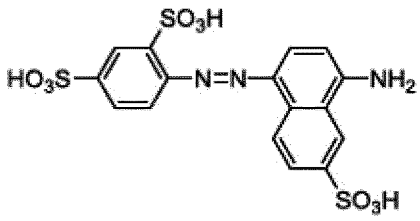

(A2')

<2>

The monoazo amino compound (A2') (39.0 parts) obtained above was added in water (400 parts) and dissolved with the help of 25% sodium hydroxide. A40% aqueous sodium nitrite solution (13.8 parts) was added and then 35% hydrochloric acid (32.0 parts) was added at 10 to 30°C. The mixture was stirred at 20 to 30°C for one hour to perform diazotization. To the mixture, 1-aminonaphthalene-7-sulfonic acid (as Cg-NH2) (17.8 parts) dissolved in a 15% aqueous sodium carbonate solution, was added. To this solution, a 15% aqueous sodium carbonate solution was added to adjust pH to be 2. The solution was further stirred to complete a coupling reaction. Thereafter, salting out was performed with sodium chloride followed by filtration to obtain the disazoamino compound (46.1 parts) represented by formula (A2").

[formula 192]

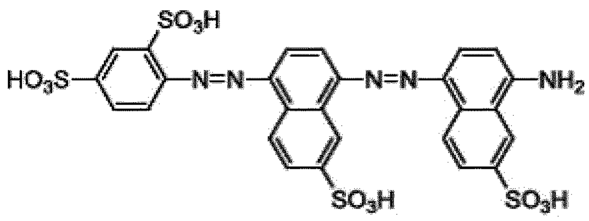

(A2")

<3>

The disazoamino compound (A2") (46.1 parts) obtained above was added in water (400 parts) and dissolved with the help of 25% sodium hydroxide. A40% aqueous sodium nitrite solution (11.0 parts) was added and then 35% hydrochloric acid (25.6 parts) was added at 20 to 30°C. The mixture was stirred at 20 to 30°C for one hour to perform diazotization. On the other hand, 6-(4'-methoxyphenylamino)-1-naphthol-3-sulfonic acid (as the compound represented by formula (vi)) (22.1 parts) was added in water (100 parts) and dissolved by changing the solution to be weak alkali with a 25% aqueous sodium hydroxide solution. To this solution, the diazotized disazoamino compound previously obtained was added dropwise while keeping pH at 8 to 10. The mixture was stirred to complete a coupling reaction. Thereafter, salting out was performed with sodium chloride followed by filtration to obtain the trisazo compound (55.2 parts) represented by formula (1-A2). The maximum absorption wavelength of the compound in an aqueous solution was 604 nm.

[Example 2]

<2>

The disazoamino compound (46.1 parts) represented by formula (A10") was obtained in the same manner as in Example 1 except that Step 1 was carried out by using 2-amino-4-methoxybenzenesulfonic acid (18.7 parts by weight) as $Ag_1$-$NH_2$ and Step 2 was carried out by using 1-amino-2-methoxynaphthalene-6-sulfonic acid (as Cg-NH2) (16.2 parts).

[formula 193]

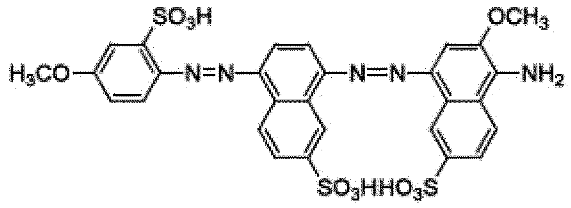

(A10")

<3>

The disazoamino compound (A10") (46.1) obtained above was added in water (400 parts) and dissolved with the help of 25% sodium hydroxide. A40% aqueous sodium nitrite solution (11.0 parts) was added and then 35% hydrochloric acid (25.6 parts) was added at 20 to 30°C. The mixture was stirred at 20 to 30°C for one hour to perform diazotization. On the other hand, 6-phenylamino-1-naphthol-3-sulfonic acid (as the compound represented by formula (vi)) (16.1 parts) was added in water (100 parts) and dissolved by changing the solution to be weak alkali with a 25% aqueous sodium hydroxide solution. To this solution, the diazotized disazoamino compound previously obtained was added dropwise while keeping pH at 8 to 10. The mixture was stirred to complete a coupling reaction. Thereafter, salting out was performed with sodium chloride followed by filtration to obtain the trisazo compound (55.2 parts) represented by formula (1-A10). The maximum absorption wavelength of the compound in an aqueous solution was 637 nm.

[Example 3]

The trisazo compound (51.1 parts) represented by formula (1-A11) was obtained in the same manner as in Example 2 except that 4-aminobenzenesulfonic acid (17.3 parts) was used as $Ag_1$-$NH_2$. The maximum absorption wavelength of the compound in an aqueous solution was 630 nm.

[Example 4]

<1>

4-amino-3-methyl benzenesulfonic acid (as $Ag_1$-$NH_2$) (18.7 parts) was added in water (200 parts) and 35% hydrochloric acid (40 parts) was added thereto. Subsequently, a 40% aqueous sodium nitrite solution (17.3 parts) was added and the mixture was stirred at 10 to 20°C to perform diazotization. To the mixture, 1-aminonaphthalene-6-sulfonic acid (as Bg-$NH_2$) (22.3 parts) dissolved in a 15% aqueous sodium carbonate solution, was added. To this solution, a 15% aqueous sodium carbonate solution was added to adjust pH to be 2. The solution was further stirred to complete a coupling reaction. Thereafter, salting out was performed with sodium chloride followed by filtration to obtain the monoazo amino compound (33.7 parts) represented by formula (A12').

[formula 194]

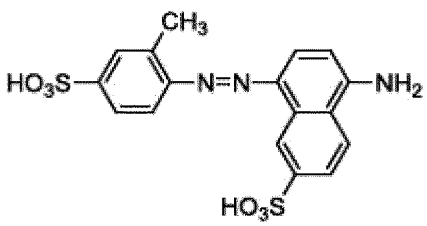

(A12')

<2>

The monoazo amino compound (A12') (33.7 parts) obtained above was added in water (400 parts) and dissolved with the help of 25% sodium hydroxide. A40% aqueous sodium nitrite solution (13.8 parts) was added and then 35% hydrochloric acid (32.0 parts) was added at 10 to 30°C. The mixture was stirred at 20 to 30°C for one hour to perform diazotization. To the mixture, 1-amino-2-methoxynaphthalene-6-sulfonic acid (as Cg-NH2) (16.2 parts) dissolved in a

15% aqueous sodium carbonate solution, was added. To this solution, a 15% aqueous sodium carbonate solution was added to adjust pH to be 2. The solution was further stirred to complete a coupling reaction. Thereafter, salting out was performed with sodium chloride followed by filtration to obtain the disazoamino compound (44.9 parts) represented by formula (A12").

[formula 195]

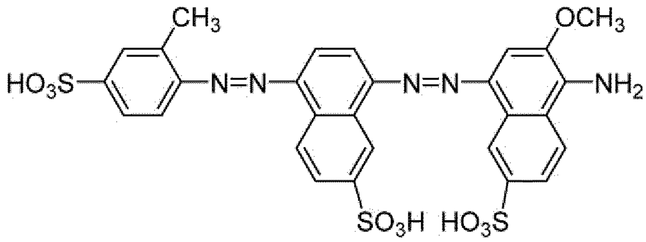

(A12")

<3>

The trisazo compound (51.8 parts) represented by formula (1-A12) was obtained in the same manner as in Example 2, Step 3 except that the disazoamino compound (A12") (44.9) obtained above was used as $Ag_1$-N=N-Bg-N=N-Cg-$NH_2$. The maximum absorption wavelength of the compound in an aqueous solution was 636 nm.

[Example 5]

The trisazo compound (47.7 parts) represented by formula (1-A13) was obtained in the same manner as in Example 4 except that 1-aminonaphthalene (11.4 parts) was used as Bg-$NH_2$. The maximum absorption wavelength of the compound in an aqueous solution was 632 nm.

[Example 6]

The trisazo compound (51.1 parts) represented by formula (1-A14) was obtained in the same manner as in Example 2 except that 5-aminoisophthalic acid (18.1 parts) was used as $Ag_1$-$NH_2$ and 1-aminonaphthalene-7-sulfonic acid was used as Cg-NH2. The maximum absorption wavelength of the compound in an aqueous solution was 614 nm.

[Example 7]

<1>

7-Aminonaphthalene-1,3-disulfonic acid (as $Ag_1$-$NH_2$) (30.3 parts) was added in water (300 parts) and completely dissolved by adding a 25% aqueous sodium hydroxide solution. Subsequently, 35% hydrochloric acid (40 parts) was added and then a 40% aqueous sodium nitrite solution (17.3 parts) was added. The mixture was stirred at 10 to 20°C to perform diazotization. To this solution, 1-aminonaphthalene-7-sulfonic acid (as Bg-$NH_2$) (22.3 parts) dissolved in a 15% aqueous sodium carbonate solution was added and further a 15% aqueous sodium carbonate solution was added to adjust pH to be 2. The solution was further stirred to complete a coupling reaction. Thereafter, salting out was performed with sodium chloride followed by filtration to obtain the monoazo amino compound (43.0 parts) represented by formula (B7').

[formula 196]

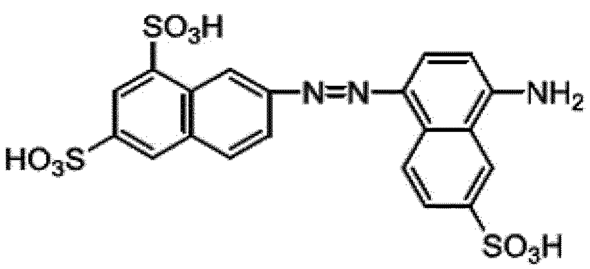

(B7')

<2>

The monoazo amino compound (B7') (43.0 parts) obtained above was added in water (500 parts) and dissolved with the help of 25% sodium hydroxide. A40% aqueous sodium nitrite solution (13.8 parts) was added and then 35% hydrochloric acid (32.0 parts) was added at 10 to 30°C. The mixture was stirred at 20 to 30°C for one hour to perform diazotization. To the mixture, 1-aminonaphthalene-7-sulfonic acid (as Cg-NH2) (17.8 parts) dissolved in a 15% aqueous sodium carbonate solution, was added. To this solution, a 15% aqueous sodium carbonate solution was added to adjust pH to be 2. The solution was further stirred to complete a coupling reaction. Thereafter, salting out was performed by adding sodium chloride followed by filtration to obtain the disazo amino compound (49.3 parts) represented by formula (B7").

[formula 197]

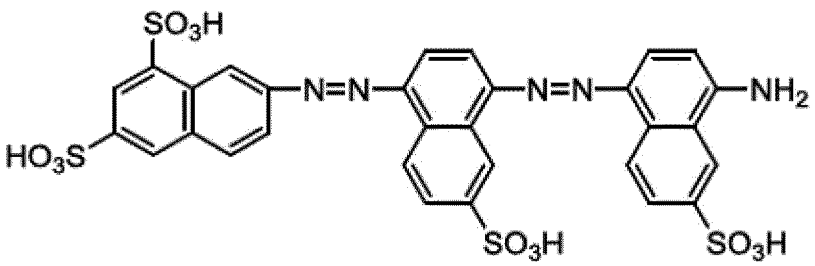

(B7")

<3>

The disazoamino compound (B7") (49.3 parts) obtained above was added in water (300 parts) and dissolved with the help of 25% sodium hydroxide. A40% aqueous sodium nitrite solution (11.0 parts) was added and then 35% hydrochloric acid (25.6 parts) was added at 20 to 30°C. The mixture was stirred at 20 to 30°C for one hour to perform diazotization. On the other hand, 6-phenylamino-1-naphthol-3-sulfonic acid (as the compound represented by formula (vi)) (20.2 parts) was added in water (100 parts) and dissolved by changing the solution to be weak alkali with a 25% aqueous sodium hydroxide solution. To this solution, the diazotized disazoamino compound previously obtained was added dropwise while keeping pH at 8 to 10. The mixture was stirred to complete a coupling reaction. Thereafter, filtration was performed to obtain the trisazo compound (56.2 parts) represented by formula (1-B7). The maximum absorption wavelength of the compound in an aqueous solution was 602 nm.

[Example 8]

The trisazo compound (57.7 parts) represented by formula (1-B8) was obtained in the same manner as in Example 7 except that 6-(4'-methoxyphenylamino)-1-naphthol-3-sulfonic acid (22.1 parts) was used as a compound represented by formula (vi). The maximum absorption wavelength of the compound in an aqueous solution was 606 nm.

[Example 9]

<1>

The monoazo amino compound (43.0 parts) represented by formula (C12') was obtained in the same manner as in Example 7, Step 1 except that 7-aminonaphthalene-1,5-disulfonic acid (30.3 parts) was used as $Ag_1$-$NH_2$.

[formula 198]

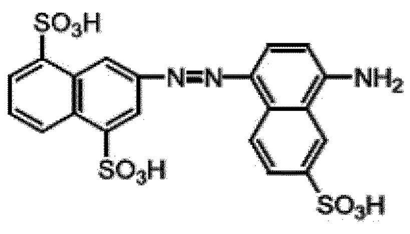

(C12')

<2>

The disazoamino compound (49.3 parts) represented by formula (C12") was obtained in the same manner as in Example 7, Step 2 except that the monoazo amino compound (C12') (43.0 parts) obtained above was used as $Ag_1$-N=N-Bg-$NH_2$.

[formula 199]

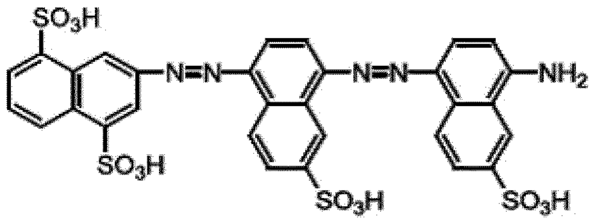

(C12")

<3>

The trisazo compound (56.1 parts) represented by formula (1-C12) was obtained in the same manner as in Example 7, Step 3 except that the disazoamino compound (C12") (49.3 parts) obtained above was used as $Ag_1$-N=N-Bg-N=N-Cg-$NH_2$. The maximum absorption wavelength of the compound in an aqueous solution was 604 nm.

[Example 10]

The trisazo compound (57.7 parts) represented by formula (1-C13) was obtained in the same manner as in Example 9 except that 6-(4'-methoxyphenylamino)-1-naphthol-3-sulfonic acid (22.1 parts) was used as a compound represented by formula (vi). The maximum absorption wavelength of the compound in an aqueous solution was 614 nm.

[Example 11]

<1>

4-Aminonaphthalene-1-sulfonic acid (as $Ag_1$-$NH_2$) (22.3 parts) was added in water (300 parts) and completely dissolved by adding a 25% aqueous sodium hydroxide solution. Subsequently, 35% hydrochloric acid (40 parts) was added and then a 40% aqueous sodium nitrite solution (17.3 parts) was added. The mixture was stirred at 10 to 20°C to perform diazotization. To this solution, 1-aminonaphthalene-7-sulfonic acid (as Bg-$NH_2$) (22.3 parts) dissolved in a 15% aqueous sodium carbonate solution was added and further a 15% aqueous sodium carbonate solution was added to adjust pH to be 2. The solution was further stirred to complete a coupling reaction. Thereafter, filtration was performed to obtain a monoazo amino compound (36.6 parts) represented by formula (C18').

[formula 200]

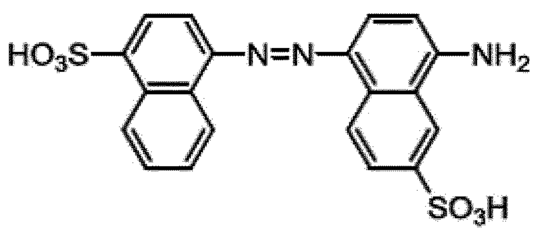

(C18')

<2>

The disazoamino compound (44.2 parts) represented by formula (C18") was obtained in the same manner as in Example 7, Step 2 except that the monoazo amino compound (C18') (36.6 parts) obtained above was used as $Ag_1$-N=N-Bg-$NH_2$.

[formula 201]

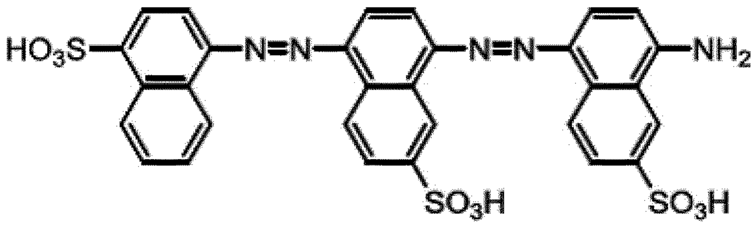

(C18")

<3>

The disazoamino compound (C18") (44.2 parts) obtained above was added in water (400 parts) and dissolved with the help of 25% sodium hydroxide, and a 40% aqueous sodium nitrite solution (11.0 parts) was added and then 35% hydrochloric acid (25.6 parts) was added at 20 to 30°C. The mixture was stirred at 20 to 30°C for one hour to perform diazotization. On the other hand, 6-(4-methoxyphenyl)amino-1-naphthol-3-sulfonic acid (as the compound represented by formula (vi)) (22.1 parts) was added in water (100 parts) and dissolved by changing the solution to be weak alkali with a 25% aqueous sodium hydroxide solution. To this solution, the diazotized disazoamino compound previously obtained was added dropwise while keeping pH at 8 to 10. The mixture was stirred to complete a coupling reaction. Thereafter, salting out was performed with sodium chloride followed by filtration to obtain the trisazo compound (53.6 parts) represented by formula (1-C18). The maximum absorption wavelength of the compound in an aqueous solution was 610 nm.

[Example 12]

<1>

The monoazo amino compound (47.6 parts) represented by formula (D5') was obtained in the same manner as in Example 11, Step 1 except that 7-amino-4 (3-sulfopropoxy)naphthalene-2-sulfonic acid (36.1 parts) synthesized with reference to Patent Document 5 was used as $Ag_1$-$NH_2$.

[formula 202]

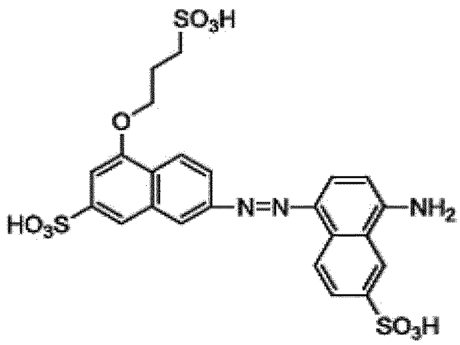

(D5')

<2>

The disazoamino compound (53.1 parts) represented by formula (D5") was obtained in the same manner as in Example 7, Step 2 except that the monoazo amino compound (D5') (47.6 parts) obtained above was used as $Ag_1$-N=N-Bg-$NH_2$.

[formula 203]

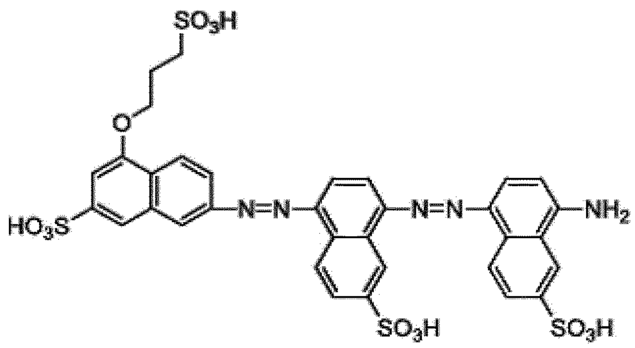

(D5")

<3>

The disazoamino compound (D5") (53.1 parts) obtained above was added in water (300 parts) and dissolved with the help of 25% sodium hydroxide. A40% aqueous sodium nitrite solution (11.0 parts) was added and then 35% hydrochloric acid (25.6 parts) was added at 20 to 30°C. The mixture was stirred at 20 to 30°C for one hour to perform diazotization. On the other hand, 6-(4'-methoxyphenylamino)-1-naphthol-3-sulfonic acid (as the compound represented by formula (vi)) (22.1 parts) was added in water (100 parts) and dissolved by changing the solution to be weak alkali with a 25% aqueous sodium hydroxide solution. To this solution, the diazotized disazoamino compound previously obtained was added dropwise while keeping pH at 8 to 10. The mixture was stirred to complete a coupling reaction. Thereafter, filtration was performed to obtain the trisazo compound (60.7 parts) represented by formula (1-D5). The maximum absorption wavelength of the compound in an aqueous solution was 606 nm.

[Example 13]

The trisazo compound (60.7 parts) represented by formula (1-D6) was obtained in the same manner as in Example 12 except that 6-amino-4 (3-sulfopropoxy)naphthalene-2-sulfonic acid (36.1 parts) synthesized with reference to Patent Document 1 was used as $Ag_1$-$NH_2$. The maximum absorption wavelength of the compound in an aqueous solution was 606 nm.

[Example 14]

<1>

4-Amino-3-methyl benzenesulfonic acid (as $Ag_1$-$NH_2$) (18.7 parts) was added in water (300 parts) and completely dissolved by adding a 25% aqueous sodium hydroxide solution. Subsequently, 35% hydrochloric acid (40 parts) was added and a 40% aqueous sodium nitrite solution (17.3 parts) was added. The mixture was stirred at 10 to 20°C to perform diazotization. To this solution, 1-aminonaphthalene-7-sulfonic acid (as Bg-$NH_2$) (25.3 parts) dissolved in a 15% aqueous sodium carbonate solution was added and further a 15% aqueous sodium carbonate solution was added to adjust pH to be 2. The solution was further stirred to complete a coupling reaction. Thereafter, filtration was performed to obtain the monoazo amino compound (33.7 parts) represented by the following formula (E9').

[formula 204]

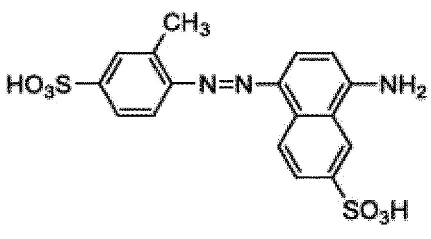

(E9')

<2>

The monoazo amino compound (E9') (33.4 parts) obtained above was added in water (400 parts) and dissolved with the help of 25% sodium hydroxide. To this, a 40% aqueous sodium nitrite solution (13.8 parts) was added and then, 35% hydrochloric acid (32.0 parts) was added at 10 to 30°C. The mixture was stirred at 20 to 30°C for one hour to perform diazotization. To the mixture, 2,5-dimethoxyaniline (as Cg-$NH_2$) (12.2 parts) dissolved in a 10% aqueous hydrochloric acid solution, was added. To this solution, a 15% aqueous sodium carbonate solution was added to adjust pH to be 2. The solution was further stirred to complete a coupling reaction. Thereafter, salting out was performed with sodium chloride followed by filtration to obtain the disazoamino compound (37.5 parts) represented by the following formula (E9").

[formula 205]

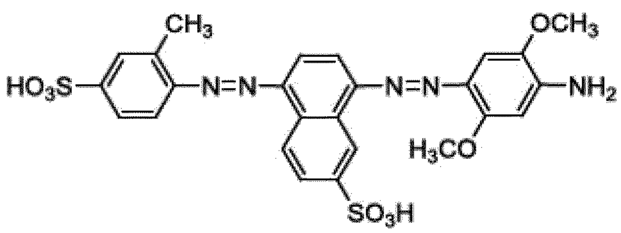

(E9")

<3>

The trisazo compound (48.2 parts) represented by formula (1-E9) was obtained in the same manner as in Example 1, Step 3 except that the disazoamino compound (E9") (48.6 parts) obtained above was used as $Ag_1$-N=N-Bg-N=N-Cg-$NH_2$. The maximum absorption wavelength of the compound in an aqueous solution was 607 nm.

[Example 15]

<1>

4-aminobenzene-1,3-disulfonic acid (as $Ag_1$-$NH_2$) (25.3 parts) was added in water (300 parts) and completely dissolved by adding a 25% aqueous sodium hydroxide solution.

Subsequently, 35% hydrochloric acid (40 parts) was added and a 40% aqueous sodium nitrite solution (17.3 parts) was added. The mixture was stirred to perform diazotization at 10 to 20°C. To the mixture, 2,5-dimethoxyaniline (as Bg-$NH_2$) (12.2 parts) dissolved in a 10% aqueous hydrochloric acid solution, was added. To this solution, a 15% aqueous sodium carbonate solution was added to adjust pH to be 2. The solution was further stirred to complete a coupling reaction. Thereafter, salting out was performed with sodium chloride followed by filtration to obtain the monoazo amino compound (33.4 parts) represented by the following formula (E12').

[formula 206]

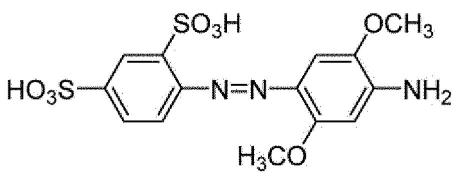

(E12')

<2>

The disazoamino compound (43.6 parts) represented by following formula (E12") was obtained in the same manner as in Example 2, Step 2 except that the monoazo amino compound (E12') (42.1 parts) obtained above was used as $Ag_1$-N=N-Bg-$NH_2$.

[formula 207]

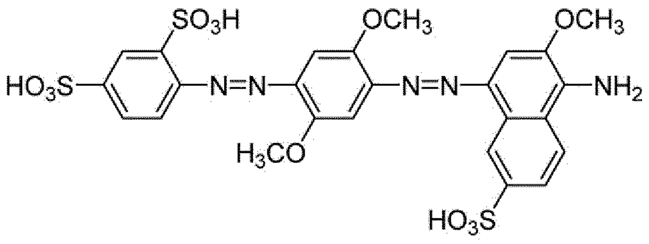

(E12")

<3>

The disazoamino compound (E12") (41.1 parts) obtained above was added in water (400 parts) and dissolved with the help of 25% sodium hydroxide. A40% aqueous sodium nitrite solution (11.0 parts) was added and then 35% hydrochloric acid (25.6 parts) was added at 20 to 30°C. The mixture was stirred at 20 to 30°C for one hour to perform diazotization. On the other hand, 6-phenylamino-1-naphthol-3-sulfonic acid (as the compound represented by formula (vi)) (20.2 parts) was added in water (100 parts) and dissolved by changing the solution to be weak alkali with a 25% aqueous sodium hydroxide solution. To this solution, the diazotized disazoamino compound previously obtained was added dropwise while keeping pH at 8 to 10. The mixture was stirred to complete a coupling reaction. Thereafter, salting out was performed with sodium chloride followed by filtration to obtain the trisazo compound (51.6 parts) represented by formula (1-E12). The maximum absorption wavelength of the compound in an aqueous solution was 610 nm.

[Example 16]

The trisazo compound (46.3 parts) represented by formula (1-E15) was obtained in the same manner as in Example 14 except that 5-aminoisophthalic acid (18.1 parts) was used as $Ag_1$-$NH_2$ and 6-phenylamino-1-naphthol-3-sulfonic acid (20.2 parts) as the compound represented by formula (vi) was used. The maximum absorption wavelength of the compound in an aqueous solution was 609 nm.

[Example 17]

<2>

The monoazo amino compound (B7') (43.0 parts) obtained in Example 7, Step 1 as $Ag_1$-N=N-Bg-$NH_2$ was added in water (400 parts) and dissolved with the help of 25% sodium hydroxide. To this, a 40% aqueous sodium nitrite solution (13.8 parts) was added and then, 35% hydrochloric acid (32.0 parts) was added at 10 to 30°C. The mixture was stirred at 20 to 30°C for one hour to perform diazotization. To the mixture, 2,5-dimethoxyaniline (as Cg-$NH_2$) (12.2 parts) dissolved in a 10% aqueous hydrochloric acid solution, was added. To this solution, a 15% aqueous sodium carbonate solution was added to adjust pH to be 2. The solution was further stirred to complete a coupling reaction. Thereafter, salting out was performed with sodium chloride followed by filtration to obtain the disazoamino compound (44.9 parts) represented by the following formula (F7").

[formula 208]

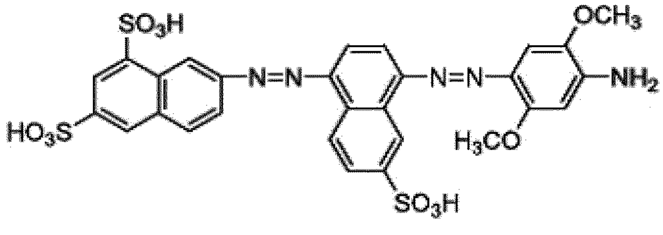

(F7")

<3>

The trisazo compound (54.2 parts) represented by formula (1-F7) was obtained in the same manner as in Example 1, Step 3 except that the disazoamino compound (F7") (44.9 parts) obtained above was used as $Ag_1$-N=N-

Bg-N=N-Cg-$NH_2$. The maximum absorption wavelength of the compound in an aqueous solution was 614 nm.

[Example 18]

<1>

The monoazo amino compound (37.4 parts) represented by formula (F8') was obtained in the same manner as in Example 7, Step 1 except that 2,5-dimethoxyaniline (15.3 parts) was used as Bg-$NH_2$.

[formula 209]

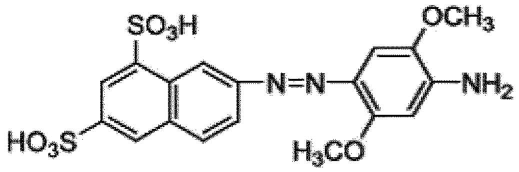

(F8')

<2>

The disazoamino compound (44.9 parts) represented by formula (F8") was obtained in the same manner as in Example 1, Step 2 except that monoazo amino compound (F8') (37.4 parts) obtained above was used as $Ag_1$-N=N-Bg-$NH_2$.

[formula 210]

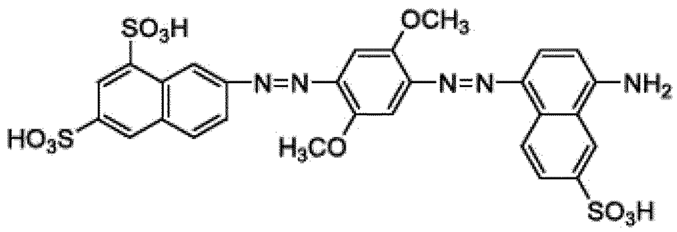

(F8")

<3>

The trisazo compound (54.2 parts) represented by formula (1-F8) was obtained in the same manner as in Example 1, Step 3 except that the disazoamino compound (F8") (44.9 parts) obtained above was used as $Ag_1$-N=N-Bg-N=N-Cg-$NH_2$. The maximum absorption wavelength of the compound in an aqueous solution was 610 nm.

[Example 19]

<2>

The disazoamino compound (44.9 parts) represented by formula (G7") was obtained in the same manner as in Example 17, Step 2 except that the monoazo amino compound (C12') (43.0 parts) obtained in Example 9, Step 1 was used as $Ag_1$-N=N-Bg-$NH_2$.

[formula 211]

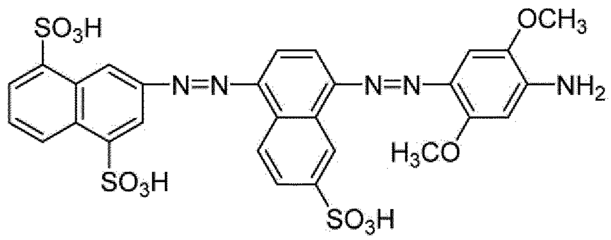

(G7")

<3>

The trisazo compound (54.2 parts) represented by formula (1-G7) was obtained in the same manner as in Example 1, Step 3 except that the disazoamino compound (G7") (44.9 parts) obtained above was used as $Ag_1$-N=N-Bg-$NH_2$. The maximum absorption wavelength of the compound in an aqueous solution was 614 nm.

[Example 20]

<1>

The monoazo amino compound (32.7 parts) represented by formula (G8') was obtained in the same manner as in Example 15, Step 1 except that 4-aminonaphthalenesulfonic acid (24.5 parts) was used as $Ag_1$-$NH_2$.

[formula 212]

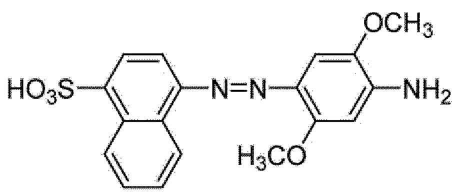

(G8')

<2>

The disazoamino compound (41.1 parts) represented by formula (G8") was obtained in the same manner as in Example 1, Step 2 except that the monoazo amino compound (G8') (32.7 parts) obtained above was used as $Ag_1$-N=N-Bg-$NH_2$.

[formula 213]

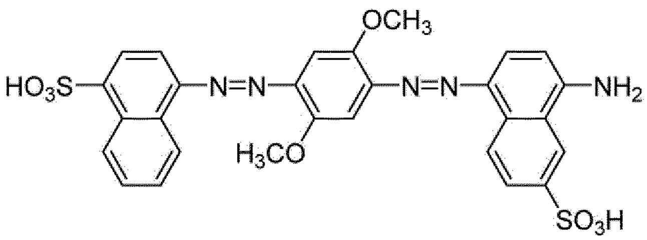

(G8")

<3>

The trisazo compound (51.1 parts) represented by formula (1-G8) was obtained in the same manner as in Example 1, Step 3 except that the disazoamino compound (G8") (41.1 parts) was used as $Ag_1$-N=N-Bg-$NH_2$. The maximum absorption wavelength of the compound in an aqueous solution was 610 nm.

[Example 21]

<2>

The monoazo amino compound (D5') (47.6 parts) obtained in Example 12, Step 1 as $Ag_1$-$NH_2$ was added in water (400 parts) and dissolved with the help of 25% sodium hydroxide. To this, a 40% aqueous sodium nitrite solution (13.8 parts) was added and then, 35% hydrochloric acid (32.0 parts) was added at 10 to 30°C. The mixture was stirred at 20 to 30°C for one hour to perform diazotization. To the mixture, 2,5-dimethoxyaniline (12.2 parts) dissolved in a 10% aqueous hydrochloric acid solution, was added. To this solution, a 15% aqueous sodium carbonate solution was added to adjust pH to be 2. The solution was further stirred to complete a coupling reaction. Thereafter, salting out was performed with sodium chloride followed by filtration to obtain the disazoamino compound (48.6 parts) represented by the following formula (H7").

[formula 214]

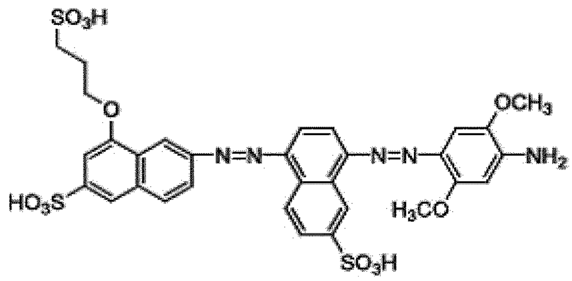

(H7")

<3>

The trisazo compound (54.2 parts) represented by formula (1-H7) was obtained in the same manner as in Example 1, Step 3 except that the disazoamino compound represented by disazoamino compound (H7") (48.6 parts) obtained above was used as $Ag_1$-N=N-Bg-$NH_2$. The maximum absorption wavelength of the compound in an aqueous solution was 619 nm.

[Example 22]

<1>

The monoazo amino compound (42.1 parts) represented by formula (H8') was obtained in the same manner as in Example 15, Step 1 except that 7-amino-4 (3-sulfopropoxy)naphthalene-2-sulfonic acid (36.1 parts) synthesized with reference to Patent Document 5 was used as $Ag_1$-$NH_2$.

[formula 215]

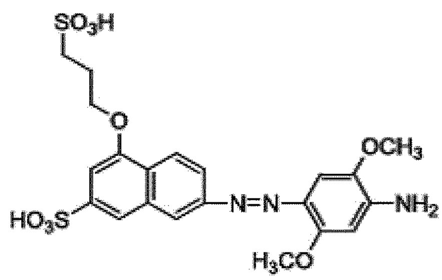

(H8')

<2>

The disazoamino compound (41.1 parts) represented by formula (H8") was obtained in the same manner as in Example 1, Step 2 except that the monoazo amino compound (H8') (42.1 parts) obtained above was used as $Ag_1$-N=N-Bg-$NH_2$.

[formula 216]

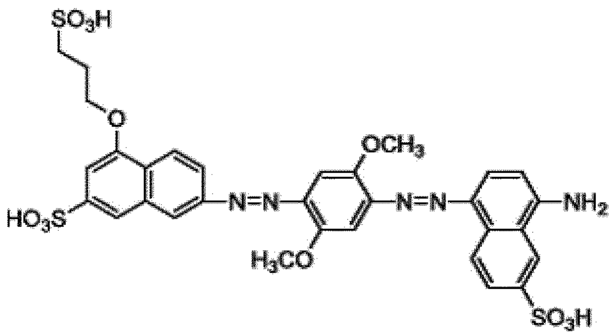

(H8")

<3>

The trisazo compound (54.2 parts) represented by formula (1-H8) was obtained in the same manner as in Example 1, Step 3 except that the disazoamino compound (H8") (41.1 parts) obtained above was used as $Ag_1$-N=N-Bg-N=N-Cg-$NH_2$. The maximum absorption wavelength of the compound in an aqueous solution was 615 nm.

[Production Example 1 of polarizing film]

In a stain solution, which is an aqueous solution of 45°C containing the compound of formula (1-A2) obtained in Example 1 in a concentration of 0.03% and sodium sulfate in a concentration of 0.1%, a polyvinyl alcohol having a thickness of 75 μm was soaked for 4 minutes. This film was stretched fivefold in a 3% aqueous boric acid solution at 50°C, rinsed and dried while keeping the tension to obtain a polarizing film.

[Production Examples 2 to 22 of polarizing film]

Polarizing films were obtained in the same manner as in Production Example 1 of polarizing film except that the azo compounds obtained in Examples 2 to 22 were used in place of the compound of formula (1-A2).

(Measurement of maximum absorption wavelength and polarization degree of polarizing film)

With respect to the polarizing film obtained in Production Example 1 of polarizing film, the maximum absorption wavelength and polarization degree were obtained through measurement. The maximum absorption wavelength and the polarization degree of the polarizing film were computationally obtained based on measurement of the parallel transmittance and orthogonal transmittance of incident polarized light by means of a spectrophotometer (U-4100, manufactured by Hitachi, Ltd.). The parallel transmittance (Ky) herein is the transmittance of a case where an absolute polarizer and the polarizing film are arranged such that the absorption axes thereof are mutually in parallel; whereas the orthogonal transmittance (Kz) is the transmittance of a case where an absolute polarizer and the polarizing film are arranged such that the absorption axes thereof are mutually in orthogonal. The parallel transmittance and orthogonal transmittance of light at each wavelength in 380 to 780 nm was measured at intervals of 1 nm. Using measurement values, the polarization degree of each of the wavelengths was calculated in accordance with the following expression. The highest polarization degree within the wavelength range of 380 to 780 nm and its maximum absorption wavelength (nm) were obtained. The results are shown in Table 1.

$$\text{Polarization degree (\%)} = [(Ky - Kz)/(Ky + Kz)] \times 100$$

[Table 1]

| Production Example No. | Formula No. of azo compound or a salt thereof | Maximum absorption wavelength(nm) | Polarization degree(%) |
|---|---|---|---|
| 1 | (1-A2) | 649 | 99.9 |
| 2 | (1-A10) | 657 | 99.9 |

(continued)

| Production Example No. | Formula No. of azo compound or a salt thereof | Maximum absorption wavelength(nm) | Polarization degree(%) |
|---|---|---|---|
| 3 | (1-A11) | 699 | 99.9 |
| 4 | (1-A12) | 700 | 99.9 |
| 5 | (1-A13) | 701 | 99.9 |
| 6 | (1-A14) | 638 | 99.9 |
| 7 | (1-B7) | 641 | 99.9 |
| 8 | (1-B8) | 652 | 99.9 |
| 9 | (1-C12) | 639 | 99.9 |
| 10 | (1-C13) | 649 | 99.9 |
| 11 | (1-C18) | 653 | 99.9 |
| 12 | (1-D5) | 649 | 99.9 |
| 13 | (1-D6) | 649 | 99.9 |
| 14 | (1-E9) | 640 | 99.9 |
| 15 | (1-E12) | 642 | 99.9 |
| 16 | (1-E15) | 638 | 99.9 |
| 17 | (1-F7) | 657 | 99.9 |
| 18 | (1-F8) | 644 | 99.9 |
| 19 | (1-G7) | 647 | 99.9 |
| 20 | (1-G8) | 646 | 99.9 |
| 21 | (1-H7) | 646 | 99.9 |
| 22 | (1-H8) | 645 | 99.9 |

As shown in Table 1, the polarizing films obtained in Production Examples 1 to 22 all had a high polarization degree.

(Determination of half width of absorption band)

Half widths of the absorption bands of the azo compounds obtained Examples 1 to 22 in an aqueous solution were obtained through measurement. The half widths were computationally obtained based on the measurement carried out by a spectrophotometer (U-4100, manufactured by Hitachi, Ltd.).

As Comparative Example 1, the half width of the absorption band of the compound (4) according to Example 3 of Patent Document 5 in an aqueous solution was obtained through measurement, in the same manner as above.

[Table 2]

| Example No. | Formula No. of azo compound or a salt thereof | Half width(nm) |
|---|---|---|
| 1 | (1-A2) | 135 |
| 2 | (1-A10) | 142 |
| 3 | (1-A11) | 140 |
| 4 | (1-A12) | 145 |
| 5 | (1-A13) | 141 |
| 6 | (1-A14) | 148 |
| 7 | (1-B7) | 135 |

(continued)

| Example No. | Formula No. of azo compound or a salt thereof | Half width(nm) |
|---|---|---|
| 8 | (1-B8) | 137 |
| 9 | (1-C12) | 135 |
| 10 | (1-C13) | 138 |
| 11 | (1-C18) | 140 |
| 12 | (1-D5) | 135 |
| 13 | (1-D6) | 167 |
| 14 | (1-E9) | 132 |
| 15 | (1-E12) | 133 |
| 16 | (1-E15) | 134 |
| 17 | (1-F7) | 136 |
| 18 | (1-F8) | 139 |
| 19 | (1-G7) | 138 |
| 20 | (1-G8) | 144 |
| 21 | (1-H7) | 136 |
| 22 | (1-H8) | 133 |
| Compound of Comparative Example 1 | | 116 |

As shown in Table 2, the half widths of absorption bands of the compounds obtained in Examples 1 to 22 ranged from 132 to 167 nm. Likewise, broad absorption bands were obtained. In contrast, the half width of absorption band of the compound obtained in Comparative Example 1 was 116 nm. The absorption band was narrow compared to those of the compounds of the present invention.

From these results, it was demonstrated that the compound of the present invention has a broad absorption band, which is an important feature to prepare a polarizing plate providing a neutral gray color phase, and thus is particularly useful as a pigment for producing a neutral-gray polarizing plate.

[Production Example of neutral-gray polarizing plate]

A polarizing film was produced in the same manner as in Production Example 1 of polarizing film except that, as a stain solution, aqueous solutions of 45°C containing the compound (1-A2), (1-B7), (1-C12), (1-D5), (1-E9), (1-F7), (1-G7) and (1-H7) (each content was 0.2%) obtained in Examples and further C. I. Direct Orange 39 (0.07%), C. I. Direct Red 81 (0.02%) and sodium sulfate (0.1%) were used. Regarding the polarizing film obtained herein, a polarizing plate having a maximum absorption wavelength of 600 nm was obtained. It had 42% of a single-plate transmittance (corrected based on luminosity factor) in 380 to 780 nm and 0.15% of an average light transmittance in the orthogonal arrangement, and had a high polarization degree. Furthermore, the transmittance in the visible light region both in the parallel arrangement and orthogonal arrangement was almost equal. A neutral gray color phase was provided.

To the both surfaces of the polarizing film, a triacetylcellulose film (TAC film; brand name: TD-80U, manufactured by Fuji Photo Film Co., Ltd.) was laminated with an adhesive made of an aqueous polyvinyl alcohol solution interposed between them. Then, on one of the TAC films, an AR support (ReaLook X4010, manufactured by NOF Corporation) was laminated with an adhesive interposed between them to obtain a neutral-gray polarizing plate with the AR support. The polarizing plate obtained herein provided a neutral gray color phase similarly to the polarizing film and had a high polarization degree.

Although data were not shown, the polarizing plate obtained herein exhibited durability for a long time even in high temperature and high humidity conditions and excellent light resistance to long-time light exposure.

Now, the present inventions in respect of combinations will be more specifically described by way of Examples, below; however, the present invention is not limited by these.

[Example M1]

A polyvinyl alcohol film (VF-PS, manufactured by Kuraray Co., Ltd.) having a saponification degree of 99% or more and an average polymerization degree of 2400 was soaked in warm water of 45°C for two minutes. In this manner, a swollen treatment was performed and a stretch ratio was set at 1.30 folds. The swollen film was soaked in a stain solution of 45°C containing water (1500 parts by mass), sodium tripolyphosphate (1.5 parts by mass), anhydrous sodium sulfate (1.5 parts by mass), the compound of formula (2-1) (0.116 parts by mass), the compound of formula (1-C6) (0.280 parts by mass) and the compound of (formula 3-1) (0.26 parts by mass) for 6 minutes and 00 seconds to allow the film to adsorb the azo compounds. The film obtained herein was soaked in an aqueous solution of 40°C containing 20 g/l boric acid (manufactured by Societa Chimica Larderello s.p.a.) for one minute. The soaked film was subjected to a stretching treatment in an aqueous solution of 50°C containing boric acid (30.0 g/l) for 5 minutes while stretched 5.0-fold. The film obtained herein was washed by soaking the film in water of 25°C for 20 seconds while keeping its tension. After washing, the film was dried at 70°C for 9 minutes to obtain a polarizing film. To the polarizing film, a triacetylcellulose film (ZRD-60, manufactured by Fuji Photo Film Co., Ltd.) treated with an alkali was laminated with a 4% polyvinyl alcohol (NH-26, manufactured by JAPAN VAM & POVAL CO., LTD.) dissolved in water used as an adhesive to obtain a polarizing plate. The polarizing plate obtained herein had the same optical performance, particularly single-plate transmittance, color phase, and polarization degree, etc., as that of the above polarizing film. This polarizing plate was used as the measurement sample of Example M1.

[Example M2]

A polarizing plate was produced in the same manner as in Example M1 except that a stain solution containing water (1500 parts by mass), sodium tripolyphosphate (1.5 parts by mass), anhydrous sodium sulfate (1.5 parts by mass), the compound of formula (2-1) (0.116 parts by mass), the compound of formula (1-A1) (0.290 parts by mass) and the compound of (formula 3-1) (0.26 parts by mass) was used in place of the stain solution used in Example M1.

[Example M3]

A polarizing plate was produced in the same manner as in Example M1 except that a stain solution containing water (1500 parts by mass), sodium tripolyphosphate (1.5 parts by mass), anhydrous sodium sulfate (1.5 parts by mass), the compound of formula (2-1) (0.116 parts by mass), the compound of formula (1-C12) (0.255 parts by mass) and the compound of formula (3-1) (0.26 parts by mass) was used in place of the stain solution used in Example M1.

[Example M4]

A polarizing plate was produced in the same manner as in Example M1 except that a stain solution containing water (1500 parts by mass), sodium tripolyphosphate (1.5 parts by mass), anhydrous sodium sulfate (1.5 parts by mass), the compound of formula (2-4) (0.09 parts by mass), the compound of formula (1-C12) (0.255 parts by mass) and the compound of formula (3-1) (0.26 parts by mass) was used in place of the stain solution used in Example M1.

[Example M5]

A polarizing plate was produced in the same manner as in Example M4 except that the time for adsorbing azo compounds was changed from 6 minutes to 4 minutes.

[Example M6]

A polarizing plate was produced in the same manner as in Example M4 except that the time for adsorbing azo compounds was changed from 6 minutes to 2 minutes.

[Example M7]

A polarizing plate was produced in the same manner as in Example M4 except that the time for adsorbing azo compounds was changed from 6 minutes to 5 minutes.

[Example M8]

A polarizing plate was produced in the same manner as in Example M4 except that the time for adsorbing azo

compounds was changed from 6 minutes to 1 minutes.

[Example M9]

A polarizing plate was produced in the same manner as in Example M1 except that a stain solution containing water (1500 parts by mass), sodium tripolyphosphate (1.5 parts by mass), anhydrous sodium sulfate (1.5 parts by mass), the compound of formula (2-4) (0.09 parts by mass), the compound of formula (1-C6) (0.28 parts by mass) and the compound of formula (3-1) (0.26 parts by mass) was used in place of the stain solution used in Example M1.

[Example M10]

A polarizing plate was produced in the same manner as in Example M1 except that a stain solution containing water (1500 parts by mass), sodium tripolyphosphate (1.5 parts by mass), anhydrous sodium sulfate (1.5 parts by mass), the compound of formula (2-4) (0.09 parts by mass), the compound of formula (1-C1) (0.35 parts by mass) and the compound of formula (3-1) (0.26 parts by mass) was used in place of the stain solution used in Example M1.

[Example M11]

A polarizing plate was produced in the same manner as in Example M1 except that 0.125 parts by mass of the compound (C. I. Direct Red 81) of formula (2-13) was contained in the stain solution, in place of 0.100 parts by mass of the compound of formula (2-1),.

[Example M12]

A polarizing plate was produced in the same manner as in Example M1 except that 0.130 parts by mass of the compound of formula (2-14) (IIIa-I, JP Patent 3661238) was used in place of 0.100 parts by mass of the compound of formula (2-1) in the stain solution.

[Example M13]

A polarizing plate was produced in the same manner as in Example M9 except that 0.21 parts by mass of the compound of formula (3-2) was used in place of 0.26 parts by mass of the compound of formula (3-1) in the stain solution.

[Example M14]

A polarizing plate was produced in the same manner as in Example M9 except that 0.29 parts by mass of C. I. Direct Yellow 28 was used in place of 0.26 parts by mass of the compound of formula (3-1) in the stain solution.

[Example M15]

A polarizing plate was produced in the same manner as in Example M1 except that 0.23 parts by mass of C. I. Direct Orange 72 was used in place of 0.26 parts by mass of the compound of formula (3-1) in the stain solution.

[Example M16]

A polarizing plate was produced in the same manner as in Example M1 except that a stain solution containing water (1500 parts by mass), sodium tripolyphosphate (1.5 parts by mass), anhydrous sodium sulfate (1.5 parts by mass), the compound of formula (2-1) (0.09 parts by mass), the compound of formula (1-A14) (0.255 parts by mass) and the compound of (formula 3-1) (0.27 parts by mass) was used in place of the stain solution used in Example M1.

[Comparative Example R1] to [Comparative Example R5]

Polarizing plates (Comparative Examples R1 to R5, respectively) were produced by adding the azo compounds so as to obtain almost the same transmittance as in Example M1 in the same manner as in Example M1 of the present application except that the composition of the aqueous solution (stain solution) containing azo compounds was the same as in Patent Document 8, Example 1; and staining time was changed to 12 minutes, 10 minutes, 8 minutes, 5 minutes and 30 seconds, and 4 minutes.

[Comparative Example R6]

A high-transmittance polarizing plate SHC-115 having neutral gray (color) and manufactured by Polatechno Co., Ltd. was obtained and used as a measurement sample.

[Comparative Example R7]

A polarizing plate SHC-128 having neutral gray (color) and high contrast, and manufactured by Polatechno Co., Ltd. was obtained and used as a measurement sample.

[Comparative Examples R8 to R13]

Iodine-based polarizing plates containing no azo compound were prepared in accordance with the process described in Comparative Example 1 of JP 2008-065222 A by setting the time for adsorbing iodine to be 5 minutes and 30 seconds in Comparative Example R8, 4 minutes and 45 seconds in Comparative Example R9, 4 minutes and 15 seconds in Comparative Example R10, 3 minutes and 30 seconds in Comparative Example R11, 4 minutes and 00 seconds in Comparative Example R12 and 5 minutes and 15 seconds in Comparative Example R13.

[Comparative Example R14]

An iodine-based polarizing plate, SKW-18245P, manufactured by Polatechno Co., Ltd. and exhibiting paper white (color) in the parallel arrangement was obtained and used as a measurement sample.

[Comparative Example R15]

A polarizing plate was produced in accordance with Example 1 of Patent Document 13 regarding a polarizing plate.

[Comparative Example R16]

A polarizing plate was produced in accordance with Example 3 of Patent Document 14 regarding a polarizing plate.

[Comparative Example R17]

A polarizing plate was produced in accordance with Example 1 of Patent Document 15 regarding a polarizing plate.

[Comparative Example R18]

A polarizing plate was produced in the same manner as in Example M1 except that 1.51 parts by mass of C. I. Direct Red 80, which is an azo compound having the same color as that of the compound of formula (2-1) and having a ureide skeleton was used in place of 0.116 parts by mass of the compound of formula (2-1); and the transmittance in the orthogonal arrangement is controlled to be almost equal and the color is controlled to exhibit black.

[Comparative Example R19]

A polarizing plate was produced in the same manner as in Example M1 except that 0.29 parts by mass of C. I. Direct Blue 6, which is an azo compound having a dianisidine skeleton having same-color dichroism, was used in place of 0.28 parts by mass of formula (1-C6) and the transmittance in the orthogonal arrangement is designed to be almost equal and the color is controlled to exhibit black.

[Evaluation]

The measurement samples obtained in Examples M1 to M16 and Comparative Examples R1 to R19 were evaluated as follows.

(a) Single-plate transmittance Ts, parallel transmittance Tp and orthogonal transmittance Tc

The single-plate transmittance Ts, parallel transmittance Tp and orthogonal transmittance Tc of each of the measurement samples were determined by a spectrophotometer ("U-4100" manufactured by Hitachi, Ltd.). Single-plate transmittance Ts is a transmittance of each wavelength measured through a single measurement sample. Parallel transmittance Tp is a spectral transmittance of each wavelength measured through two measurement samples, which are stacked such that the absorption axes thereof become in parallel. Orthogonal transmittance Tc is a spectral transmittance of light measured through two polarizing plates, which are stacked such that the absorption axes thereof become in orthogonal. Measurement was performed in the wavelength range of 400 to 700 nm.

Average values of parallel transmittance Tp and average values of orthogonal transmittance Tc in the range of 420 to 480 nm, 520 to 590 nm and 600 to 640 nm were obtained and shown in Table 3.

(b) Single-plate transmittance Ys, parallel transmittance Yp and orthogonal transmittance Yc

Single-plate transmittance Ys, parallel transmittance Yp and orthogonal transmittance Yc of each of the measurement samples were obtained. Single-plate transmittance Ys, parallel transmittance Yp and orthogonal transmittance Yc are transmittances of single-plate transmittance Ts, parallel transmittance Tp and orthogonal transmittance Tc obtained in the wavelength region of 400 to 700 nm at intervals of a predetermined wavelength dλ (5 nm, herein) and each corrected based on luminosity factor in accordance with JIS Z 8722:2009. More specifically, the corrected transmittance Ys, Yp and Yc were computationally obtained by assigning single-plate transmittance Ts, parallel transmittance Tp and orthogonal transmittance Tc respectively to the following formulas (I) to (III). Note that, in the following formulas (I) to (III), Pλ represents the spectral distribution of light from a standard light source (C light source); and yλ represents a 2-degree viewing field color-matching function. The results are shown in Table 3.
[Expression 1]

$$Ys\ (\%) = \frac{\int_{400}^{700} P\lambda \cdot y\lambda \cdot Ts \cdot d\lambda}{\int_{400}^{700} P\lambda \cdot y\lambda \cdot d\lambda} \quad \cdots \text{(I)}$$

$$Yp\ (\%) = \frac{\int_{400}^{700} P\lambda \cdot y\lambda \cdot Tp \cdot d\lambda}{\int_{400}^{700} P\lambda \cdot y\lambda \cdot d\lambda} \quad \cdots \text{(II)}$$

$$Yc\ (\%) = \frac{\int_{400}^{700} P\lambda \cdot y\lambda \cdot Tc \cdot d\lambda}{\int_{400}^{700} P\lambda \cdot y\lambda \cdot d\lambda} \quad \cdots \text{(III)}$$

(c) Contrast

Contrast was obtained by computationally obtaining the ratio (Yp/Yc) of the parallel transmittance to orthogonal transmittance obtained by using two of the measurement samples. The results are shown in Table 3.

[Table 3]

| | | Ys | Yp | Yc | CR | Tp | | | Tc | | |
|---|---|---|---|---|---|---|---|---|---|---|---|
| | | | | | | Ave 420-480 | Ave 520-590 | Ave 600-640 | Ave 420-480 | Ave 520-590 | Ave 600-640 |
| Example | M1 | 40.91 | 33.29 | 0.178 | 187 | 32.955 | 33.205 | 33.621 | 0.200 | 0.166 | 0.159 |
| | M2 | 41.11 | 33.56 | 0.241 | 139 | 33.129 | 33.479 | 33.219 | 0.229 | 0.227 | 0.225 |
| | M3 | 40.66 | 32.94 | 0.128 | 257 | 32.515 | 32.927 | 33.074 | 0.168 | 0.118 | 0.103 |
| | M4 | 40.95 | 33.39 | 0.149 | 224 | 32.700 | 33.306 | 33.891 | 0.206 | 0.137 | 0.136 |
| | M5 | 43.58 | 36.27 | 1.723 | 21 | 35.775 | 36.110 | 36.324 | 1.863 | 1.600 | 1.770 |
| | M6 | 46.71 | 38.19 | 5.453 | 7 | 37.710 | 38.122 | 38.612 | 5.301 | 5.453 | 5.359 |
| | M7 | 42.55 | 35.41 | 0.804 | 44 | 34.801 | 35.318 | 35.645 | 0.807 | 0.757 | 0.904 |
| | M8 | 54.15 | 41.44 | 17.212 | 2 | 41.072 | 41.380 | 41.461 | 16.742 | 16.967 | 16.391 |
| | M9 | 40.94 | 33.38 | 0.144 | 232 | 33.324 | 33.314 | 33.953 | 0.139 | 0.133 | 0.136 |
| | M10 | 41.08 | 33.44 | 0.312 | 107 | 32.861 | 33.373 | 33.392 | 0.412 | 0.300 | 0.312 |
| | M11 | 41.02 | 33.36 | 0.289 | 115 | 32.510 | 33.291 | 33.532 | 0.317 | 0.275 | 0.295 |
| | M12 | 41.21 | 33.66 | 0.304 | 111 | 32.634 | 33.456 | 33.958 | 0.301 | 0.292 | 0.325 |
| | M13 | 40.81 | 33.20 | 0.114 | 291 | 33.071 | 33.121 | 33.233 | 0.162 | 0.103 | 0.102 |
| | M14 | 41.22 | 33.53 | 0.451 | 74 | 32.980 | 33.451 | 33.799 | 0.541 | 0.446 | 0.421 |
| | M15 | 41.13 | 33.42 | 0.414 | 81 | 32.886 | 33.330 | 33.590 | 0.516 | 0.420 | 0.409 |
| | M16 | 40.81 | 33.20 | 0.114 | 291 | 33.071 | 33.121 | 33.233 | 0.162 | 0.103 | 0.102 |
| Comparative Example | R1 | 40.83 | 32.72 | 0.620 | 53 | 32.583 | 32.577 | 33.644 | 0.585 | 0.639 | 0.568 |
| | R2 | 41.81 | 33.70 | 1.261 | 27 | 33.694 | 33.511 | 34.686 | 1.281 | 1.273 | 1.217 |
| | R3 | 42.18 | 34.03 | 1.552 | 22 | 34.080 | 33.814 | 35.131 | 1.561 | 1.555 | 1.549 |
| | R4 | 43.54 | 35.11 | 2.798 | 13 | 35.058 | 34.960 | 35.937 | 2.722 | 2.838 | 2.726 |
| | R5 | 46.88 | 36.99 | 6.972 | 5 | 37.033 | 36.833 | 37.706 | 6.863 | 6.965 | 7.040 |
| | R6 | 43.15 | 35.79 | 1.450 | 25 | 33.009 | 36.005 | 36.250 | 1.831 | 1.533 | 0.834 |
| | R7 | 39.10 | 30.58 | 0.022 | 1413 | 26.061 | 30.891 | 31.670 | 0.027 | 0.022 | 0.011 |
| | R8 | 40.66 | 33.08 | 0.003 | 12433 | 27.371 | 33.272 | 34.687 | 0.001 | 0.001 | 0.002 |
| | R9 | 41.54 | 34.52 | 0.005 | 7094 | 29.399 | 34.633 | 35.978 | 0.008 | 0.003 | 0.003 |
| | R10 | 42.09 | 35.44 | 0.004 | 7890 | 29.533 | 35.617 | 37.067 | 0.007 | 0.003 | 0.003 |
| | R11 | 42.94 | 36.88 | 0.008 | 4610 | 31.768 | 37.144 | 38.283 | 0.011 | 0.003 | 0.010 |
| | R12 | 42.40 | 35.98 | 0.004 | 8612 | 31.618 | 36.693 | 37.315 | 0.019 | 0.004 | 0.001 |
| | R13 | 40.95 | 33.54 | 0.001 | 47441 | 28.730 | 33.682 | 34.969 | 0.003 | 0.001 | 0.000 |
| | R14 | 44.87 | 39.43 | 0.848 | 46 | 36.329 | 39.479 | 39.650 | 6.129 | 0.821 | 0.022 |
| | R15 | 40.28 | 31.02 | 1.432 | 22 | 26.160 | 30.802 | 31.254 | 1.699 | 1.209 | 1.182 |
| | R16 | 41.32 | 33.16 | 0.989 | 34 | 28.981 | 32.915 | 33.852 | 0.864 | 0.753 | 0.715 |
| | R17 | 41.31 | 33.40 | 0.726 | 46 | 29.084 | 33.181 | 35.252 | 0.606 | 0.589 | 0.515 |
| | R18 | 37.51 | 27.93 | 0.215 | 130 | 30.163 | 27.628 | 31.416 | 0.202 | 0.215 | 0.265 |
| | R19 | 35.93 | 25.51 | 0.313 | 81 | 28.208 | 24.311 | 22.299 | 0.373 | 0.313 | 0.331 |

(d) Absolute value of a difference in average transmittance between the two wavelength ranges

Table 4 shows an absolute value of a difference in average value of parallel transmittance Tp and orthogonal transmittance Tc of measuring samples between 520 to 590 nm and 420 to 480 nm, and shows an absolute value of a difference in average value of parallel transmittance Tp and orthogonal transmittance Tc between 520 to 590 nm and 600 to 640 nm.

[Table 4]

| | | Absolute value of a difference in Tp from average value of 520 to 590 nm in parallel arrangement of two plates | | Absolute value of a difference in Tc from average value of 520 to 590 nm in perpendicular arrangement of two plates | |
|---|---|---|---|---|---|
| | | Ave 420-480 | Ave 600-640 | Ave 420-480 | Ave 600-640 |
| Example | M1 | 0.25 | 0.42 | 0.0342 | 0.0070 |
| | M2 | 0.35 | 0.26 | 0.0018 | 0.0020 |
| | M3 | 0.41 | 0.15 | 0.0505 | 0.0149 |
| | M4 | 0.61 | 0.59 | 0.0683 | 0.0016 |
| | M5 | 0.33 | 0.21 | 0.2629 | 0.1705 |
| | M6 | 0.41 | 0.49 | 0.1518 | 0.0938 |
| | M7 | 0.52 | 0.33 | 0.0498 | 0.1475 |
| | M8 | 0.31 | 0.08 | 0.2245 | 0.5756 |
| | M9 | 0.01 | 0.64 | 0.0061 | 0.0030 |
| | M10 | 0.51 | 0.02 | 0.1122 | 0.0120 |
| | M11 | 0.78 | 0.24 | 0.0418 | 0.0200 |
| | M12 | 0.82 | 0.50 | 0.0089 | 0.0330 |
| | M13 | 0.05 | 0.11 | 0.0595 | 0.0004 |
| | M14 | 0.47 | 0.35 | 0.0954 | 0.0250 |
| | M15 | 0.44 | 0.26 | 0.0964 | 0.0110 |
| | M16 | 0.05 | 0.11 | 0.0595 | 0.0004 |
| Comparative Example | R1 | 0.01 | 1.07 | 0.0534 | 0.0705 |
| | R2 | 0.18 | 1.17 | 0.0080 | 0.0557 |
| | R3 | 0.27 | 1.32 | 0.0065 | 0.0061 |
| | R4 | 0.10 | 0.98 | 0.1158 | 0.1121 |
| | R5 | 0.20 | 0.87 | 0.1018 | 0.0747 |
| | R6 | 3.00 | 0.25 | 0.2982 | 0.6989 |
| | R7 | 4.83 | 0.78 | 0.0046 | 0.0113 |
| | R8 | 5.90 | 1.41 | 0.0001 | 0.0015 |
| | R9 | 5.23 | 1.35 | 0.0047 | 0.0002 |
| | R10 | 6.08 | 1.45 | 0.0043 | 0.0000 |
| | R11 | 5.38 | 1.14 | 0.0075 | 0.0071 |
| | R12 | 5.07 | 0.62 | 0.0148 | 0.0028 |
| | R13 | 4.95 | 1.29 | 0.0023 | 0.0003 |
| | R14 | 3.15 | 0.17 | 5.3086 | 0.7988 |
| | R15 | 4.64 | 0.45 | 0.4903 | 0.0267 |
| | R16 | 3.93 | 0.94 | 0.1111 | 0.0378 |
| | R17 | 4.10 | 2.07 | 0.0169 | 0.0738 |
| | R18 | 2.53 | 3.79 | 0.0128 | 0.0500 |
| | R19 | 3.90 | 2.01 | 0.0600 | 0.0182 |

As shown in Table 3 and Table 4, average parallel transmittance Tp of measurement samples of Examples M1 to M16 in the range of 520 to 590 nm was 25% or more. Absolute value of a difference in average parallel transmittance Tp between the range of 420 to 480 nm and the range of 520 to 590 nm was 1.0% or less; and absolute value of a difference in average parallel transmittance Tp between the range of 520 to 590 nm and the range of 590 to 640 nm was 1.0% or less. Both were extremely low values. Absolute value of a difference in average orthogonal transmittance Tc between the range of 420 to 480 nm and 520 to 590 nm was 0.2% or less; and absolute value of a difference in average parallel transmittance Tc of 520 to 590 nm and t 600 to 640 nm was 0.6% or less. Both were extremely low values. Accordingly, it was demonstrated that the average transmittances at individual wavelengths of the measurement samples obtained in Examples M1 to M16 are almost equal.

In contrast, in the measurement samples of Comparative Examples R6 to R19, as shown in Table 4, at least either one of the absolute value of a difference in average parallel transmittance Tp between aforementioned wavelength

ranges and the absolute value of a difference in average orthogonal transmittance Tc between aforementioned wavelength ranges was high.

When Examples M1 to M4 and M16 exhibiting a single-plate transmittance of about 41% were compared to Comparative Example R1, the contrast of Examples M1 to M4 and M16 were 187, 139, 257, 224 and 291, respectively; whereas, the contrast of Comparative Example R1 was 53. The contrast values of Examples M1 to M4 and M16 were about 2.6 to 5.5 times as large as that of Comparative Example R1. Likewise, measurement samples of Example M1 to M4 and M16 had higher contrast compared to the achromatic polarizing plate of Comparative Example R1 prepared in accordance with Patent Document 8.

(e) Polarization degree ρy

The polarization degree ρy of each of the measurement samples was obtained by assigning parallel transmittance Yp and orthogonal transmittance Yc to the following expression. The results are shown in Table 5.

$$\rho y = \{(Yp - Yc)/(Yp + Yc)\}^{1/2} \times 100$$

(f) Chromaticity a* value and b* value

Chromaticity a* value and b* value of each measurement sample were measured in accordance with JIS Z 8781-4:2013 at the time of measurement of single-plate transmittance Ts, parallel transmittance Tp and orthogonal transmittance Tc. In the measurement, both of transmitted color and reflected color were measured by applying light from the outside of a room and measured by the aforementioned spectrophotometer. As a light source, a C light source was used. The results are shown in Table 5. The reference symbols a*-s and b*-s, a*-p and b*-p, and a*-c and b*-c correspond to chromaticity a* value and b* value of single-plate transmittance Ts measurement time, parallel transmittance Tp measurement time and orthogonal transmittance Tc measurement time, respectively.

(g) Observation of color

In respect of each measurement sample, two same-type measurement samples were stacked above a white-light source in the parallel arrangement and orthogonal arrangement and the color was observed. Colors were visually checked by 10 persons. The color observed by the largest number of persons is shown in Table 5. Note that, in Table 5, the color in the parallel arrangement refers to the color observed in the case where two same-type samples are stacked such that the absorption axes thereof are mutually in parallel (in the white display time); whereas the color in the orthogonal arrangement refers to the color observed in the case where two same-type samples are stacked such that the absorption axes thereof are mutually in orthogonal (in the black display time). Basically, the polarization color in the parallel arrangement is "white (W)"; whereas the polarization color in the orthogonal arrangement is "black (B)"; however, in Examples, for example, if the color is yellowish white, the color is represented by "yellow (Y)"; and the color, if it is blue purple tinted black, is represented by "blue purple (PB)". Similarly, blue green is represented by BG, yellow green YG, red orange RG and red black RB.

[Table 5]

| | | Ys | ρ y | a*-s | b*-s | a*-p | b*-p | a*-c | b*-c | Color of polarizing plate visually observed | |
|---|---|---|---|---|---|---|---|---|---|---|---|
| | | | | | | | | | | Parallel arrangement | Perpendicular arrangement |
| Example | M1 | 40.91 | 99.47 | -0.28 | 0.18 | -0.23 | 0.32 | -0.23 | -0.44 | W | B |
| | M2 | 41.11 | 99.28 | -0.33 | 0.27 | -0.66 | 0.46 | 0.12 | -0.09 | W | B |
| | M3 | 40.66 | 99.61 | -0.35 | 0.10 | -0.60 | 0.38 | 0.56 | -0.89 | W | B |
| | M4 | 40.95 | 99.55 | -0.33 | 0.45 | -0.52 | 0.87 | 0.16 | -0.81 | W | B |
| | M5 | 43.58 | 95.36 | -0.23 | 0.50 | -0.32 | 0.69 | -0.09 | 0.72 | W | B |
| | M6 | 46.71 | 86.61 | -0.20 | 0.77 | -0.24 | 0.68 | -0.75 | 0.87 | W | B |
| | M7 | 42.55 | 97.75 | -0.22 | 0.49 | -0.32 | 0.76 | 0.26 | 0.56 | W | B |
| | M8 | 54.15 | 64.27 | -0.81 | 0.40 | -0.55 | 0.46 | -0.91 | 0.87 | W | B |
| | M9 | 40.94 | 99.57 | -0.41 | -0.12 | -0.62 | -0.31 | 0.78 | 0.19 | W | B |
| | M10 | 41.08 | 99.07 | -0.51 | -0.22 | -0.73 | 0.53 | 0.92 | -0.91 | W | B |
| | M11 | 41.02 | 99.14 | 0.62 | 0.77 | -0.12 | 1.48 | 1.22 | -0.51 | W | B |
| | M12 | 41.21 | 99.10 | 0.75 | 0.89 | 0.12 | 1.56 | 1.61 | -0.21 | W | B |
| | M13 | 40.81 | 99.66 | -0.01 | -0.12 | -0.01 | 0.21 | 0.10 | -0.61 | W | B |
| | M14 | 41.22 | 98.66 | -0.46 | -0.32 | -0.86 | 1.08 | -0.71 | -1.92 | W | B |
| | M15 | 41.13 | 98.77 | -0.32 | -0.52 | -0.68 | 1.22 | -0.43 | -1.83 | W | B |
| | M16 | 40.81 | 99.66 | -0.01 | -0.12 | -0.01 | 0.21 | 0.10 | -0.61 | W | B |
| Comparative Example | R1 | 40.83 | 98.15 | 0.38 | 0.20 | 0.91 | 0.27 | -0.83 | 0.60 | W | B |
| | R2 | 41.81 | 96.36 | 0.44 | 0.06 | 0.92 | 0.07 | -0.49 | 0.12 | W | B |
| | R3 | 42.18 | 95.57 | 0.49 | 0.03 | 0.91 | 0.00 | -0.37 | 0.02 | W | B |
| | R4 | 43.54 | 92.35 | 0.28 | 0.16 | 0.82 | 0.14 | -0.71 | 0.70 | W | B |
| | R5 | 46.88 | 82.66 | 0.13 | 0.11 | 0.63 | 0.00 | -0.63 | 0.52 | W | B |
| | R6 | 43.13 | 96.03 | -0.47 | 1.63 | -0.47 | 3.63 | -2.59 | -3.84 | Y | BG |
| | R7 | 39.09 | 99.93 | -0.42 | 3.69 | -0.56 | 6.69 | -0.03 | -0.08 | Y | B |
| | R8 | 40.66 | 99.99 | -1.73 | 4.26 | -2.91 | 7.71 | 0.01 | -0.01 | YG | B |
| | R9 | 41.54 | 99.99 | -1.43 | 4.18 | -2.53 | 7.67 | 0.01 | -0.05 | YG | B |
| | R10 | 42.09 | 99.99 | -1.37 | 4.15 | -2.36 | 7.62 | 0.02 | -0.07 | YG | B |
| | R11 | 42.94 | 99.99 | -1.13 | 3.44 | -1.99 | 6.38 | 0.05 | -0.10 | YG | B |
| | R12 | 42.40 | 99.99 | -1.37 | 3.33 | -2.36 | 6.17 | 0.04 | -0.20 | YG | B |
| | R13 | 40.95 | 100.00 | -0.97 | 3.56 | -1.57 | 6.52 | 0.01 | -0.04 | YG | B |
| | R14 | 44.86 | 97.87 | 0.32 | -2.79 | -1.00 | 0.96 | 19.56 | -38.73 | W | PB |
| | R15 | 40.28 | 95.49 | -0.45 | 2.13 | -0.48 | 6.88 | -0.69 | 0.63 | Y | B |
| | R16 | 41.32 | 97.06 | -0.49 | 4.65 | -0.21 | 7.28 | -0.55 | 0.15 | Y | B |
| | R17 | 41.31 | 97.85 | -0.81 | 8.36 | -1.20 | 11.26 | -0.36 | 0.95 | Y | B |
| | R18 | 37.51 | 99.23 | 2.31 | 1.94 | 5.14 | 3.91 | 1.92 | 0.14 | RO | RB |
| | R19 | 35.93 | 98.78 | -1.96 | -3.15 | -2.14 | -7.51 | 1.12 | -0.84 | BG | B |

As is shown in Table 5, the measurement samples of Examples M1 to M16 had a single-plate transmittance of 35% or more. The measurement samples of Examples M1 to M16 had a high transmittance and in addition, they had a high contrast at a high polarization degree than that of Patent Document 8. From this, it was understood that white/black contrast is more distinctive and black and white can be more sufficiently clearly exhibited. Furthermore, in the measurement samples of Examples M1 to M16, a*-s, b*-s and a*-p values (absolute values) were all 1.0 or less and b*-p, a*-c and b*-c values (absolute values) were all 2.0 or less. These values were extremely low. When the measurement samples of Examples M1 to M16 were visually observed, they exhibited white, like high-quality paper, in the parallel arrangement; whereas they exhibited high-quality and distinctive black in the orthogonal arrangement. In contrast, in Comparative Examples R6 to R19, at least either one of the values of a*-s, b*-s, a*-p, b*-p, a*-c and b*-c was high and the color visually observed in the parallel arrangement or orthogonal arrangement was not achromatic.

As described in the above, it was demonstrated that the polarizing film of the present invention ensures a high single-plate transmittance and a parallel transmittance and, in addition, can exhibit white, like high-quality paper, in the parallel arrangement and has a color phase of a neutral color (neutral gray) by itself. Furthermore, it is understood that the polarizing film of the present invention maintains a high transmittance and exhibits achromatism in the parallel arrangement, and, in addition, has high polarization degree. Moreover, it is understood that the polarizing film of the present invention can provide a polarizing film exhibiting high-quality achromatic black in the orthogonal arrangement.

(h) Durability test

The measurement samples of Examples M1 to M16 and Comparative Examples R8 to R14 were placed in an environment of 85°C, and a relative humidity of 85%RH for 240 hours. As a result, the measurement samples of Examples M1 to M16 exhibited no change in transmittance and color phase. In contrast, in Comparative Examples R8 to R14, polarization degree decreased by 10% or more and b*-c value decreased to less than -10. In addition, the color visually observed changed to blue, in particular, when two measurement samples were stacked in the orthogonal arrangement, black was extremely tinted with blue.

From this, it was understood that a liquid crystal display device using the polarizing film or a polarizing plate according to the present invention is highly reliable, exhibits high contrast for a long time and has high color reproducibility.

## Claims

1. An azo compound represented by formula (1) or a salt thereof:

[formula 1]

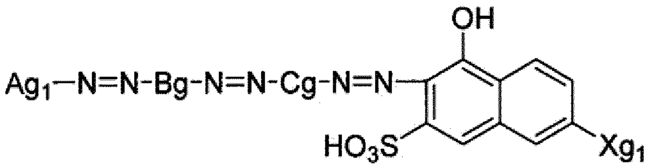

(1)

wherein $Ag_1$ represents a phenyl group which may have a substituent or a naphthyl group having a substituent; Bg and Cg are each independently represented by formula (BC-N) or formula (BC-P), both or either one represents formula (BC-N); and $Xg_1$ represents an amino group which may have a substituent, a phenylamino group which may have a substituent, a benzoylamino group which may have a substituent, a naphthotriazole which may have a substituent or a phenylazo group which may have a substituent;

[formula 2]

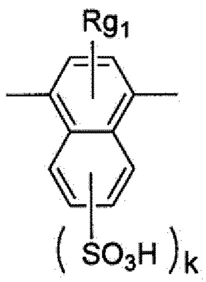

(BC-N)

wherein $Rg_1$ represents a hydrogen atom, a $C_{1-5}$ alkyl group, a $C_{1-5}$ alkoxy group or a $C_{1-5}$ alkoxy group having a sulfo group; and k represents an integer of 0 to 2;

[formula 3]

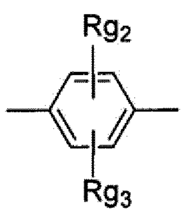

(BC-P)

wherein $Rg_2$ and $Rg_3$ each independently represent a hydrogen atom, a $C_{1-5}$ alkyl group, a $C_{1-5}$ alkoxy group or a $C_{1-5}$ alkoxy group having a sulfo group.

2. The azo compound or a salt thereof according to Claim 1, wherein Cg is represented by formula (BC-N).

3. The azo compound or a salt thereof according to Claim 1, wherein one of Bg and Cg is represented by formula (BC-N) and the other is represented by formula (BC-P).

4. The azo compound or a salt thereof according to Claim 1, wherein Bg and Cg are each independently represented

by formula (BC-N).

**5.** The azo compound or a salt thereof according to any one of Claims 1 to 4, wherein k is 1 or 2.

**6.** The azo compound or a salt thereof according to Claim 5, wherein k is 1.

**7.** The azo compound or a salt thereof according to any one of Claims 1 to 6, wherein $Rg_1$ to $Rg_3$ each independently represent (when Bg and Cg are both represented by formula (BC-N), $Rg_1$ each independently represent) a hydrogen atom, a $C_{1-5}$ alkyl group or a $C_{1-5}$ alkoxy group.

**8.** The azo compound or a salt thereof according to any one of Claims 1 to 7, wherein $Xg_1$ is a phenylamino group represented by formula (X-PAM):

[formula 4]

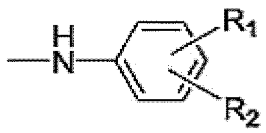

(X-PAM)

wherein $R_1$ and $R_2$ each independently represent a hydrogen atom, a methyl group, a methoxy group, a sulfo group, an amino group or a substituted amino group.

**9.** The azo compound or a salt thereof according to any one of Claims 1 to 7, wherein $Xg_1$ is a benzoylamino group represented by formula (X-B):

[formula 5]

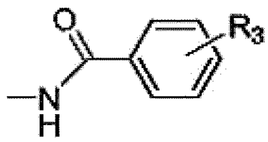

(X-B)

wherein $R_3$ represents a hydrogen atom, a hydroxy group, an amino group or a substituted amino group.

**10.** The azo compound or a salt thereof according to any one of Claims 1 to 7, wherein $Xg_1$ is a naphthotriazole group represented by formula (X-N):

[formula 6]

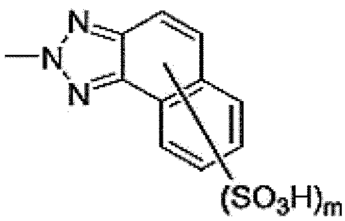

(X-N)

wherein m represents 1 or 2.

**11.** The azo compound or a salt thereof according to any one of Claims 1 to 7, wherein $Xg_1$ is a phenylazo group represented by formula (X-PAZ):

[formula 7]

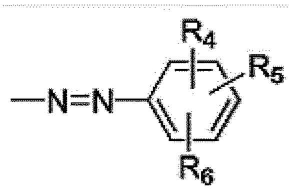

(X-PAZ)

wherein $R_4$ to $R_6$ each independently represent a hydrogen atom, a hydroxy group, a $C_{1-5}$ alkyl group, a $C_{1-5}$ alkoxy group, a carboxy group, an amino group or a substituted amino group.

**12.** The azo compound or a salt thereof according to any one of Claims 1 to 11, wherein $Ag_1$ is represented by formula (A-P):

[formula 8]

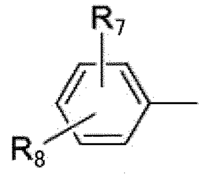

(A-P)

wherein $R_7$ and $R_8$ each independently represent a hydrogen atom, a sulfo group, a carboxy group, a $C_{1-5}$ alkyl group, a $C_{1-5}$ alkoxy group, an amino group, a substituted amino group or a $C_{1-5}$ alkoxy group having a sulfo group.

**13.** The azo compound or a salt thereof according to Claim 12, wherein one of $R_7$ and $R_8$ is a sulfo group, a $C_{1-5}$ alkoxy group having a sulfo group, or a carboxy group, and the other represents a hydrogen atom, a sulfo group, a carboxy group, a methyl group, a methoxy group or an alkoxy group having a sulfo group.

**14.** The azo compound or a salt thereof according to Claim 12, wherein Bg and Cg are each independently represented by formula (BC-N) where k = 1; and satisfy the following i) or ii):

i) in (A-P), one of $R_7$ and $R_8$ represents a hydrogen atom and the other represents a hydrogen atom, a carboxy group, a $C_{1-5}$ alkyl group, a $C_{1-5}$ alkoxy group, an amino group, a substituted amino group or a $C_{1-5}$ alkoxy group having a sulfo group;
ii) in (A-P), $R_7$ and $R_8$ each independently represent a sulfo group, a carboxy group, a $C_{1-5}$ alkyl group, a $C_{1-5}$ alkoxy group, an amino group, a substituted amino group or a $C_{1-5}$ alkoxy group having a sulfo group.

**15.** The azo compound or a salt thereof according to any one of Claims 1 to 11, wherein $Ag_1$ is represented by formula (A-N):

[formula 9]

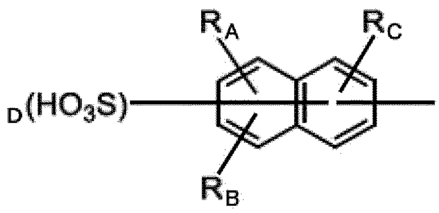

(A-N)

wherein $R_A$, $R_B$ and $R_C$ each independently represent a hydrogen atom, a hydroxy group, a sulfo group or a $C_{1-5}$ alkoxy group having a sulfo group; and D represents 0, 1 or 2.

**16.** The azo compound or a salt thereof according to any one of Claims 1 to 11, wherein $Ag_1$ is represented by formula

(A-N1):

[formula 10]

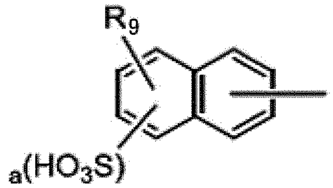

(A-N1)

wherein $R_9$ represents a hydrogen atom or a hydroxy group; and a represents 1 or 2.

**17.** The azo compound or a salt thereof according to any one of Claims 1 to 11, wherein $Ag_1$ is represented by formula (A-N2):

[formula 11]

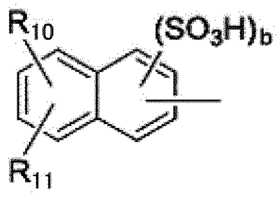

(A-N2)

wherein $R_{10}$ and $R_{11}$ each independently represent a hydrogen atom, a hydroxy group or a sulfo group; and b represents 1 or 2.

**18.** The azo compound or a salt thereof according to Claim 16 or 17, wherein $R_9$ to $R_{11}$ are hydrogen atoms.

**19.** The azo compound or a salt thereof according to any one of Claims 1 to 11, wherein $Ag_1$ is represented by formula (A-N3):

[formula 12]

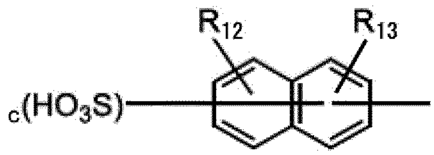

(A-N3)

wherein c represents 0, 1 or 2; $R_{12}$ and $R_{13}$ are each independently a hydrogen atom and the other is a sulfoalkoxy group: $HO_3S-(CH_2)_d-O-$; and d represents 3 or 4.

**20.** The azo compound or a salt thereof according to Claim 19, wherein $R_{12}$ is a sulfoalkoxy group: $HO_3S-(CH_2)_d-O-$.

**21.** The azo compound or a salt thereof according to Claim 19 or 20, wherein d is 3.

**22.** A polarizing film comprising the azo compound or a salt thereof according to any one of claims 1 to 21 and a polarizing-film base material.

**23.** The polarizing film according to Claim 22, comprising at least one type of organic dye other than the azo compound or a salt thereof according to any one of Claims 1 to 21.

**24.** The polarizing film according to Claim 22 or 23, comprising at least two types of azo compounds or salts thereof

according to any one of Claims 1 to 21.

**25.** The polarizing film according to any one of Claims 22 to 24, further comprising an azo compound represented by formula (2) or a salt thereof:

[formula 13]

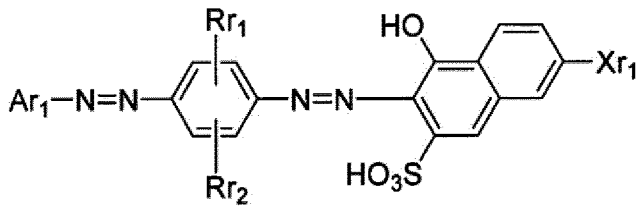

(2)

wherein $Ar_1$ represents a phenyl group or a naphthyl group having a substituent; $Rr_1$ and $Rr_2$ each independently represent a hydrogen atom, a $C_{1-5}$ alkyl group, a $C_{1-5}$ alkoxy group or a $C_{1-5}$ alkoxy group having a sulfo group; $Xr_1$ represents an amino group which may have a substituent, a phenylamino group which may have a substituent, a phenylazo group which may have a substituent or a benzoylamino group which may have a substituent.

**26.** The polarizing film according to any one of Claims 22 to 25, comprising an azo compound represented by formula (3) or a salt thereof:

[formula 14]

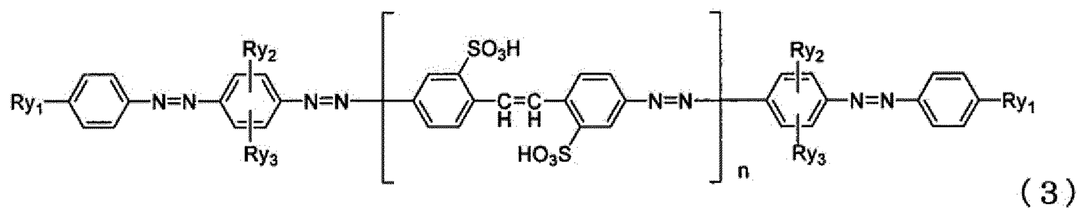

(3)

wherein $Ry_1$ represents a sulfo group, a carboxy group, a lower alkyl group, a lower alkoxy group or a hydroxy group; $Ry_2$ and $Ry_3$ each independently represent a hydrogen atom, a sulfo group, a $C_{1-5}$ alkyl group, a $C_{1-5}$ alkoxy group or a $C_{1-5}$ alkoxy group having a sulfo group; and n represents an integer of 1 to 3.

**27.** The polarizing film according to any one of Claims 22 to 26, wherein an absolute value of a difference between an average transmittance of 420 nm to 480 nm and an average transmittance of 520 nm to 590 nm, which are obtained through measurement in the state where two of the polarizing films are stacked such that absorption axes thereof are mutually in parallel, is 2.5% or less; and an absolute value of a difference between an average transmittance of 520 nm to 590 nm and an average transmittance of 600 nm to 640 nm is 2.0% or less.

**28.** The polarizing film according to any one of Claims 22 to 27, wherein absolute values of a* value and b* value obtained by measuring transmittance of natural light in accordance with JIS Z 8781-4:2013 are
both 1.0 or less in the case of the polarizing film by itself, and
both 2.0 or less in the state where two of the polarizing films are stacked such that absorption axes thereof are mutually in parallel.

**29.** The polarizing film according to any one of Claims 22 to 28, wherein
the polarizing film has a single-plate transmittance of 35% to 65%; and
an average transmittance of 520 nm to 590 nm obtained in the state where two of the polarizing films are stacked such that absorption axes thereof are mutually in parallel is 25% to 50%.

**30.** The polarizing film according to any one of Claims 22 to 29, wherein, with respect to transmittance obtained in the state where two of the polarizing films are stacked such that absorption axes thereof are mutually in orthogonal, an absolute value of a difference between an average transmittance of 420 nm to 480 nm and an average transmittance of 520 nm to 590 nm is 0.3% or less; and an absolute value of a difference between an average transmittance of

520 nm to 590 nm and an average transmittance of 600 nm to 640 nm is 0.6% or less.

**31.** The polarizing film according to any one of Claims 22 to 30, wherein absolute values of a* value and b* value, which are obtained by measuring transmittance of natural light in accordance with JIS Z 8781-4:2013 in the state where two of the polarizing films are stacked such that absorption axes thereof are mutually in orthogonal, are 2.0 or less.

**32.** The polarizing film according to any one of Claims 22 to 31, wherein the polarizing-film base material is a film formed of a polyvinyl alcohol resin or a derivative thereof.

**33.** A polarizing plate obtained by bonding a transparent protective layer to one or both surfaces of the polarizing film according to any one of Claims 22 to 32.

**34.** A display device comprising the polarizing film according to any one of Claims 22 to 32 or the polarizing plate according to Claim 33.

**35.** An in-car display device or an outdoor display device comprising the polarizing film according to any one of Claims 22 to 32 or the polarizing plate according to Claim 33.

**36.** A product comprising the polarizing film according to any one of Claims 22 to 32 or the polarizing plate according to Claim 33, wherein the product is a smart window, an organic electroluminescence (common name, OLED), a lens, a filter or a pair of glasses.

## INTERNATIONAL SEARCH REPORT

International application No.
PCT/JP2017/007127

A. CLASSIFICATION OF SUBJECT MATTER
*C09B31/057*(2006.01)i, *C09B29/01*(2006.01)i, *G02B5/30*(2006.01)i

According to International Patent Classification (IPC) or to both national classification and IPC

B. FIELDS SEARCHED

Minimum documentation searched (classification system followed by classification symbols)
C09B31/057, C09B29/01, G02B5/30

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 05-263005 A (Ciba-Geigy AG.), 12 October 1993 (12.10.1993), claims; examples & US 5320648 A1 claims; examples & EP 549529 A1 | 1,2,4-9,12, 13,15-17 |
| X | JP 01-161202 A (Nippon Kayaku Co., Ltd.), 23 June 1989 (23.06.1989), claims; example 1 (Family: none) | 1,2,4-8,12, 13,22,27-31, 34-36 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 27 April 2017 (27.04.17) | 16 May 2017 (16.05.17) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

**INTERNATIONAL SEARCH REPORT**

International application No. PCT/JP2017/007127

C (Continuation). DOCUMENTS CONSIDERED TO BE RELEVANT

| Category* | Citation of document, with indication, where appropriate, of the relevant passages | Relevant to claim No. |
|---|---|---|
| X | WO 2005/035667 A1 (Mitsubishi Chemical Corp.), 21 April 2005 (21.04.2005), claims; page 39, line 35 to page 40, line 4; examples; comparative examples & US 2006/0182902 A claims; paragraph [0194]; examples; comparative examples & EP 1679350 A1 | 1-8,12-18, 22,23,25-32, 34-36 |
| X | WO 2013/035751 A1 (Nippon Kayaku Co., Ltd., Polatechno Co., Ltd.), 14 March 2013 (14.03.2013), claims; paragraphs [0069], [0080]; examples & US 2014/0218797 A1 claims; paragraphs [0061], [0072]; examples & JP 13-35751 A1 & EP 2752694 A1 | 1,7,8,10,12, 13,15-23, 25-36 |
| X | JP 2014-167089 A (Nippon Kayaku Co., Ltd., Polatechno Co., Ltd.), 11 September 2014 (11.09.2014), claims; paragraph [0066]; examples & US 2011/0075076 A1 claims; examples & WO 2009/142193 A1 | 1,8,9-13, 15-23,25-36 |
| X | WO 01/06281 A1 (Nippon Kayaku Co., Ltd.), 25 January 2001 (25.01.2001), claim 1; page 17, lines 2 to 16; examples & US 2005/0003109 A1 claim 1; column 16, lines 21 to 36; examples & EP 1203969 A1 & JP 2001-27708 A & JP 2001-33627 A & JP 2001-56412 A | 1,7,8,9, 11-13,22-36 |
| X | WO 2006/057214 A1 (Nippon Kayaku Co., Ltd., Polatechno Co., Ltd.), 01 June 2006 (01.06.2006), claims; paragraph [0041]; examples & US 2008/0094549 A1 claims; paragraphs [0043] to [0044]; examples & EP 1816170 A1 | 1,7,8,12,13, 22-23,25-36 |
| X | JP 03-012606 A (Nippon Kayaku Co., Ltd.), 21 January 1991 (21.01.1991), claims; examples (Family: none) | 1,7,8,12,13, 15-18,22, 27-32,34-36 |

Form PCT/ISA/210 (continuation of second sheet) (January 2015)

**INTERNATIONAL SEARCH REPORT**

International application No.
PCT/JP2017/007127

C (Continuation). DOCUMENTS CONSIDERED TO BE RELEVANT

| Category* | Citation of document, with indication, where appropriate, of the relevant passages | Relevant to claim No. |
|---|---|---|
| X | WO 2005/075572 A1 (Nippon Kayaku Co., Ltd., Polatechno Co., Ltd.), 18 August 2005 (18.08.2005), claims; paragraphs [0002], [0027], [0033]; examples & US 2007/0166483 A1 claims; paragraphs [0002], [0038], [0047]; examples & EP 1712595 A1 | 1,9,12,13, 22-36 |
| X | JP 2013-047842 A (Nippon Kayaku Co., Ltd., Polatechno Co., Ltd.), 07 March 2013 (07.03.2013), claims; paragraphs [0053], [0055]; examples & US 2010/0257678 A1 claims; paragraphs [0030], [0039], [0042]; examples & WO 2007/148757 A1 & EP 2045296 A1 | 1,7,8,12,13, 22,23,25-36 |
| X | JP 08-073762 A (Mitsui Toatsu Chemicals, Inc.), 19 March 1996 (19.03.1996), claims; comparative example 3 (Family: none) | 1,7,8,12,13, 22,32 |
| X | JP 2004-051645 A (Sumitomo Chemical Co., Ltd.), 19 February 2004 (19.02.2004), claims; paragraphs [0050], [0095]; examples & US 2003/0098447 A1 claims; paragraphs [0040], [0084]; examples | 1,7,12,13, 22,23,25-32, 34-36 |
| A | JP 2009-080224 A (Nitto Denko Corp.), 16 April 2009 (16.04.2009), & US 2010/0065974 A1 & WO 2009/041203 A1 | 1-36 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2622748 B
- JP 2001033627 A
- JP 5366947 B
- JP 2003327858 A
- JP H312606 A
- JP 4281261 B
- JP 3357803 B
- WO 2014162635 A1
- JP 2003215338 A
- JP H9302250 A
- JP 3881175 B
- JP H261988 B
- JP H11218611 A
- JP 4162334 B
- JP 4360100 B
- WO 2007138980 A
- JP 3661238 B
- JP 2008065222 A


### Non-patent literature cited in the description


- **YUTAKA HOSODA.** *Senryo Kagaku (Dye Chemistry),* 1957, 621
- **MASAHIRO IRIE.** Kinosei Shikiso no Oyo (Functional Dye Application). CMC Publishing Co., Ltd, 98-100